(19)

**Europäisches Patentamt**
**European Patent Office**
**Office européen des brevets**

(11) **EP 4 626 089 A1**

(12) **EUROPEAN PATENT APPLICATION**
published in accordance with Art. 153(4) EPC

(43) Date of publication:
01.10.2025 Bulletin 2025/40

(21) Application number: 23912990.1

(22) Date of filing: 28.12.2023

(51) International Patent Classification (IPC):
*H04W 52/14* (2009.01)       *H04W 52/32* (2009.01)
*H04W 72/23* (2023.01)       *H04W 72/21* (2023.01)
*H04W 52/24* (2009.01)       *H04L 5/00* (2006.01)
*H04B 7/024* (2017.01)       *H04W 52/42* (2009.01)
*H04W 52/54* (2009.01)

(52) Cooperative Patent Classification (CPC):
H04B 7/024; H04L 5/00; H04W 52/14; H04W 52/24;
H04W 52/32; H04W 52/42; H04W 52/54;
H04W 72/21; H04W 72/23

(86) International application number:
PCT/KR2023/021890

(87) International publication number:
WO 2024/144316 (04.07.2024 Gazette 2024/27)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.12.2022  KR 20220189421
02.06.2023  KR 20230071800

(71) Applicant: Samsung Electronics Co., Ltd.
Suwon-si, Gyeonggi-do 16677 (KR)

(72) Inventors:
• **JANG, Youngrok**
  **Suwon-si, Gyeonggi-do 16677 (KR)**
• **ABEBE, Ameha Tsegaye**
  **Suwon-si, Gyeonggi-do 16677 (KR)**
• **LIM, Seongmok**
  **Suwon-si, Gyeonggi-do 16677 (KR)**
• **JI, Hyoungju**
  **Suwon-si, Gyeonggi-do 16677 (KR)**

(74) Representative: **HGF**
  **HGF Limited**
  **1 City Walk**
  **Leeds LS11 9DX (GB)**

(54) **METHOD AND APPARATUS FOR CONTROLLING POWER OF UPLINK REFERENCE SIGNAL IN NETWORK COOPERATIVE COMMUNICATION**

(57) The present disclosure relates to a 5G or 6G communication system for supporting higher data transmission rates. The present disclosure relates to the operation of a terminal and a base station in a wireless communication system and, specifically, relates to a method for transmitting and receiving an uplink reference signal in a wireless communication system, and an apparatus capable of performing same. The present disclosure provides an apparatus and a method capable of providing services effectively in a mobile communication system.

FIG. 16

EP 4 626 089 A1

**Description**

[Technical Field]

The disclosure relates to operations of a UE and a base station in a wireless communication system. Specifically, the present disclosure relates to a method for controlling power of an uplink reference signal in network cooperative communication and a device capable of performing the same.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

Embodiments set forth herein are to provide an apparatus and a method capable of effectively providing services in a mobile communication system.

[Technical Solution]

The disclosure to achieve the tasks described above relates to a method performed by a terminal in a wireless communication system, the method including: receiving sounding reference signal (SRS) configuration information supporting eight antenna ports from a base station; determining SRS transmission power based on the configuration information; and transmitting SRSs by using the eight antenna ports, based on the SRS transmission power, wherein, when the SRSs of the eight antenna ports are transmitted in two consecutive symbols, the SRS transmission power is determined by dividing a value, which is obtained by converting a calculated transmission power into a linear scale, by the number of antenna ports configured for each symbol.

In addition, a method performed by a base station in a wireless communication system includes: transmitting sounding reference signal (SRS) configuration information supporting eight antenna ports to a terminal; and receiving SRSs by using the eight antenna ports from the terminal, wherein, when the SRSs of the eight antenna ports are transmitted in two consecutive symbols, SRS transmission power is determined by dividing a value, which is obtained by converting calculated transmission power into a linear scale, by the number of antenna ports configured for each symbol.

In addition, a terminal of a wireless communication system includes a transceiver, and a controller configured to: receive sounding reference signal (SRS) configuration information supporting eight antenna ports from a base station; determine SRS transmission power based on the configuration information; and transmit SRSs by using the eight antenna ports, based on the SRS transmission power, wherein, when the SRSs of the eight antenna ports are transmitted in two consecutive symbols, the SRS transmission power is determined by dividing a value, which is obtained by converting a calculated transmission power into a linear scale, by the number of antenna ports configured for each symbol.

In addition, a base station of a wireless communication system includes a transceiver, and a controller configured to: transmit sounding reference signal (SRS) configuration information supporting eight antenna ports to a terminal; and receive SRSs by using the eight antenna ports from the terminal, wherein, when the SRSs of the eight antenna ports are transmitted in two consecutive symbols, SRS transmission power is determined by dividing a value, which is obtained by converting calculated transmission power into a linear scale, by the number of antenna ports configured for each symbol.

[Advantageous Effects]

Embodiments set forth herein provide an apparatus and a method capable of effectively providing services in a mobile communication system.

[Description of Drawings]

FIG. 1 illustrates an example of a basic structure of a time-frequency domain in a wireless communication system.
FIG. 2 illustrates an example of a structure of a frame, a subframe, and a slot in a wireless system.
FIG. 3 illustrates an example of a bandwidth part configuration in a wireless communication system.
FIG. 4 illustrates an example of a control resource set configuration of a downlink control channel in a wireless communication system; according to an embodiment of the disclosure.
FIG. 5 illustrates a structure of a downlink control channel in a wireless communication system according to an embodiment of the disclosure.
FIG. 6 illustrates an example of base station beam allocation according to a TCI state configuration in a wireless communication system.
FIG. 7 illustrates an example of frequency domain resource allocation with regard to a PDSCH in a wireless communication system.
FIG. 8 illustrates an example of time domain resource allocation with regard to a PDSCH in a wireless communication system.

FIG. 9 illustrates an example of time domain resource allocation according to a subcarrier spacing with regard to a data channel and a control channel in a wireless communication system.

FIG. 10 is a diagram illustrating an example of a structure in which an SRS is allocated for each subband;

FIG. 11 is a diagram illustrating an example of a UE operation for SRS transmission according to an embodiment of the disclosure.

FIG. 12 is a diagram illustrating an example of a base station operation for SRS reception according to an embodiment of the disclosure.

FIG. 13 is a diagram illustrating an example of an SRS reception power for each TRP according to a position of a UE in network cooperative communication according to an embodiment of the disclosure.

FIG. 14 is a diagram illustrating an example of an SRS reception power for each TRP when determining SRS transmission power in consideration of multiple power control parameters in network cooperative communication according to an embodiment of the disclosure.

FIG. 15 is a diagram illustrating another example of an SRS reception power for each TRP when determining SRS transmission power in consideration of multiple power control parameters in network cooperative communication according to an embodiment of the disclosure.

FIG. 16 is a diagram illustrating an example of a UE operation when determining an SRS transmission power in consideration of multiple power control parameters in network cooperative communication according to an embodiment of the disclosure.

FIG. 17 is a diagram illustrating an example of a base station operation when determining an SRS transmission power in consideration of multiple power control parameters in network cooperative communication according to an embodiment of the disclosure.

FIG. 18 illustrates a structure of a UE in a wireless communication system according to an embodiment of the disclosure.

FIG. 19 illustrates a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following, technology A1/A2/A3 .../An may be understood as any combination of at least one of A1 to An.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

Hereinafter, a frame structure of a 5G system will be described in more detail with reference to the accompanying drawings.

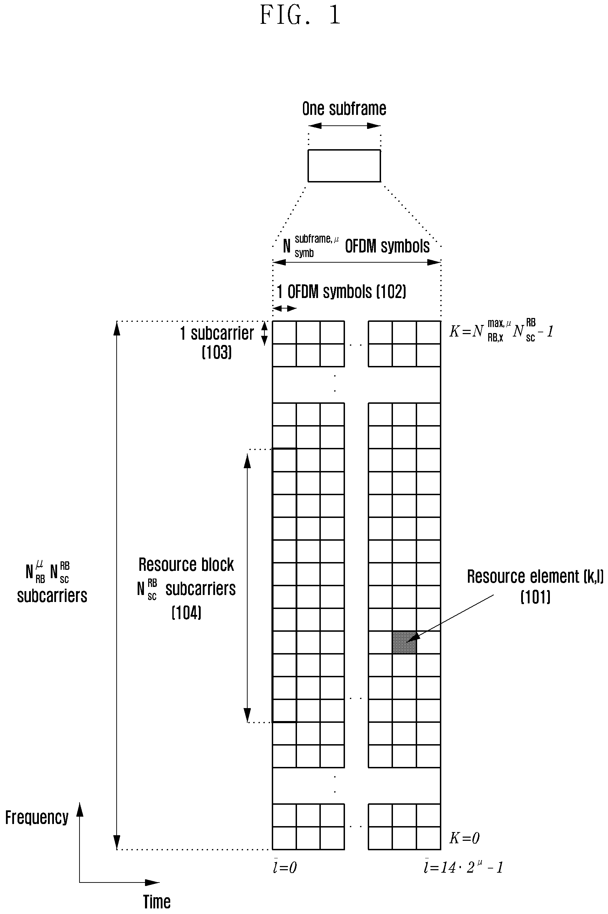

FIG. 1 illustrates a basic structure of a time-frequency domain which is a radio resource domain used to transmit data or control channels.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

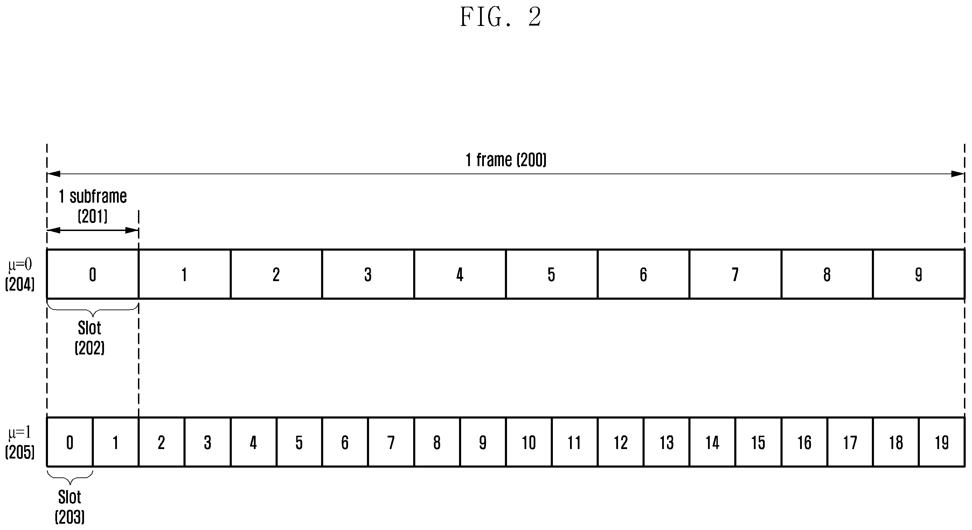

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example of FIG. 2 shows the case of $\mu=0$ (2-04) and the case of $\mu=1$ (2-05) as a configuration value for a subcarrier spacing. In the case of $\mu=0$ (204), one subframe 201 may include one slot 202, and in the case of $\mu=1$ (205), one subframe 201 may include two slots 203.

That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

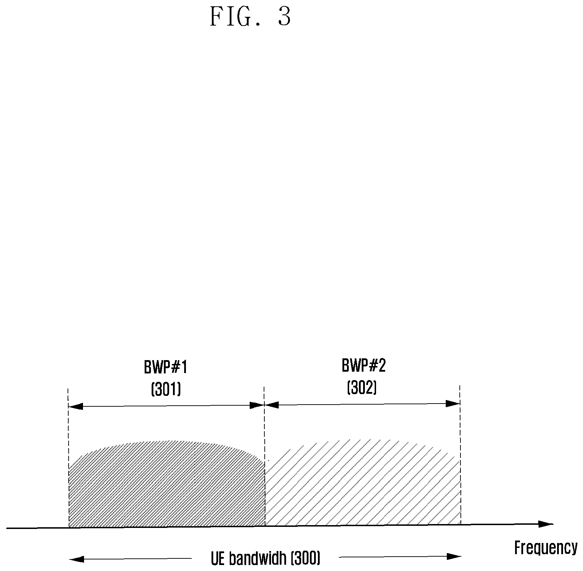

FIG. 3 illustrates an example of a bandwidth part configuration in a wireless communication system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

| | |
|---|---|
| BWP ::= | SEQUENCE { |
| bwp-Id | BWP-Id, |
| (bandwidth part identifier) | |
| locationAndBandwidth | INTEGER (1..65536), |
| (bandwidth part location) | |
| subcarrierSpacing | ENUMERATED {n0, n1, n2, n3, n4, n5}, |
| (subcarrier spacing) | |
| cyclicPrefix | ENUMERATED { extended } |
| (cyclic prefix) | |
| } | |

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1)) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

Next, synchronization signal (SS)/PBCH blocks in a 5G system will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.

- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and from this, control resource set #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 3]

| |
|---|
| Identifier for DCI formats - [1] bit |
| Frequency domain resource assignment - $[\lceil \log_2 (N_{RB}^{UL,BWP}(N_{RB}^{UL,BWP}+1)/2) \rceil ]$ bits |
| Time domain resource assignment - X bits |
| Frequency hopping flag - 1 bit. |
| Modulation and coding scheme - 5 bits |
| New data indicator - 1 bit |
| Redundancy version - 2 bits |
| HARQ process number - 4 bits |
| Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 4 below, for example.

[Table 4]

| |
| --- |
| Carrier indicator - 0 or 3 bits |
| UL/SUL indicator - 0 or 1 bit |
| Identifier for DCI formats - [1] bits |
| Bandwidth part indicator - 0, 1 or 2 bits |
| Frequency domain resource assignment |
| For resource allocation type 0, $\lceil N_{RB}^{UL,\,BWP} / P \rceil$ bits |
| For resource allocation type 1, $\lceil \log_2 (N_{RB}^{UL,\,BWP} (N_{RB}^{UL,\,BWP} + 1)/2) \rceil$ bits |
| Time domain resource assignment -1, 2, 3, or 4 bits |
| Virtual resource block (VRB)-to-physical resource block (PRB) mapping - 0 or 1 bit, only for resource allocation type 1. |
| ∘ 0 bit if only resource allocation type 0 is configured; |
| ∘ 1 bit otherwise. |
| Frequency hopping flag - 0 or 1 bit, only for resource allocation type 1. |
| ∘ 0 bit if only resource allocation type 0 is configured; |
| ∘ 1 bit otherwise. |
| Modulation and coding scheme - 5 bits |
| New data indicator - 1 bit |
| Redundancy version - 2 bits |
| HARQ process number - 4 bits |
| 1st downlink assignment index- 1 or 2 bits |
| ∘ 1 bit for semi-static HARQ-ACK codebook; |
| ∘ 2 bits for dynamic HARQ-ACK codebook with single HARQ-ACK codebook. |
| 2nd downlink assignment index - 0 or 2 bits |
| ∘ 2 bits for dynamic HARQ-ACK codebook with two HARQ-ACK sub-codebooks; |
| ∘ 0 bit otherwise. |
| TPC command for scheduled PUSCH - 2 bits |
| SRS resource indicator - $\left\lceil \log_2 \left( \sum_{k=1}^{L_{max}} \binom{N_{SRS}}{k} \right) \right\rceil$ or $\lceil \log_2 (N_{SRS}) \rceil$ bits |
| * $\left\lceil \log_2 \left( \sum_{k=1}^{L_{max}} \binom{N_{SRS}}{k} \right) \right\rceil$ bits for non-codebook based PUSCH transmission; |
| * $\lceil \log_2 (N_{SRS}) \rceil$ bits for codebook based PUSCH transmission. |
| Precoding information and number of layers - up to 6 bits |
| Antenna ports - up to 5 bits |
| SRS request - 2 bits |
| Channel state information (CSI) request - 0, 1, 2, 3, 4, 5, or 6 bits |
| Code block group (CBG) transmission information - 0, 2, 4, 6, or 8 bits |
| Phase tracking reference signal (PTRS)-demodulation reference signal (DDMRS) association - 0 or 2 bits. |
| beta_offset indicator - 0 or 2 bits |
| - Demodulation reference signal (DMRS) sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 5 below, for example.

[Table 5]

| |
| --- |
| Identifier for DCI formats - [1] bit |

(continued)

Frequency domain resource assignment - $\left[\left\lceil \log_2 \left( N_{RB}^{DL,\,BWP} \left( N_{RB}^{DL,\,BWP} + 1 \right) / 2 \right) \right\rceil \right]$ bits

Time domain resource assignment - X bits

VRB-to-PRB mapping - 1 bit.

Modulation and coding scheme - 5 bits

New data indicator - 1 bit

Redundancy version - 2 bits

HARQ process number - 4 bits

Downlink assignment index - 2 bits

TPC command for scheduled PUCCH - [2] bits

Physical uplink control channel (PUCCH) resource indicator - 3 bits

- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 6 below, for example.

[Table 6]

Carrier indicator - 0 or 3 bits

Identifier for DCI formats - [1] bits

Bandwidth part indicator - 0, 1 or 2 bits

Frequency domain resource assignment

∘ For resource allocation type 0, $\left\lceil N_{RB}^{DL,\,BWP} / P \right\rceil$ bits

∘ For resource allocation type 1, $\left\lceil \log_2 \left( N_{RB}^{DL,\,BWP} \left( N_{RB}^{DL,\,BWP} + 1 \right) / 2 \right) \right\rceil$ bits

Time domain resource assignment -1, 2, 3, or 4 bits

VRB-to-PRB mapping - 0 or 1 bit, only for resource allocation type 1.

∘ 0 bit if only resource allocation type 0 is configured;

∘ 1 bit otherwise.

Physical resource block (PRB) bundling size indicator - 0 or 1 bit

Rate matching indicator - 0, 1, or 2 bits

Zero power (ZP) channel state information (CSI)-reference signal (RS) trigger - 0, 1, or 2 bits

For transport block 1:

Modulation and coding scheme - 5 bits

New data indicator - 1 bit

Redundancy version - 2 bits

For transport block 2:

Modulation and coding scheme - 5 bits

New data indicator - 1 bit

Redundancy version - 2 bits

HARQ process number - 4 bits

Downlink assignment index - 0 or 2 or 4 bits

TPC command for scheduled PUCCH - 2 bits

PUCCH resource indicator - 3 bits

PDSCH-to-HARQ_feedback timing indicator - 3 bits

Antenna ports - 4, 5 or 6 bits

Transmission configuration indication - 0 or 3 bits

SRS request - 2 bits

Code block group (CBG) transmission information - 0, 2, 4, 6, or 8 bits

CBG flushing out information - 0 or 1 bit

- DMRS sequence initialization - 1 bit

Hereinafter, a downlink control channel in a 5G system will be described in more detail with reference to the accompanying drawings.

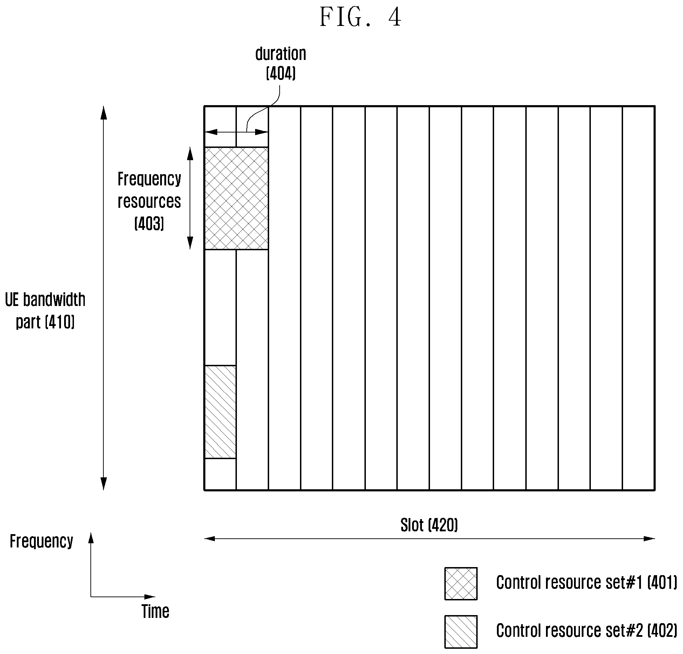

FIG. 4 illustrates an example of a control resource set used to transmit a downlink control channel in a 5G communication system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through higher layer signaling (for example, system information, MIB, RRC signaling, etc.). The description that a control resource set is configured for a UE means that information such as a control resource set identity, the control resource set's frequency location, and the control resource set's symbol duration is provided. For example, the following pieces of information may be included.

[Table 7]

| |
|---|
| ConControlResourceSet ::=                    SEQUENCE {<br><br>Corresponds to L1 parameter 'CORESET-ID'<br><br><br>controlResourceSetId              ControlResourceSetId,<br><br>(control resource set identity)<br><br>frequencyDomainResources          BIT STRING (SIZE (45)),<br><br>(frequency domain resource assignment information)<br><br>duration                          INTEGER (1..maxCoReSetDuration),<br><br>(time domain resource assignment information)<br><br>cce-REG-MappingType                  CHOICE {<br><br>(CCE-to-REG mapping type)<br><br>interleaved                       SEQUENCE {<br><br><br>reg-BundleSize                    ENUMERATED {n2, n3, n6},<br><br>(REG bundle size)<br><br><br>precoderGranularity               ENUMERATED {sameAsREG-bundle, allContiguousR<br><br>Bs}, |

```
interleaverSize                        ENUMERATED  {n2,  n3,  n6}
(interleaver size)


shiftIndex                             INTEGER(0..maxNrofPhysicalResourceBlocks-1)
                         OPTIONAL
(interleaver shift)
},
nonInterleaved                         NULL
},
tci-StatesPDCCH                          SEQUENCE(SIZE  (1..maxNrofTCI-StatesPDCCH))
  OF  TCI-StateId              OPTIONAL,
(QCL configuration information)
tci-PresentInDCI                       ENUMERATED  {enabled}
OPTIONAL,       ... Need S
}
```

In Table 7, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set.

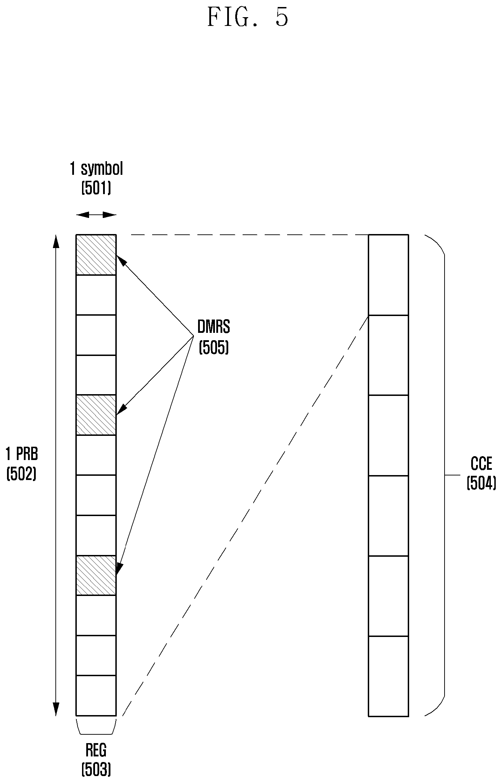

FIG. 5 illustrates an example of a basic unit of time and frequency resources constituting a downlink control channel. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through higher layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information may be included.

[Table 8]

| |
|---|
| SearchSpace ::= SEQUENCE { |
| Identity of the search space. SearchSpaceId = 0 identifies the SearchSpace configured via P BCH (MIB) or ServingCellConfigCommon. |

```
searchSpaceId                          SearchSpaceId,

(search space identity)

controlResourceSetId                   ControlResourceSetId,

(control resource set identity)

monitoringSlotPeriodicityAndOffset     CHOICE {

(monitoring slot level periodicity)

sl1                                    NULL,

sl2                                    INTEGER  (0..1),

sl4                                    INTEGER  (0..3),

sl5                              INTEGER  (0..4),

sl8                                    INTEGER  (0..7),

sl10                                   INTEGER  (0..9),

sl16                                   INTEGER  (0..15),

sl20                                   INTEGER  (0..19)

}

OPTIONAL,

duration (monitoring duration)              INTEGER  (2..2559)

monitoringSymbolsWithinSlot                 BIT  STRING  (SIZE  (14))

OPTIONAL,

(monitoring symbols within slot)

nrofCandidates                         SEQUENCE  {

(number of PDCCH candidates for each aggregation level)

aggregationLevel1           ENUMERATED {n0, n1, n2, n3, n4, n5, n6, n8},

aggregationLevel2           ENUMERATED {n0, n1, n2, n3, n4, n5, n6, n8},

aggregationLevel4           ENUMERATED {n0, n1, n2, n3, n4, n5, n6, n8},

aggregationLevel8           ENUMERATED {n0, n1, n2, n3, n4, n5, n6, n8},

aggregationLevel16          ENUMERATED {n0, n1, n2, n3, n4, n5, n6, n8}

},


searchSpaceType                        CHOICE {

(search space type)

-- Configures this search space as common search space (CSS) and DCI formats to monitor.

common                                 SEQUENCE {

(common search space)

}
```

```
ue-Specific                          SEQUENCE {
(UE-specific search space)
-- Indicates whether the UE monitors in this USS for DCI formats 0-0 and 1-0 or for formats 0-1 and
1-1.
formats                              ENUMERATED  {formats0-0-And-1-0,  formats0-1-And-1-
1},
...
}
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI(SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given below.

[Table 9]

| DCI format | Usage |
|---|---|
| 0_0 | Scheduling of PUSCH in one cell |

15

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sym bol(s) where UE may assume no transmission is intended for the UE |
| 2_2 | Transmission of TPC commands for PUCCH and PUSCH |
| 2_3 | Transmission of a group of TPC commands for SRS trans missions by one or more UEs |

In a 5G system, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$ : PDCCH candidate index at aggregation level L
- $i = 0, ..., L -1$
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p = 39827$ *for pmod3 = 0*, $A_p = 39829$ *for pmod3 = 1*, $A_p = 39839$ *for pmod3 = 2, D = 65537*
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each timepoint may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 10 below. A TCI state is for announcing the QCL relation between a PDCCH (or a PDCCH DRMS) and another RS or channel, and the description that a reference antenna port A (reference RS #A) and another target antenna port B(target RS #B) are QCLed with each other means that the UE is allowed to apply some or all of large-scale channel parameters estimated in the antenna port A to channel measurement from the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 10 below.

[Table 10]

| QCL type | Large-scale characteristics |
|----------|------------------------------|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 11 below. Referring to Table 11, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) of each TCI state may include the serving cell index and the BWP index of the reference RS indicated by the corresponding QCL information, the type and ID of the reference BS, and a QCL type as in Table 10 above.

[Table 11]

```
TCI-State ::=                       SEQUENCE {
tci-StateId                         TCI-StateId,
(ID of corresponding TCI state)
qcl-Type1                           QCL-Info,
(QCL information of first refernece RS of RS (target RS) referring to corresponding TCI state
ID)
qcl-Type2                           QCL-Info            OPTIONAL,    --
Need R
(QCL information of second refernece RS of RS (target RS) referring to corresponding TCI
state ID)
...
}


QCL-Info ::=                        SEQUENCE {
cell                                ServCellIndex            OPTIONAL,     -- Need R
(serving cell index of reference RS indicated by corresponding QCL information)
bwp-Id                              BWP-Id                   OPTIONAL,    -- Cond
CSI-RS-Indicated
(BWP index of reference RS indicated by corresponding QCL information)
referenceSignal                     CHOICE {
csi-rs                              NZP-CSI-RS-ResourceId,
ssb                                 SSB-Index
(one of CSI-RS ID or SSB ID indicated by corresponding QCL information)
},
qcl-Type                            ENUMERATED {typeA, typeB, typeC, typeD},
...
}
```

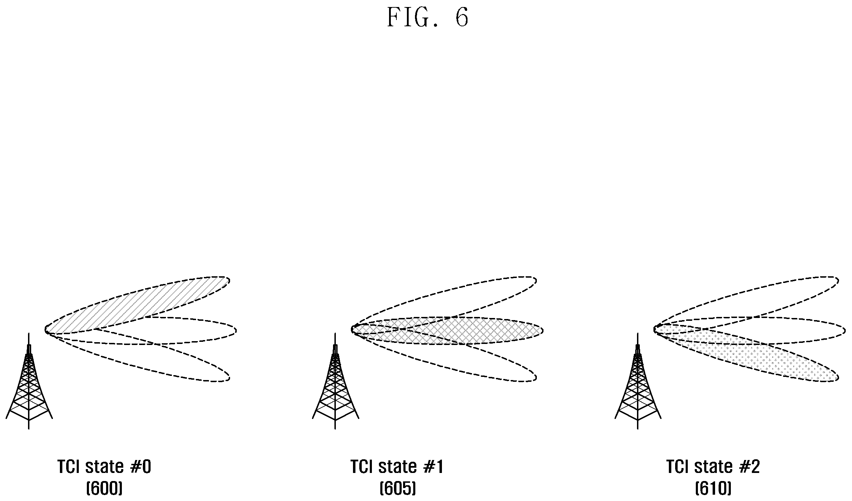

FIG. 6 illustrates an example of base station beam allocation according to TCI state configuration. Referring to FIG. 6, the base station may transfer information regarding N different beams to the UE through N different TCI states. For example, in the case of N=3 as in FIG. 6, the base station may configure qcl-Type2 parameters included in three TCI states 600, 605, and 610 in QCL type D while being associated with CSI-RSs or SSBs corresponding to different beams, thereby notifying that antenna ports referring to the different TCI states 600, 605, and 610 are associated with different spatial Rx parameters (that is, different beams).

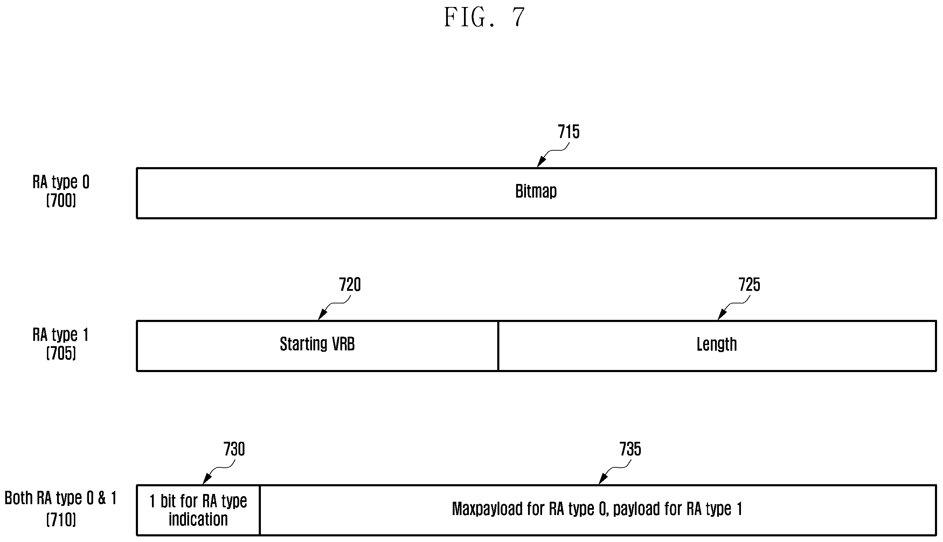

FIG. 7 illustrates an example of frequency domain resource allocation with regard to a PDSCH in a wireless communication system.

FIG. 7 illustrates three frequency domain resource allocation methods of type 0 700, type 1 705, and dynamic switch 710 which can be configured through a higher layer in an NR wireless communication system.

Referring to FIG. 7, in the case in which a UE is configured to use only resource allocation type-0 through higher layer signaling (700), partial downlink control information (DCI) for allocating a PDSCH to the UE includes a bitmap including $N_{RBG}$ bits. The conditions for this will be described again later. As used herein, $N_{RBG}$ refers to the number of resource block groups (RBGs) determined according to the BWP size allocated by a BWP indicator and higher layer parameter rbg-Size, as in Table 11 below, and data is transmitted in RBGs indicated as "1" by the bitmap.

[Table 12]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

In case that the UE is configured to use only resource type 1 through higher layer signaling (705), some DCI for allocating PDSCHs to the UE includes frequency domain resource allocation information including bits. The conditions for this will be described again later. The base station may thereby configure a starting virtual resource block (starting VRB) 720 and the length 725 of a frequency domain resource allocated continuously therefrom.

In the case in which the UE is configured to use both resource type 0 and resource type 1 through higher layer signaling (710), partial DCI for allocating a PDSCH to the corresponding UE includes frequency domain resource allocation information including as many bits as the larger value 735 between the payload 715 for configuring resource type 0 and the payload 720 and 725 for configuring resource type 1. The conditions for this will be described again later. One bit may be added to the foremost part (MSB) of the frequency domain resource allocation information inside the DCI. If the bit has the value of "0", use of resource type 0 may be indicated, and if the bit has the value of "1", use of resource type 1 may be indicated.

Hereinafter, a time domain resource allocation method regarding a data channel in a 5G system will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 13 or Table 14 below may be transmitted from the base station to the UE.

[Table 13]

| |
|---|
| PDSCH-TimeDomainResourceAllocationList ::=     SEQUENCE (SIZE(1..maxNrofDL-Allocations)) OF PDSCH-TimeDomainResourceAllocation <br><br> PDSCH-TimeDomainResourceAllocation ::=         SEQUENCE { <br><br> k0        INTEGER(0..32)   OPTIONAL,     -- Need S <br><br> (PDCCH-to-PDSCH timing, slot unit) <br><br> mappingType                      ENUMERATED {typeA, typeB}, <br><br> (PDSCH mapping type) <br><br> startSymbolAndLength             INTEGER (0..127) <br><br> (start symbol and length of PDSCH) <br><br> } |

[Table 14]

| |
|---|
| PUSCH-TimeDomainResourceAllocationList ::=   SEQUENCE (SIZE(1..maxNrofUL-Allocations)) OF PUSCH-TimeDomainResourceAllocation <br><br> PUSCH-TimeDomainResourceAllocation ::=         SEQUENCE { <br><br> k2           INTEGER(0..32)                  OPTIONAL,     -- Need S <br><br> (PDCCH-to-PUSCH timing, slot unit) <br><br> mappingType                     ENUMERATED {typeA, typeB}, <br><br> (PUSCH mapping type) <br><br> startSymbolAndLength             INTEGER (0..127) <br><br> (start symbol and length of PUSCH) <br><br> } |

The base station may notify the UE of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

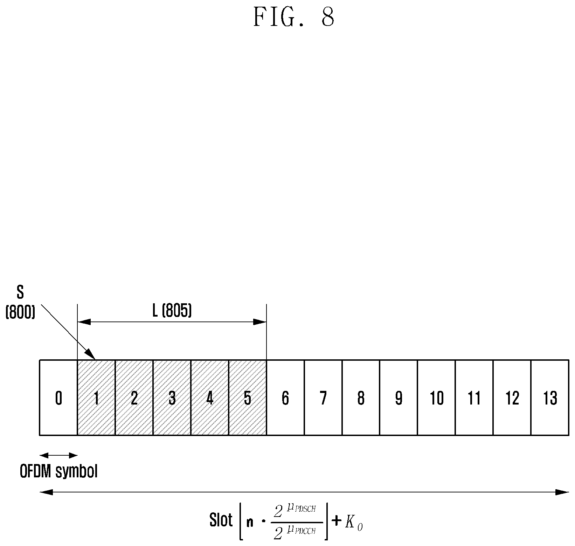

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an higher layer, the scheduling offset (K0) value, and the OFDM symbol start location 800 and length 805 within one slot 810 dynamically indicated through DCI..

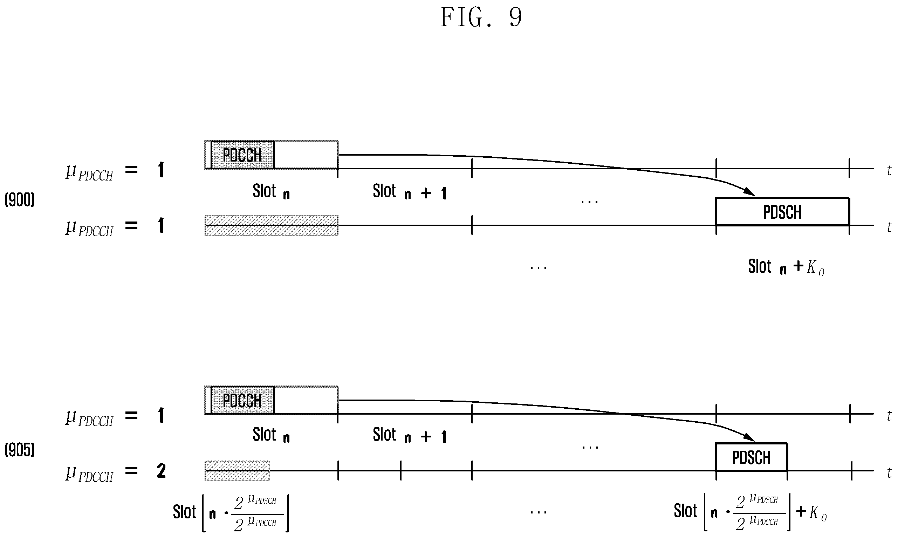

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing (900, $\mu_{PDSCH}$ = $\mu_{PDCCH}$), the slot number for data and that for control are identical, and the base station and the UE may accordingly generate a scheduling offset in conformity with a predetermined slot offset K0. Contrarily, if the data channel and the control channel have different subcarrier spacings (905, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 15 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 15 through higher signaling. If PUSCH transmission is operated by a configured grant, parameters applied to the PUSCH transmission are applied through configuredGrantConfig (higher signaling) in Table 15 except for dataScramblingIdentityPUSCH, txConfig, codebookSubset, maxRank, and scaling of UCI-OnPUSCH, which are provided by pusch-Config (higher signaling) in Table 16. If provided with transformPrecoder inside configuredGrantConfig (higher signaling) in Table 15, the UE applies tp-pi2BPSK inside pusch-Config in Table 16 to PUSCH transmission operated by a configured grant.

[Table 15]

```
ConfiguredGrantConfig ::=            SEQUENCE {
frequencyHopping ENUMERATED {intraSlot, interSlot} OPTIONAL,   -- Need S,
cg-DMRS-Configuration   DMRS-UplinkConfig,
mcs-Table   ENUMERATED {qam256, qam64LowSE} OPTIONAL,   -- Need S
mcs-TableTransformPrecoder   ENUMERATED {qam256, qam64LowSE}
OPTIONAL,   -- Need S
uci-OnPUSCH   SetupRelease { CG-UCI-OnPUSCH } OPTIONAL,   -- Need M
resourceAllocation ENUMERATED { resourceAllocationType0,
resourceAllocationType1, dynamicSwitch },
rbg-Size   ENUMERATED {config2}      OPTIONAL,      -- Need S
powerControlLoopToUse   ENUMERATED {n0, n1},
p0-PUSCH-Alpha      P0-PUSCH-AlphaSetId,
transformPrecoder   ENUMERATED {enabled, disabled} OPTIONAL,   -- Need S
nrofHARQ-Processes      INTEGER(1..16),
repK   ENUMERATED {n1, n2, n4, n8},
repK-RV ENUMERATED {s1-0231, s2-0303, s3-0000} OPTIONAL,   -- Need R
periodicity     ENUMERATED {
sym2, sym7, sym1x14, sym2x14, sym4x14, sym5x14, sym8x14, sym10x14,
sym16x14, sym20x14,
sym32x14, sym40x14, sym64x14, sym80x14, sym128x14, sym160x14,
sym256x14, sym320x14, sym512x14,
sym640x14, sym1024x14, sym1280x14, sym2560x14, sym5120x14,
sym6, sym1x12, sym2x12, sym4x12, sym5x12, sym8x12, sym10x12, sym16x12,
sym20x12, sym32x12,
sym40x12, sym64x12, sym80x12, sym128x12, sym160x12, sym256x12,
sym320x12, sym512x12, sym640x12,
sym1280x12, sym2560x12
},
configuredGrantTimer     INTEGER (1..64)   OPTIONAL,   -- Need R
rrc-ConfiguredUplinkGrant     SEQUENCE {
timeDomainOffset        INTEGER (0..5119),
```

```
timeDomainAllocation     INTEGER   (0..15),

frequencyDomainAllocation     BIT STRING (SIZE(18)),

antennaPort        INTEGER (0..31),

dmrs-SeqInitialization   INTEGER (0..1)   OPTIONAL,   -- Need R

precodingAndNumberOfLayers     INTEGER (0..63),

srs-ResourceIndicator     INTEGER (0..15)   OPTIONAL,   -- Need R

mcsAndTBS      INTEGER (0..31),

frequencyHoppingOffset   INTEGER (1.. maxNrofPhysicalResourceBlocks-1)

OPTIONAL,   -- Need R

pathlossReferenceIndex INTEGER 0..maxNrofPUSCH-PathlossReferenceRSs-1),

...

OPTIONAL,    -- Need R

...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 16, which is higher signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucchspatialRelationInfo. If the UE has no configured txConfig inside pusch-Config in Table 16, the UE does not expect scheduling through DCI format 0_1.

[Table 16]

```
PUSCH-Config ::=     SEQUENCE {

dataScramblingIdentityPUSCH     INTEGER (0..1023) OPTIONAL,   -- Need S

txConfig   NUMERATED {codebook, nonCodebook} OPTIONAL,   -- Need S

dmrs-UplinkForPUSCH-MappingTypeA   SetupRelease { DMRS-UplinkConfig }
```

```
OPTIONAL,       -- Need M
dmrs-UplinkForPUSCH-MappingTypeB    SetupRelease { DMRS-UplinkConfig }
OPTIONAL,       -- Need M
pusch-PowerControl    PUSCH-PowerControl    OPTIONAL,    -- Need M
frequencyHopping    ENUMERATED {intraSlot, interSlot}
OPTIONAL,       -- Need S
frequencyHoppingOffsetLists    SEQUENCE (SIZE (1..4)) OF INTEGER
(1.. maxNrofPhysicalResourceBlocks-1)
OPTIONAL,       -- Need M
resourceAllocation         ENUMERATED { resourceAllocationType0,
resourceAllocationType1, dynamicSwitch},
pusch-TimeDomainAllocationList    SetupRelease { PUSCH-TimeDomain
ResourceAllocationList}   OPTIONAL,     -- Need M
pusch-AggregationFactor ENUMERATED { n2, n4, n8 } OPTIONAL,   -- Need S
mcs-Table ENUMERATED {qam256, qam64LowSE} OPTIONAL,   -- Need S
mcs-TableTransformPrecoder    ENUMERATED {qam256, qam64LowSE}
OPTIONAL,       -- Need S
transformPrecoder   ENUMERATED {enabled, disabled} OPTIONAL,   -- Need S
codebookSubset ENUMERATED {fullyAndPartialAndNonCoherent,
partialAndNonCoherent,nonCoherent}
OPTIONAL, -- Cond codebookBased
maxRank     INTEGER (1..4)   OPTIONAL, -- Cond codebookBased
rbg-Size   ENUMERATED { config2}   OPTIONAL, -- Need S
uci-OnPUSCH     SetupRelease { UCI-OnPUSCH}   OPTIONAL, -- Need M
tp-pi2BPSK     ENUMERATED {enabled}   OPTIONAL, -- Need S
...
}
```

Next, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (higher signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (higher signaling). The TPMI is used to indicate a precoder to be applied to PUSCH transmission. If one SRS resource is configured for the UE, the TPMI is used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (higher signaling) will be configured as "fullyAndPartialAndNonCoherent". In addition, if the UE reported "nonCoherent" as UE capability, UE does not expect that the value of codebookSubset (higher signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (higher signaling) is "codebook", and one SRS resource may be indicated through an SRI inside the corresponding SRS resource set. If multiple SRS resources are configured inside the SRS resource set wherein the value of usage inside SRS-ResourceSet (higher signaling) is "codebook", the UE expects that the value of nrofSRS-Ports inside SRS-Resource (higher signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resource Type inside SRS-ResourceSet (higher signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator(a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone(SA). That is, the UE configures a candidate list of BCs regarding EN-DC and NR SA, based on bands received from the base station at a request through FreqBandList. Bands have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same can be omitted. This step is applied in MR-DC as well, that is, LTE bands are also applied. BCs remaining after the above step constitute the final "candidate BC list".

4. The UE may select BCs appropriate for the requested RAT type from the final "candidate BC list" and select BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure at least one SRS resource set with regard to each SRS configuration. As an example, the base station and the UE may exchange higher signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook", and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive higher layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through higher layer signaling including RRC signaling or MAC CE signaling, or L1 signaling (for example, DCI). For example, the base station may activate or deactivate periodic SRS transmission for the UE through higher layer signaling. The base station may indicate activation of an SRS resource set having resourceType configured as "periodic" through higher layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through higher layer signaling.

For example, the base station may activate or deactivate semi-persistent SRS transmission for the UE through higher layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicity AndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through higher layer signaling.

For example, the base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 17]

```
SRS-Resource ::=          SEQUENCE {
srs-ResourceId     SRS-ResourceId,
nrofSRS-Ports      ENUMERATED {port1, ports2, ports4},
ptrs-PortIndex     ENUMERATED {n0, n1 }   OPTIONAL,      -- Need R
transmissionComb       CHOICE {
n2     SEQUENCE {
combOffset-n2      INTEGER (0..1),
cyclicShift-n2     INTEGER (0..7)
},
n4     SEQUENCE {
combOffset-n4      INTEGER (0..3),
cyclicShift-n4       INTEGER (0..11)
}
},
resourceMapping        SEQUENCE {
startPosition       INTEGER (0..5),
nrofSymbols       ENUMERATED {n1, n2, n4},
repetitionFactor     ENUMERATED {n1, n2, n4}
},
freqDomainPosition          INTEGER (0..67),
freqDomainShift        INTEGER (0..268),
freqHopping        SEQUENCE {
c-SRS        INTEGER (0..63),
b-SRS        INTEGER (0..3),
b-hop        INTEGER (0..3)
},
groupOrSequenceHopping   ENUMERATED { neither, groupHopping, quenceHopping },
resourceType        CHOICE {
aperiodic        SEQUENCE {
...
},
semi-persistent          SEQUENCE {
periodicityAndOffset-sp     SRS-PeriodicityAndOffset,
...
},
periodic        SEQUENCE {
```

```
periodicityAndOffset-p        SRS-PeriodicityAndOffset,

...

}

},

sequenceId        INTEGER (0..1023),

spatialRelationInfo        SRS-SpatialRelationInfo    OPTIONAL,    -- Need R

...

[[

resourceMapping-r16          SEQUENCE {

startPosition-r16            INTEGER (0..13),

nrofSymbols-r16            ENUMERATED {n1, n2, n4},

repetitionFactor-r16        ENUMERATED {n1, n2, n4}

} OPTIONAL -- Need R

]],

[[

spatialRelationInfo-PDC-r17    SetupRelease { SpatialRelationInfo-PDC-r17 }

OPTIONAL, -- Need M

resourceMapping-r17        SEQUENCE {

startPosition-r17 INTEGER (0..13),

nrofSymbols-r17 ENUMERATED {n1, n2, n4, n8, n10, n12, n14},

repetitionFactor-r17 ENUMERATED {n1, n2, n4, n5, n6, n7, n8, n10, n12, n14}

} OPTIONAL, -- Need R

partialFreqSounding-r17        SEQUENCE {

startRBIndexFScaling-r17        CHOICE{

startRBIndexAndFreqScalingFactor2-r17 INTEGER (0..1),

startRBIndexAndFreqScalingFactor4-r17 INTEGER (0..3)

},

enableStartRBHopping-r17 ENUMERATED {enable} OPTIONAL -- Need R

} OPTIONAL, -- Need R

transmissionComb-n8-r17 SEQUENCE {

combOffset-n8-r17 INTEGER (0..7),

cyclicShift-n8-r17 INTEGER (0..5)

} OPTIONAL, -- Need R

srs-TCIState-r17 CHOICE {

srs-UL-TCIState-r17 TCI-UL-State-Id-r17,
```

```
srs-DLorJoint-TCIState-r17 TCI-StateId
} OPTIONAL -- Need R
]]
}
}
```

The following SRS parameters may be semi-statically configured by higher-layer parameter SRS-Resource.

- srs-ResourceId determines an SRS resource configuration identifier.
- The number of SRS ports may be configured by higher-layer parameter nrofSRS-Ports, and may be configured to be 1, 2, or 4. If nrofSRS-Ports is not configured, nrofSRS-Ports is 1.
- A time domain operation of SRS resource allocation indicated by higher-layer parameter resourceType may be one of "periodic," "semi-persistent," or "aperiodic" SRS transmission.
- If an SRS resource type is periodic or semi-persistent, a slot level periodicity and a slot level offset are determined by higher-layer parameter periodicity periodicityAndOffset-p or periodicityAndOffset-sp. The UE expects that SRS resources within the same SRS resource set SRS-ResourceSet may not be configured with different slot-level periodicities. If higher-layer parameter resourceType is configured to be "aperiodic" for SRS-ResourceSet, the slot level offset is defined by higher-layer parameter slotOffset.
- The number of OFDM symbols of an SRS resource, a start OFDM symbol within a slot, and repetition factor R are configured by higher-layer parameter resourceMapping. If R is not configured, R is the same as the number of OFDM symbols of the SRS resource.
- SRS bandwidths B_SRS and C_SRS are configured by higher-layer parameter freqHopping. If not configured, B_SRS is 0.
- Frequency hopping bandwidth b_hop is configured by higher-layer parameter freqHopping. If not configured, b_hop is 0.
- A frequency domain position and a configurable shift are determined by higher-layer parameters freqDomainPosition and freqDomainShift, respectively. If freqDomainPosision is not configured, a value thereof is 0.
- A cyclic shift is configured by higher-layer parameter cyclicShift-n2, cyclicShift-n4, or cyclicShift-n8 for a transmission comb value of 2, 4, or 8, respectively.
- The transmission comb value is configured by higher-layer parameter transmissionComb.
- A transmission comb offset is configured by higher-layer parameter combOffset-n2, combOffset-n4, or combOffset-n8 for a transmission comb value of 2, 4, or 8, respectively.
- An SRS sequence ID is configured by higher-layer parameter sequenceID.
- $N_s$ = 1, 2, or 4 consecutive symbols within last 6 symbols of a slot may be configured as the SRS resource of the UE via higher-layer parameter resourceMapping in SRS-Resource. In this case, each of the symbols of the resource is mapped to all SRS antenna ports.
- The base station may configure $N_s$=1, 2, or 4 consecutive symbols at any symbol position within a slot to be the SRS time resource of the UE via higher-layer parameter resourceMapping-r16 within the SRS resource. In addition, one value of R=1, 2, or 4 is available for repetitionFactor-r16, and R may be a divisor of $N_s$.
- The base station may configure $N_s$=1, 2, 4, 8, 10, 12, or 14 consecutive symbols at any symbol position within a slot to be the SRS time resource of the UE via higher-layer parameter esourceMapping-r17 within the SRS resource. In addition, one value of R=1, 2, 4, 5, 6, 7, 8, 10, 12, or 14 is available for repetitionFactor-r17, and R may be a divisor of $N_s$.

Configuration information spatialRelationInfo in Table 17 is used to apply, by referring to a reference signal, beam information of the reference signal to a beam used for corresponding SRS transmission. For example, configuration of spatialRelationInfo may include information as in Table 18 below.

[Table 18]

```
SRS-SpatialRelationInfo ::=        SEQUENCE {
servingCellId     ServCellIndex        OPTIONAL,     -- Need S
referenceSignal        CHOICE {
ssb-Index      SSB-Index,
csi-RS-Index      NZP-CSI-RS-ResourceId,
srs        SEQUENCE {
resourceId         SRS-ResourceId,
uplinkBWP        BWP-Id
}
}
}
```

Referring to the spatialRelationInfo configuration, an SS/PBCH block index, a CSI-RS index, or an SRS index may be configured as an index of a reference signal to be referenced for use of beam information of a specific reference signal. Higher signaling referenceSignal is configuration information indicating beam information of which reference signal is to be referenced for corresponding SRS transmission, ssb-Index refers to an SS/PBCH block index, csi-RS-Index refers to a CSI-RS index, and srs refers to an SRS index. If a value of higher-signaling referenceSignal is configured to be "ssb-Index", the terminal may apply, as a transmission beam of the SRS transmission, a reception beam used when receiving an SS/PBCH block corresponding to ssb-Index. If the value of higher-signaling referenceSignal is configured to be "csi-RS-Index", the terminal may apply, as a transmission beam of the SRS transmission, a reception beam used when receiving a CSI-RS corresponding to csi-RS-Index. If a value of higher signaling referenceSignal is configured to be "srs", the UE may apply a transmission beam, which is used when transmitting an SRS corresponding to srs, as a transmission beam of the SRS transmission. It has been described that a TCI state is used for a downlink channel beam indication (UE's reception space filter value/type indication), and that SpatialRelationInfo is used for an uplink channel beam indication (UE's transmission space filter value/type indication), but it should be noted that this does not mean limitations according to a type of uplink/downlink and that mutual expansion is possible in the future. For example, a conventional downlink TCI state (DL TCI state) may be expanded to an uplink TCI state (UL TCI state) via a method, such as adding an uplink channel or signal to a type of target RS that may refer to a TCI state, or adding an uplink channel or signal to a type of referenceSignal (reference RS) included in QCL-Info or a TCI state. As an example, the base station may configure a higher-layer signaling parameter, such as srs-TCIState-r17 in the aforementioned Table 17, for the UE, thereby notifying of SRS transmission beam information by using a TCI state instead of spatialrelationinfo. There are various other expansion methods, such as using a DL-UL joint TCI state, but not all methods will be described so as not to obscure the main point of the description.

An SRS may include a constant amplitude zero auto correlation (CAZAC) sequence. CAZAC sequences constituting respective SRSs transmitted from multiple UEs have different values. In addition, CAZAC sequences generated from a single CAZAC sequence via cyclic shifts show a characteristic of having a correlation value of 0 with other sequences having different cyclic shift values. Accordingly, by using this characteristic, SRSs concurrently allocated to the same frequency domain may be distinguished according to a CAZAC sequence cyclic shift value configured for each SRS by the base station.

SRSs of multiple UEs may be distinguished according to frequency positions as well as cyclic shift values. The frequency position may be distinguished by SRS subband unit allocation or Comb. 5G or NR systems may support Comb2, Comb4, and Comb8. For Comb2, one SRS may be allocated only to even-numbered subcarriers or only to odd-numbered subcarriers in an SRS subband. In this case, each of the even-numbered subcarriers or each of the odd-numbered subcarriers may constitute one Comb.

Each UE may be allocated with an SRS subband, based on a tree structure. In addition, the UE may perform hopping of an SRS allocated to each subband at each SRS transmission time point. Accordingly, all transmission antennas of the UE may transmit the SRS via the entire uplink data transmission bandwidth.

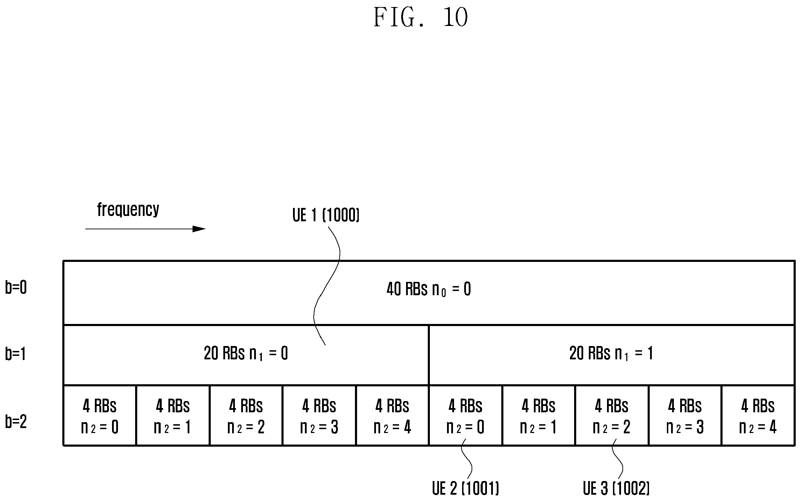

FIG. 10 is a diagram illustrating an example of a structure in which an SRS is allocated for each subband.

Referring to FIG. 10, description are provided for an example in which an SRS is assigned to each UE, based on a tree structure configured by a base station when a data transmission band corresponds to 40 RBs in the frequency domain.

In FIG. 10, when a level index of the tree structure is b, a highest level (b=0) of the tree structure may include one SRS subband having a bandwidth of 40 RBs. At a second level (b=1), two SRS subbands having a bandwidth of 20 RBs may be generated from the SRS subband of level b=0. Accordingly, two SRS subbands may exist in the entire data transmission band of the second level (b=1). A third level (b=2) may have a structure in which five SRS subbands of 4 RBs are generated from one SRS subband of 20 RBs at the immediate higher level (b=1), and 10 SRS subbands of 4 RBs may exist within one level.

This tree structure configuration may have various level numbers, SRS subband sizes, and SRS subband numbers per level according to a configuration of the base station. The number of SRS subbands at level b, which are generated from one SRS subband of a higher level, may be defined as $N_b$, and indexes $n_b$ of the $N_b$ SRS subbands may be defined as $n_b=\{0, ..., N_b-1\}$. As subbands per level change in this way, a UE may be assigned for each subband per level as illustrated in FIG. 10. For example, UE 1 1000 may be assigned to a first SRS subband ($n_1=0$) among two SRS subbands having a bandwidth of 20 RBs at level b=1, and UE 2 1001 and UE 3 1002 may be assigned respectively to a first SRS subband ($n_2=0$) and a third SRS subband ($n_2=2$) under a second SRS subband having a bandwidth of 20 RBs. Based on these procedures, the UEs are able to perform simultaneous SRS transmission via multiple component carriers (CCs), and perform SRS transmission simultaneously via multiple SRS subbands in one CC.

Specifically, for the SRS subband configuration described above, NR supports SRS bandwidth configurations as shown in Table 19 below.

[Table 19]

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,\,0}$ | $N_0$ | $m_{SRS,\,1}$ | $N_1$ | $m_{SRS,\,2}$ | $N_2$ | $m_{SRS,\,3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |

(continued)

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

In addition, NR supports SRS frequency hopping based on values in Table 19, and detailed <u>procedures</u> are as follows.

When SRS is transmitted on a given SRS resource, the sequence $r^{(pi)}(n, l')$ for each OFDM symbol $l'$ and for each of the antenna ports of the SRS resource shall be multiplied with the amplitude scaling factor $\beta_{\text{SRS}}$ in order to conform to the transmit power specified in [5, 38.213] and mapped in sequence starting with $r^{(pi)}(0, l')$ to resource elements $(k, l)$ in a slot for each of the antenna ports $p_i$ according to

$$a^{(p_i)}_{K_{\text{TC}}k'+k_0^{(p_i)}, l'+l_0} = \begin{cases} \dfrac{1}{\sqrt{N_{\text{ap}}}}\beta_{\text{SRS}}r^{(p_i)}(k',l') & k' = 0,1,\text{K},M^{\text{SRS}}_{\text{sc},b}-1 \quad l' = 0,1,...,N^{\text{SRS}}_{\text{symb}}-1 \\ 0 & \text{otherwise} \end{cases}$$

The length of the sounding reference signal sequence is given by

$$M^{\text{SRS}}_{\text{sc},b} = m_{\text{SRS},b}N^{\text{RB}}_{\text{sc}}/K_{\text{TC}}$$

where $m_{\text{SRS},b}$ is given by a selected row of Table 6.4.1.4.3-1 with $b = \text{B}_{\text{SRS}}$ where $\text{B}_{\text{SRS}} \in \{0,1,2,3\}$ is given by the field *b-SRS* contained in the higher-layer parameter *freqHopping*. The row of the table is selected according to the index $C_{\text{SRS}} \in \{0,1,...,63\}$ given by the field *c-SRS* contained in the higher-layer parameter *freqhopping*.

The frequency-domain starting position $k_0^{(p_i)}$ is defined by

$$k_0^{(p_i)} = \overline{k}_0^{(p_i)} + \sum_{b=0}^{B_{\text{SRS}}} K_{\text{TC}}M^{\text{SRS}}_{\text{sc},b}n_b$$

where

$$\overline{k}_0^{(p_i)} = n_{\text{shift}}N^{\text{RB}}_{\text{sc}} + k^{(p_i)}_{\text{TC}}$$

$$k^{(p_i)}_{\text{TC}} = \begin{cases} \left(\overline{k}_{\text{TC}} + K_{\text{TC}}/2\right)\bmod K_{\text{TC}} & \text{if } n^{\text{cs}}_{\text{SRS}} \in \left\{n^{\text{cs,max}}_{\text{SRS}}/2,...,n^{\text{cs,max}}_{\text{SRS}}-1\right\} \text{ and } N^{\text{SRS}}_{\text{ap}} = 4 \text{ and } p_i \in \{1001,1003\} \\ \overline{k}_{\text{TC}} & \text{otherwise} \end{cases}$$

If $N^{\text{start}}_{\text{BWP}} \leq n_{\text{shift}}$ the reference point for $k_0^{(p_i)} = 0$ is subcarrier 0 in common resource block 0, otherwise the reference point is the lowest subcarrier of the BWP.

The frequency domain shift value $n_{\text{shift}}$ adjusts the SRS allocation with respect to the reference point grid and is contained in the higher-layer parameter *freqDomainShift* in the *SRS-Config* IE. The transmission comb offset $\overline{k}_{\text{TC}} \in \{0,1, ..., K_{\text{TC}} - 1\}$ is contained in the higher-layer parameter *transmissionComb* in the *SRS-Config* IE and $n_b$ is a frequency position index.

Frequency hopping of the sounding reference signal is configured by the parameter $b_{\text{hop}} \in \{0,1,2,3\}$, given by the field *b-hop* contained in the higher-layer parameter *freqHopping*.

If $b_{\text{hop}} \geq \text{B}_{\text{SRS}}$, frequency hopping is disabled and the frequency position index $n_b$ remains constant (unless re-configured) and is defined by

$$n_{\text{b}} = \lfloor 4n_{\text{RRC}}/m_{\text{SRS},b}\rfloor\bmod N_{\text{b}}$$

for all $N^{\text{SRS}}_{\text{symb}}$ OFDM symbols of the SRS resource. The quantity $n_{\text{RRC}}$ is given by the higher-layer parameter *freqDomainPosition* and the values of $m_{\text{SRS},b}$ and $N_{\text{b}}$ for $b = B_{\text{SRS}}$ are given by the selected row of Table 6.4.1.4.3-1 corresponding to the configured value of $C_{\text{SRS}}$.

If $b_{\text{hop}} < B_{\text{SRS}}$, frequency hopping is enabled and the frequency position indices $n_b$ are defined by

$$n_b = \begin{cases} \lfloor 4n_{\text{RRC}}/m_{\text{SRS},b}\rfloor \bmod N_{\text{b}} & b \leq b_{\text{hop}} \\ \left(F_b(n_{\text{SRS}}) + \lfloor 4n_{\text{RRC}}/m_{\text{SRS},b}\rfloor\right)\bmod N_{\text{b}} & \text{otherwise} \end{cases}$$

where $N_{\text{b}}$ is given by Table 6.4.1.4.3-1,

(continued)

$$F_b(n_{SRS}) = \begin{cases} (N_b/2)\dfrac{n_{SRS} \bmod \Pi_{b'=b_{hop}}^{b} N_{b'}}{\Pi_{b'=b_{hop}}^{b-1} N_{b'}} + \dfrac{n_{SRS} \bmod \Pi_{b'=b_{hop}}^{b} N_{b'}}{2\Pi_{b'=b_{hop}}^{b-1} N_{b'}} & \text{if } N_b \text{ even} \\ \lfloor N_b/2 \rfloor \lfloor n_{SRS}/\Pi_{b'=b_{hop}}^{b-1} N_{b'} \rfloor & \text{if } N_b \text{ odd} \end{cases}$$

and where $N_{b_{hop}} = 1$ regardless of the value of $N_b$. The quantity $n_{SRS}$ counts the number of SRS transmissions. For the case of an SRS resource configured as aperiodic by the higher-layer parameter *resourceType*, it is given by $n_{SRS} = \lfloor l'/R \rfloor$ within the slot in which the $N_{symb}^{SRS}$ symbol SRS resource is transmitted. The quantity $R \leq N_{symb}^{SRS}$ is the repetition factor given by the field *repetitionFactor* contained in the higher-layer parameter *resourceMapping.*

As described above, the 5G or NR UE supports a single user (SU)-MIMO scheme and has up to four transmission antennas. In addition, the NR UE may simultaneously transmit SRSs via multiple CCs or via multiple SRS subbands in the CCs. Unlike the LTE system, in the 5G or NR system, various numerologies may be supported, multiple SRS transmission symbols may be variously configured, and repeated SRS transmission via a repetition factor may also be allowed. Accordingly, it is required to count SRS transmissions by considering the same. Counting SRS transmissions may be used variously. For example, counting SRS transmissions may be used to support antenna switching according to SRS transmission. Specifically, a point in time at which an SRS is transmitted, an antenna corresponding to the transmitted SRS, and a band in which the SRS is transmitted may be determined by SRS transmission counting.

The UE does not expect different time domain operations to be configured for SRS resources in the same SRS resource set. In addition, the UE does not expect different time domain operations to be configured for the SRS resource set associated with the SRS resources. An SRS request field included in DCI formats 0_1, 1_1, 0_2 (when an SRS request field exists), and 1_2 (when the SRS request area exists), indicates a triggered SRS resource set as shown in Table 21 below. If higher-layer parameter srs-TPC-PDCCH-Group for the UE is configured as "typeB," the 2-bit SRS request field included in DCI format 2_3 indicates a triggered SRS resource set. Alternatively, if higher-layer parameter srs-TPC-PDCCH-Group for the UE is configured as "typeA," the 2-bit SRS request field included in DCI format 2_3 indicates SRS transmission for a set of serving cells configured by the higher layer.

[Table 20]

| Value of SRS request field | Triggered aperiodic SRS resource set(s) for DCI format 0_1, 0_2, 1_1, 1_2, and 2_3 configured with higher layer parameter *srs-TPC-PDCCH-Group* set to "typeB" | Triggered aperiodic SRS resource set(s) for DCI format 2_3 configured with higher layer parameter *srs-TPC-PDCCH-Group* set to "typeA" |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-ResourceTrigger* set to 1 or an entry in *aperiodicSRS-ResourceTriggerList* set to 1 SRS resource set(s) configured by *SRS-PosResourceSet* with an entry in *aperiodicSRS-ResourceTriggerList* set to 1 when triggered by DCI formats 0_1, 0_2, 1_1, and 1_2 | SRS resource set(s) configured with higher layer parameter *usage* in *SRS-ResourceSet* set to "*antennaSwitching*" and *resourceType* in *SRS-Resource-Set* set to "aperiodic" for a 1st set of serving cells configured by higher layers |
| 10 | SRS resource set(s) configured by *SRS-ResourceSet* with higher layer parameter *aperiodicSRS-ResourceTrigger* set to 2 or an entry in *aperiodicSRS-ResourceTriggerList* set to 2 SRS resource set(s) configured by *SRS-PosResourceSet* with an entry in *aperiodicSRS-ResourceTriggerList* set to 2 when triggered by DCI formats 0_1, 0_2, 1_1, and 1_2 | SRS resource set(s) configured with higher layer parameter *usage* in *SRS-ResourceSet* set to "*antennaSwitching*" and *resourceType* in *SRS-Resource-Set* set to "aperiodic" for a 2nd set of serving cells configured by higher layers |

(continued)

| Value of SRS request field | Triggered aperiodic SRS resource set(s) for DCI format 0_1, 0_2, 1_1, 1_2, and 2_3 configured with higher layer parameter *srs-TPC-PDCCH-Group* set to "typeB" | Triggered aperiodic SRS resource set(s) for DCI format 2_3 configured with higher layer parameter *srs-TPC-PDCCH-Group* set to "typeA" |
|---|---|---|
| 11 | SRS resource set(s) configured by *SRS-ResourceSet* with higher layer parameter *aperiodicSRS-ResourceTrigger* set to 3 or an entry in *aperiodicSRS-ResourceTriggerList* set to 3 SRS resource set(s) configured by *SRS-PosResourceSet* with an entry in *aperiodicSRS-ResourceTriggerList* set to 3 when triggered by DCI formats 0_1, 0_2, 1_1, and 1_2 | SRS resource set(s) configured with higher layer parameter *usage* in *SRS-ResourceSet* set to "*antennaSwitching*" and *resourceType* in *SRS-Resource-Set* set to "aperiodic" for a 3rd set of serving cells configured by higher layers |

For a PUCCH and an SRS scheduled with the same carrier, when a semi-persistent SRS and a periodic SRS are configured in the same symbol as the PUCCH including only a CSI report, or including only an L1-RSRP report, or including only an L1-SINR report, the UE does not transmit the SRS. When a semi-persistent SRS or a periodic SRS is configured in the same symbol as a PUCCH including an HARQ-ACK, a link restoration request, and/or an SR, or when an aperiodic SRS is triggered to be transmitted in the same symbol as the PUCCH including the information above, the UE does not transmit the SRS. If SRS transmission fails while overlapping a PUCCH, only SRS symbol(s) overlapping the PUCCH are dropped. When an aperiodic SRS is triggered to overlap in the same symbol with a PUCCH including only a semi-persistent/periodic CSI report, only a semi-persistent/periodic L1-RSRP report, or only an L1-SINR report, the PUCCH is not transmitted.

For a band-band combination where simultaneous transmission of an SRS and a PUCCH/PUSCH is not allowed for intra-band carrier aggregation or inter-band carrier aggregation, the UE does not expect PUSCH/UL DM-RS/UL PT-RS/PUCCH formats to be configured on a carrier different from that on which an SRS is configured in the same symbol.

For a band-band combination where simultaneous transmission of an SRS and a PRACH is not allowed for intra-band carrier aggregation or inter-band carrier aggregation, the UE does not simultaneously transmit an SRS from one carrier and a PRACH from another carrier.

When an SRS resource with higher-layer parameter resourceType configured as "aperiodic" is triggered in OFDM symbol(s) for periodic or semi-persistent SRS transmission, the UE transmits the aperiodic SRS resource, periodic/semi-persistent SRS symbol(s) overlapping the corresponding symbol(s) are dropped, and non-overlapping periodic/semi-persistent SRS symbol(s) are transmitted. When an SRS resource with higher-layer parameter resource-Type configured as "semi-persistent" is triggered in OFDM symbol(s) for periodic SRS transmission, the UE transmits the semi-persistent SRS resource, periodic SRS symbol(s) are dropped during overlapping symbols, and non-overlapping periodic SRS symbol(s) are transmitted.

When higher-layer parameter "usage" within SRS-ResourceSet is configured as "antennaSwitcing" for the UE, and a guard period is configured in symbol Y, the UE follows the same priority rule as previously defined, as if an SRS is configured even during the guard period. When higher-layer parameter spatialRelationInfo of a semi-persistent or aperiodic SRS resource is activated or updated via a MAC CE with respect to CCs/bandwidth parts indicated by a set of higher-layer parameters applicableCellList, spatialRelationInfo is applied to semi-persistent or aperiodic SRS resource(s) having the same SRS resource ID with respect to all bandwidth parts within the indicated CCs.

When higher-layer parameter enableDefaultBeamPlForSRS is configured as "enable," and higher-layer parameter spatialRelationInfo for an SRS resource is not configured in FR2, except for a case where higher-layer parameter "usage" of the SRS resource is configured as "beamManagement" or configured as "nonCodebook" in association with an associatedCSI-RS configuration, and when higher-layer parameter pathlossReferenceRS for the UE is not configured, the UE transmits a target SRS resource according to the following configurations.

- The UE transmits the target SRS resource by using the same space domain transmission filter as that used for receiving a CORESET having the lowest controlResourceSetID in an activated DL bandwidth part within a CC.
- If the UE is configured with no CORESET in the CC, the UE transmits the target SRS resource by using the same space domain transmission filter as that used for receiving an activated TCI state having a lowest ID applicable to a PDSCH within the activated DL bandwidth part of the CC.

Table 21 indicates UE capability containing resource-related information of positioning uplink reference signals.

[Table 21]

| Index | Feature group | Components |
|---|---|---|
| 13-8 | SRS Resources for Positioning | Max number of SRS Resource Sets for positioning supported by UE per BWP.<br><br>Values ={1,2,4,8,12,16}.<br>2. Max number of P/SP/AP SRS Resources for positioning per BWP.<br>Values = {1,2,4,8,16,32,64}<br>3. Max number of P/SP/AP SRS Resources including the SRS resources for positioning per BWP per slot.<br>Values = {1, 2, 3, 4, 5, 6, 8, 10, 12, 14}<br>Note: Max number of P/SP/AP SRS Resources in Component 3 include both SRS resources configured by SRS-Resource and SRS resources configured by SRS-PosResource-r16 supported by UE<br>4. Max number of periodic SRS Resources for positioning per BWP.<br>Values = {1,2,4,8,16,32,64}<br>5. Max number of periodic SRS Resources for positioning per BWP per slot.<br>Values = {1,2,3,4,5,6,8,10,12,14}<br>OLPC for SRS for positioning based on SSB from serving cell is part of FG13-8<br>Note: no dedicated capability signaling is intended for this component |

The UE having reported the UE capability in Table 21 (hereinafter, referred to as FG 13-8) may transmit an uplink reference signal at all OFDM symbol positions within any slot during uplink reference signal transmission.

Table 22 describes UE capability containing information of intra-slot transmission symbol positions of an uplink reference signal in an unlicensed band.

[Table 22]

| Index | Feature group | Components |
|---|---|---|
| 10-11 | SRS starting position at any OFDM symbol in a slot | 1. Support transmitting SRS starting in all symbols (0, ..., 13) of a slot |

The UE having reported the UE capability in Table 22 (hereinafter, referred to as FG 10-11) may transmit an uplink reference signals at all OFDM symbol positions within any slot in both a licensed band and an unlicensed band during uplink reference signal transmission.

Hereinafter, embodiments of the disclosure will be described in detail in conjunction with the accompanying drawings. The contents of the disclosure may be applied to FDD and TDD systems. As used herein, higher signaling (or higher layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by a higher layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through a higher layer/L1 parameter such as a TCI state or spatial relation information, a cell ID, a TRP ID, or a panel ID may be described as a TRP, a beam, or a TCI state as a whole.

Therefore, when actually applied, a TRP, a beam, or a TCI state may be appropriately replaced with one of the above terms.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by a higher layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, a 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through several embodiments, but they are not independent of each other, and one or more embodiments may be applied simultaneously or in combination.

<First embodiment: SRS resource configuration and indication methods>

As an embodiment of the disclosure, SRS resource configuration and indication methods are described. A conventional SRS resource supports up to four antenna ports (hereinafter, an antenna port is used interchangeably with a port) as described above, and for positions of all SRS resource transmission symbols determined based on higher-layer signaling, the UE may perform SRS transmission through all ports in each symbol. As an example, if the UE is configured with a 4-port SRS resource having 4 transmission symbols by the base station via higher-layer signaling, the UE may perform transmission through 4 ports in each symbol.

It is expected that advanced releases of NR in the future may consider up to 8 UE antenna ports, thereby enabling support for enhanced specifications accordingly. Corresponding functions are under discussion in the current NR release 18, and in future releases or even in 6th generation mobile communication systems, there may be a possibility of considering more than 8 antenna ports on the UE side. However, as currently supported, when an SRS is transmitted on all ports configured for each symbol where SRS transmission is performed, if the number of ports increases, the transmission power per port decreases during SRS transmission, so that reception performance of the base station may be limited in a case where coverage may be insufficient, such as for a UE at the cell boundary. Therefore, for SRS transmission at the UE side with N antenna ports, where N is any number larger than 4, the base station and the UE may consider various methods as follows. Hereinafter, SRS resource transmission may be understood as transmission of an SRS according to an SRS resource. In addition, transmission of an SRS antenna port may be understood as transmission of an SRS having properties of each antenna port.

[Method 1-1] Method 1 of using a single-SRS resource

In order to transmit an SRS with N antenna ports, the UE may be configured with a single SRS resource by the base station. The base station may configure, for the UE, a single SRS resource with N antenna ports, in which case, when an SRS is transmitted in a single symbol or multiple symbols of the SRS resource through the N antenna ports, all the N antenna ports may be transmitted in each symbol. As an example, when the UE transmits the SRS resource of the N antenna ports, in which the number $N_s$ of SRS symbols is 4, the UE may transmit the SRS resource through all the N antenna ports in each symbol.

For method 1-1, since current specification support for 1, 2, or 4 antenna ports is all based on a single SRS resource, the definitions of various parameters related to time and frequency resource allocation in Table 17 described above may be used as they are, and accordingly, method 1-1 may correspond to a natural expansion in response to the increasing number of UE antenna ports. However, when based on method 1-1, there may be a problem that the transmission power for each antenna port in one symbol decreases because the UE transmits all the antenna ports in one symbol.

[Method 1-2] Method 2 of using a single-SRS resource

In order to transmit an SRS with N antenna ports, the UE may be configured with a single SRS resource by the base station. The base station may configure, for the UE, a single SRS resource with N antenna ports, and when an SRS is transmitted in one or more symbols configured in the SRS resource, the number of antenna ports used at each symbol transmission may be fewer than or equal to N, and the number of symbols required to transmit the SRS resource through all the N antenna ports may be more than or equal to 1.

In method 1-2, since the SRS resource is transmitted in each symbol through some of all the N antenna ports, the transmission power of antenna ports for each symbol may be increased compared to method 1-1 in which all the N antenna ports are used for transmission in each symbol. However, since transmission through antenna ports in method 1-2 is different from the definition of conventional specifications in which an SRS is transmitted in each symbol through all antenna ports configured for specific SRS resource, the definition of various parameters related to time and frequency resource allocation in Table 17 described above may need to be partially changed or newly defined.

[Method 1-3] Method of using multiple SRS resources

In order to transmit an SRS with N antenna ports, the UE may be configured with multiple SRS resources by the base station. In order to support SRS transmission corresponding to N antenna ports from the UE, the base station may configure, for the UE, M (M>1) SRS resources with N or fewer antenna ports, in which case, when the SRS is transmitted in a single symbol or multiple symbols through the N or fewer antenna ports configured for each SRS resource, both SRS resources may all be transmitted in each symbol.

As an example, if 2 SRS resources having 4 antenna ports for each SRS resource are configured for the UE for SRS transmission through 8 antenna ports, and $N_s$ is configured to be 4 for the two SRS resources, the two SRS resources may all be transmitted through 4 antenna ports in each symbol for the two SRS resources. In this case, the multiple SRS resources may be included in the same SRS resource set, or may be included in respectively different SRS resource sets. Multiple SRS resources configured for SRS transmission through N (>4) antenna ports as described above may be referred to as an SRS resource group. The number N of antenna ports, which may be represented by multiple SRS resources, may be the number of antenna ports more than 4, for example, 6, 8, 12, or 16, and may be represented by SRS resources having 1, 2, or 4 antenna ports. The UE may expect that SRS resources configured by the base station or included in each SRS resource group which may be determined by the specific rule described above may all have the same number of antenna ports (as in the example, each SRS resource may have 4 antenna ports). In addition, a case of having different numbers of antenna ports may not be excluded. As an example, if three SRS resources are configured to express N=8 antenna ports, first and second SRS resources may have 2 antenna ports, and a third SRS resource may have 4 antenna ports.

Unlike the methods based on a single SRS resource supported by the current specifications, method 1-3 enables transmission of multiple SRS resources through N antenna ports, so that the definition of various parameters related to time and frequency resource allocation in Table 17 described above may need to be partially changed or newly defined. However, similar to method 1-2, since the number of antenna ports used for transmission in each symbol of each SRS resource is fewer than or equal to the total number N of antenna ports, the transmission power of each port may increase.

[Method 1-4] Method of selecting among [Method 1-1] to [Method 1-3] described above

In order to transmit an SRS with N antenna ports, the UE may be indicated, semi-statically or dynamically by the base station, to use one of [method 1-1] to [method 1-3] described above. As an example, the UE may be configured with one of [method 1-1] to [method 1-3] described above via higher-layer signaling by the base station and use the same, or may be dynamically indicated with the same via L1 signaling. Alternatively, the UE may be configured with one of two methods, such as one of [method 1-1] and [method 1-2], one of [method 1-1] and [method 1-3], or one of [method 1-2] and [method 1-3], via higher-layer signaling by the base station and use the same, or may be dynamically indicated with the same via L1 signaling. If the UE is positioned within a cell and has sufficient coverage, the base station may configure SRS transmission on N antenna ports based on [method 1-1] for the UE via higher-layer signaling, or may dynamically indicate the same via L1 signaling. The method of dynamic indication via L1 signaling may include indication via a new field in a DCI format, or indication using a reserved code point of a currently existing DCI field, and an SRS request field may be used as an example. The UE may report, as a UE capability to the base station, whether a combination of at least one of [method 1-1] to [method 1-4] described above is supportable. The UE capability may be reported differently depending on a frequency range (FR), or may be reported for each band, each band combination, each feature set, or each feature set per CC. In addition, the aforementioned UE capability may be UE capabilities independent of each other, or may have multiple components within a single UE capability in which whether each method is supported is defined. If the UE supports a combination of at least one of [method 1-1] to [method 1-4] described above, higher-layer signaling "usage" of an SRS resource set may enable codebook and antenna switching. In addition, a case where "usage" is non-codebook and beam management may not be excluded.

When [method 1-3] described above is followed, and if the UE is configured with multiple SRS resources in the same SRS resource set, the maximum number of SRS resources in the SRS resource set, which may be configured for the UE via higher-layer signaling, may be 4 or more. If the UE is configured with multiple SRS resources in different SRS resource sets, the UE may be configured with two or more SRS resource sets, in which "usage" is codebook, via higher-layer signaling.

When the [method 1-3] described above is followed, since the UE uses multiple SRS resources with N antenna ports for SRS transmission, the UE may need to change the definition of a codepoint within an SRS resource indicator (SRI) within DCI formats 0_1 and 0_2 transmitted from the base station in order to schedule codebook-based PUSCH transmission. Each codepoint of the current SRI indicates a single SRS resource, but if the UE is configured, by the base station, to use [method 1-3] described above, the definition of the codepoint of the SRI field may be changed according to the following methods.

[Method 1-3-1] SRS resource group indication

The UE may assume that each codepoint of the SRI field in DCI formats 0_1 and 0_2 indicated by the base station indicates an SRS resource group including multiple SRS resources. As an example, if an SRI has two codepoints, a first codepoint may indicate SRS resource group 0, and a second codepoint may indicate SRS resource group 1. In this case, SRS resource group 0 may include SRS resources 0 and 1, and SRS resource group 1 may include SRS resources 2 and 3. The UE may be configured with these SRS resource groups by the base station via a higher layer.

In addition, when multiple SRS resource are configured in the same SRS resource group by the base station, the UE may determine one group to include a specific number of SRS resources from the lowest SRS resource index in the SRS resource set.

The total number of antenna ports expressed via multiple SRS resources may be configured for each SRS resource set. As an example, if the number of antenna ports in an SRS resource set is configured to be 8, and the total number of SRS resources is configured to be 4, where indexes of the respective SRS resources are 0 to 3, SRS resource indexes 0 and 1 may constitute a first SRS resource group, and SRS resource indexes 2 and 3 may constitute a second SRS resource group. In this case, the first SRS resource group may correspond to the first codepoint of the SRI field, and the second SRS resource group may correspond to the second codepoint.

[Method 1-3-2] Similar to the case of non-codebook, the UE indicating a combination of multiple SRS resources may assume that each code point of the SRI field in DCI formats 0_1 and 0_2 indicated by the base station represents a single SRS resource or a combination of multiple SRS resources. This may be similar to the meaning of the SRI field in DCI formats 0_1 and 0_2 for scheduling of non-codebook-based PUSCH transmission. If 4 SRS resources are configured in an SRS resource set in which "usage" is configured as non-codebook, a total of $2^4-1 = 15$ codepoints may be required for each SRI field in DCI formats 0_1 and 0_2 for scheduling of non-codebook-based PUSCH transmission in order to express all the methods of selecting one to four of the four SRS resources. Similarly to a non-codebook scheme that considers all the methods of selecting subsets from all configured SRS resources in this way, method 1-3-2 may use a method of selecting all or some of subsets.

As an example, when it is assumed that the total number of SRS resources is M, if all the M SRS resources are assumed to have the same number of antenna ports, a combination of only a specific number of SRS resources among the M SRS resources may be considered. As an example, only a method of selecting two out of M may be considered. In this case, the SRI field may have as many codepoints as the methods of selecting two out of M. If it is assumed that the M SRS resources may have different numbers of antenna ports, a case where respective combinations of the SRS resources have the same total number of antenna ports may be generated by considering a combination of a specific number of SRS resources or a combination of another specific number of SRS resources among M. The SRI field may have a codepoint which may indicate a case of a combination of respective SRS resources. As an example, if one SRS resource set is configured 4 SRS resources each having 2 antenna ports and 2 SRS resources each having 4 antenna ports, and if a total of 8 antenna ports are to be expressed using multiple SRS resources, a combination of 2 SRS resources each having 4 antenna ports may be used, or a combination of 1 SRS resource having 4 antenna ports and 2 SRS resources each having 2 antenna ports may be used.

[Method 1-3-3] Indicating one SRS resource and automatically indicating other SRS resources connected to the indicated SRS resource

The UE may assume that each codepoint of the SRI field in DCI format 0_1 and 0_2 indicated by the base station indicates a single SRS resource, and the single SRS resource indicated by each codepoint may be connected to multiple other SRS resources. The total number of SRS ports configured for multiple other SRS resources connected to the single SRS resource may be N. The connection may be established via higher-layer signaling. While the base station and the UE do not change the definition of each codepoint of the SRI field, the base station may indicate one SRS resource to the UE, and may also simultaneously indicate, via higher-layer signaling, multiple SRS resources connected thereto.

The UE may report, as a UE capability to the base station, whether a combination of at least one of [method 1-3-1] to [method 1-3-3] described above is supportable. The UE capability may be reported differently depending on a frequency range (FR), or may be reported for each band, each band combination, each feature set, or each feature set per CC. In addition, the aforementioned UE capability may be UE capabilities independent of each other, or may have multiple components within a single UE capability in which whether each method is supported is defined. For [method 1-3] described above, if the UE receives higher-layer signaling for multiple SRS resources from the base station in order to use [method 1-3-1] to [method 1-3-3], etc. described above, the UE may, among various higher-layer signaling configuration information within SRS resources mentioned in Table 17 from the base station, distinguish higher-layer signaling configuration information, which needs to be configured identically for all the multiple SRS resources required for SRS transmission with N antenna ports, from information that is allowed to be either identical or different between the respective SRS resources.

The UE may expect that, among parameters in Table 17, parameters related to an SRS transmission sequence, such as groupOrSequenceHopping and sequenceId, and a parameter, such as resourceType which indicates periodic, semi-static, or aperiodic SRS resource transmission, may be configured identically for all the multiple SRS resources necessary for SRS transmission with N antenna ports.

In addition, the UE may expect that, among parameters in Table 17, resourceMapping, resourceMapping-r16, and resourceMapping-17 which are information related to SRS time resource allocation, and freqDomainPosition, freqDomainShift, and freqHopping which are information related to frequency resource allocation may be configured either identically or differently for multiple SRS resources necessary for SRS transmission with N antenna ports. In addition, the UE may expect that transmissionComb and transmissionComb-n8-r17 for determining a frequency and a position of a transmission RE of an SRS have the same comb value for multiple SRS resources, and may expect a comb offset to be configured identically or differently. In addition, the UE may expect that a partial factor configured for an RB level partial frequency sounding operation of an SRS also has the same value for multiple SRS resources.

The UE may expect that, among parameters in Table 17, information for determining the transmission beam of an SRS, such as spatialrelationinfo and srs-TCIState-r17, may be configured identically or differently with regard to multiple SRS resources. Particularly, when multiple SRS resources are configured in different SRS resource sets, the UE may expect that the two parameters related to transmission beam determination may be configured differently for the multiple SRS resources.

<Second embodiment: SRS time resource allocation, repeated transmission, and frequency hopping methods>

As an embodiment of the disclosure, descriptions are provided for SRS time resource allocation, repeated transmission, and frequency hopping methods according to the SRS resource configuration and indication methods described above in the embodiment.

According to Table 17, the UE may determine a time domain transmission resource position during frequency hopping of an SRS resource via higher-layer signaling, such as startPosition referring to a transmission start symbol in a slot of the SRS resource, nrofSymbols referring to the number of consecutively transmitted symbols from the transmission start symbol in the slot, and repetitionFactor referring to the number of consecutive symbols having frequency resources at the same position when frequency hopping is performed.

When [method 1-1] in the embodiment is used, that is, when all the N antenna ports are configured for one SRS resource, and the SRS resource is transmitted in each transmission symbol by using all the N antenna ports, the UE may perform the following operations or operations according to a combination of some thereof according to a combination of startPosition, nrofSymbols, and repetitionFactor which are higher-layer signaling for periodic/semi-persistent/aperiodic SRS transmission.

- The UE have higher-layer signaling nrofSymbols-r17 (hereinafter, referred to as $N_s$) configured to 2, 4, 8, 10, 12, or 14 for an aperiodic SRS, and may have repetitionFactor-r17 (hereinafter, referred to as R) configured to 1. When performing frequency hopping, only intra-slot frequency hopping may be possible, and when performing frequency hopping, the number of consecutive symbols having frequency resources of the same position may be 1 (=R).

    ■ The base station may configure the higher-layer signaling for the UE so that relatively small frequency resources are allocated to the UE during SRS transmission in each OFDM symbol, thereby reducing power consumed by the UE (this may cause less power consumption compared to wide frequency resource allocation), and channel estimation at multiple different frequency resource positions may be possible via frequency hopping.

- The UE may have higher-layer signaling $N_s$ configured to a value of 4 or larger for an aperiodic SRS, and may have R configured to a value of 2 or larger, in which case, R may be a divisor of $N_s$. When performing frequency hopping, only intra-slot frequency hopping may be possible, and when performing frequency hopping, the number of consecutive symbols having frequency resources of the same position may be R.

    ■ The base station may configure the higher-layer signaling for the UE so that, when the UE is positioned in a shaded area within the coverage of the base station, and thus channel estimation performance of the base station via reception of an SRS transmitted from the UE is degraded, channel estimation accuracy may be improved via SRS transmission on multiple OFDM symbols at a specific frequency position of the UE, and channel estimation at multiple different frequency resource positions may be possible via frequency hopping.

- The UE may have $N_s$ configured to 1 for an aperiodic/semi-persistent SRS, and may have R configured to 1. When performing frequency hopping, only inter-slot frequency hopping may be possible, and when performing frequency hopping, the number of consecutive symbols having frequency resources of the same position may be 1 (=R).

    ■ The base station may configure the higher-layer signaling for the UE so that, if the UE is positioned at a location in a good channel state within the coverage of the base station, and thus channel estimation performance of the base station via reception of an SRS transmitted from the UE is degraded, valid channel estimation performance may be ensured even via SRS transmission from the UE in only a single OFDM symbol. Despite being a periodically transmitted signal, the amount of time resource consumption therefor may be reduced, and the time resources saved accordingly may be used for other uplink and downlink scheduling purposes.

- The UE may have higher-layer signaling $N_s$ configured to a value of 4 or larger for a periodic/semi-permanent SRS, and may have R configured to a value of 2 or larger, in which case, R may be a divisor of $N_s$. When performing frequency hopping, inter-slot or intra-slot frequency hopping may be possible, and when performing frequency hopping, the number of consecutive symbols having frequency resources of the same position may be R.

■ The base station may configure the higher-layer signaling for the UE so that channel estimation accuracy may be improved via SRS transmission on multiple OFDM symbols at a specific frequency position of the UE, and channel estimation at multiple different frequency resource positions may be possible via frequency hopping.

- The UE may have higher-layer signaling $N_s$ configured to a value of 4 or larger for a periodic/semi-permanent SRS, and may have R configured to a value equal to $N_s$. When performing frequency hopping, inter-slot frequency hopping may be possible, and when performing frequency hopping, the number of consecutive symbols having frequency resources at the same position in each slot may be R (=$N_s$).

■ The base station may configure the higher-layer signaling for the UE so that the UE performs repeated transmission using multiple time resources at the same frequency resource position, thereby improving channel estimation accuracy for the frequency resource position during SRS reception by the base station.

When [method 1-2] in the embodiment is used, that is, when N antenna ports are configured for one SRS resource, and some of the N antenna ports are transmitted in each transmission symbol, the UE may perform the following operations by considering the definition of startPosition, nrofSymbols, and repetitionFactor which are higher-layer signaling.

[Time resource operation 2-1]

For the definition of $N_s$, the UE may consider, as before, that $N_s$ refers to the number of consecutive symbols in which the SRS resource is transmitted. When the UE is configured with N antenna ports for one SRS resource, and the SRS resource is transmitted through some of the N antenna ports in each transmission symbol, if it is assumed that M symbols are required for transmission of the SRS resource through all the N antenna ports, the UE may expect to be configured with $N_s$ for the SRS resource, where $N_s$ has M as its divisor.

As an example, if it is assumed that the UE is configured with N=8 antenna ports, and that an SRS resource is transmitted through 4 antenna ports in each transmission symbol, and the SRS resource is transmitted through all the N=8 antenna ports via M=2 symbols, the UE may be configured with one of $N_s$=2, 4, 8, 10, 12, and 14, which are multiples of M=2, for the SRS resource. If $N_s$ is 4, the number of consecutive symbols in which the SRS resource is transmitted is 4, and it may be expected that the SRS resource may be transmitted in a first symbol and a third symbol through 4 (e.g., SRS antenna ports 0 to 3) out of the total of 8 antenna ports, and that the SRS resource may be transmitted in a second symbol and a fourth symbol through the other 4 (e.g., SRS antenna ports 4 to 7) out of the total of 8 antenna ports. As another method, it may be expected that the SRS resource may be transmitted in the first two symbols through 4 (e.g., SRS antenna ports 0 to 3) out of the total of 8 antenna ports, and that the SRS resource may be transmitted in the remaining two symbols through the other 4 (e.g., SRS antenna ports 4 to 7) out of the total of 8 antenna ports. (The disclosure may not be limited to the examples described above, and another example in which 4 out of the total of 8 antenna ports are configured to SRS antenna ports 0, 2, 4, and 6 may not be excluded.)

For the definition of R, the UE may assume, as before, that R refers to the number of consecutive symbols having frequency resources of the same position, in which the SRS resource is transmitted. Therefore, as described above, a value of R that may be configured for the UE may be a divisor of $N_s$. In this case, when the UE is configured with N antenna ports for one SRS resource, and the SRS resource is transmitted through some of the N antenna ports in each transmission symbol, if it is assumed that M symbols are required for transmission of the SRS resource through all the N antenna ports, the minimum value of R may be 1 or M.

- A case where the minimum value of R configurable for the UE is 1 may indicate that the number of consecutive symbols having the same frequency resource is 1, in which case, only some of the N antenna ports may be transmitted in one symbol so that an SRS corresponding to the antenna ports may be transmitted at different frequency positions for each group of some specific antenna ports (transmitted in a specific symbol) among the N antenna ports. Therefore, since the SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

- A case where the minimum value of R configurable for the UE is M may indicate that the number of consecutive symbols having the same frequency resource is M, in which case, all the N antenna ports may be transmitted during M symbols, so that an SRS corresponding to the N antenna ports may be transmitted at the same frequency position.

Therefore, when the base station receives the SRS and performs channel estimation, channel information for all the N antenna ports may be acquired at all SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The minimum value of R configurable for the UE may be configured to 1 or M via higher-layer signaling, indicated via L1 signaling, notified of via a combination of higher-layer signaling and L1 signaling, activated/deactivated via MAC-CE signaling, or defined within specifications so as to enable operations.

Based on time resource operation 2-1 above, the UE may perform the following operations or operations according to a combination of some thereof according to a combination of startPosition, nrofSymbols, and repetitionFactor which are higher-layer signaling for periodic/semi-persistent/aperiodic SRS transmission.

- The UE may have $N_s$ configured to 2, 4, 8, 10, 12, or 14 for an aperiodic SRS, and may have R configured to 1 or M, and M may be a divisor of $N_s$. When the UE performs frequency hopping, only intra-slot frequency hopping may be possible, and when performing frequency hopping, the number of consecutive symbols having frequency resources at the same position may be 1 or M (=R). Determination of the R value may follow one of the schemes described above.

  ▪ If M is a divisor of $N_s$ larger than 1 (e.g., M=2), and R is 1, SRS transmission on some of all the N antenna ports is performed at a specific frequency position, and SRS transmission on the remaining some of all the N antenna ports is performed at a different frequency position. That is, since an SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.
  ▪ If M is a divisor of $N_s$ larger than 1 (e.g., M=2), and R is M, SRS transmission on some of all the N antenna ports is performed at a specific frequency position, and SRS transmission on the remaining some of all the N antenna ports is performed at the same frequency position. That is, the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The UE may have higher-layer signaling $N_s$ configured to a value of 4 or larger for an aperiodic SRS, and may have R configured to a value of 2 or larger or to a value of M or larger, in which case, R and/or M may be a divisor of $N_s$. When performing frequency hopping, only intra-slot frequency hopping may be possible, and when performing frequency hopping, the number of consecutive symbols having frequency resources of the same position may be R.

  ▪ If M is a divisor of $N_s$ larger than 1 (e.g., M=2), and R is 2, SRS transmission on some of all the N antenna ports is performed at a specific frequency position, and SRS transmission on the remaining some of all the N antenna ports is performed at the same frequency position. That is, the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
  ▪ If M is a divisor of $N_s$ larger than 1 (e.g., M=2), and R is 4, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have $N_s$ configured to M for a periodic/semi-persistent SRS, and may have R configured to M. When performing frequency hopping, only inter-slot frequency hopping may be possible, and when performing frequency hopping, the number of consecutive symbols having frequency resources of the same position may be M (=R).

  ▪ The base station may configure higher-layer signaling for the UE as described above so that time resource consumption is minimized despite periodic SRS transmission, and SRS transmission on all the N antenna ports is split into SRS transmissions over M symbols, each corresponding to a different antenna port, thereby obtaining power allocation gain per port, and obtaining more multiplexing gain with SRS transmission from other UEs.

- The UE may have higher-layer signaling $N_s$ configured to a value of 4 or larger for a periodic/semi-persistent SRS, and may have R configured to a value of 2 or larger or to a value of M or greater, in which case, R and/or M may be a divisor of $N_s$. When performing frequency hopping, intra-slot or inter-slot frequency hopping may be possible, and when performing frequency hopping, the number of consecutive symbols having frequency resources of the same position may be R.

  ▪ If M is a divisor of $N_s$ larger than 1 (e.g., M=2), and R is 2, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
  ▪ If M is a divisor of $N_s$ larger than 1 (e.g., M=2), and R is 4, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have higher-layer signaling $N_s$ configured to a value of 4 or larger for a periodic/semi-persistent SRS, and may have R configured to a value equal to $N_s$. When performing frequency hopping, intra-slot or inter-slot frequency hopping may be possible, and when performing frequency hopping, the number of consecutive symbols having frequency resources at the same position may be R (=$N_s$).

  ▪ The base station may configure the higher-layer signaling for the UE so that the UE performs repeated transmission using multiple time resources at the same frequency resource position, thereby improving channel estimation accuracy for the frequency resource position during SRS reception by the base station.

[Time resource operation 2-2]

If the number of symbols required for transmission of all the antenna ports of the SRS resource is defined as M, the UE may understand that $N_s$ is defined as a value indicating how many times the M symbols used to transmit the SRS resource are used. That is, $N_s$ may not be defined as the number of consecutive symbols used for transmitting the SRS resource, as traditionally defined, but may be defined as information on how many times the M symbols units, which are used for transmission of all the N antenna ports configured in the SRS resource, are consecutively used. As an example, if it is assumed that the UE is configured with N=8 antenna ports, and that an SRS resource is transmitted through 4 antenna ports in each transmission symbol, and the SRS resource is transmitted through all the N=8 antenna ports in M=2 symbols, the UE may be configured with one of $N_s$=1, 2, 4, 5, 6, and 7 as information on how many times M=2 symbol units are used consecutively for the SRS resource. As an example, if $N_s$ is 2, the total number of consecutive symbols in which the SRS resource is transmitted may be 4, and this may indicate that M=2 symbol units have been used twice consecutively.

In addition, it may be expected that the SRS resource may be transmitted in the first and third symbols through 4 (e.g., SRS antenna ports 0 to 3) out of the total of 8 antenna ports, and that the SRS resource may be transmitted in the second and fourth symbols through the other 4 (e.g., SRS antenna ports 4 to 7) out of the total of 8 antenna ports. As another method, it may be expected that the SRS resource may be transmitted in the first two symbols through 4 (e.g., SRS antenna ports 0 to 3) out of the total of 8 antenna ports, and that the SRS resource may be transmitted in the remaining two symbols through the other 4 (e.g., SRS antenna ports 4 to 7) out of the total of 8 antenna ports. (The disclosure may not be limited to the examples described above, and another example in which 4 out of the total of 8 antenna ports are configured to SRS antenna ports 0, 2, 4, and 6 may not be excluded.)

For the definition of R, the UE may assume, as before, that R refers to the number of consecutive symbols having frequency resources of the same position, in which the SRS resource is transmitted. Therefore, as described above, a value of R that may be configured for the UE may be a divisor of $N_s$. In this case, when the UE is configured with N antenna ports for one SRS resource, and some of the N antenna ports are transmitted in each transmission symbol, if it is assumed that M symbols are required to transmit all the N antenna ports, the minimum value of R may be 1 or M.

- A case where the minimum value of R configurable for the UE is 1 may indicate that the number of consecutive symbols having the same frequency resource is 1, in which case, only some of the N antenna ports may be transmitted in one symbol so that an SRS corresponding to the antenna ports may be transmitted at different frequency positions for each group of some specific antenna ports (transmitted in a specific symbol) among the N antenna ports. Therefore, since the SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

- A case where the minimum value of R configurable for the UE is M may indicate that the number of consecutive symbols having the same frequency resource is M, in which case, all the N antenna ports may be transmitted during M symbols, so that the SRS corresponding to the N antenna ports may be transmitted at the same frequency position. Therefore, when the base station receives the SRS and performs channel estimation, channel information for all the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The minimum value of R configurable for the UE may be configured to 1 or M via higher-layer signaling, indicated via L1 signaling, notified of via a combination of higher-layer signaling and L1 signaling, activated/deactivated via MAC-CE signaling, or defined within specifications so as to enable operations.

Based on time resource operation 2-2 above, the UE may perform the following operations or operations according to a combination of some thereof according to a combination of startPosition, nrofSymbols, and repetitionFactor which are higher-layer signaling for periodic/semi-persistent/aperiodic SRS transmission.

- The UE may have $N_s$ configured to 1, 2, 4, 5, 6, or 7 for an aperiodic SRS, and may have R configured to 1 or M. When performing frequency hopping, only intra-slot frequency hopping may be possible, and when performing frequency hopping, the number of consecutive symbols having frequency resources at the same position may be 1 or M (=R). Determination of the R value may follow one of the schemes described above.

   ▪ If M is 2 and R is 1, SRS transmission on some of all the N antenna ports is performed at a specific frequency position, SRS transmission on the remaining some of all the N antenna ports is performed at a different frequency position, so that the SRS corresponding to all the N antenna ports may not be transmitted at the same frequency position. That is, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

   ▪ If M is 2 and R is M, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The UE may have higher-layer signaling $N_s$ configured to a value of 2 or larger (= one of 2, 4, 5, 6, and 7) for an aperiodic SRS, and may have R configured to a value of 2 or larger or to a value of M or larger. When performing frequency hopping, only intra-slot frequency hopping may be possible, and when performing frequency hopping, the number of consecutive symbols having frequency resources of the same position may be R.

  ▪ If M is 2 and R is 2, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
  ▪ If M is 2 and R is 4, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have $N_s$ configured to M for a periodic/semi-persistent SRS, and may have R configured to M. When performing frequency hopping, only inter-slot frequency hopping may be possible, and when performing frequency hopping, the number of consecutive symbols having frequency resources of the same position may be M (=R).

  ▪ The base station may configure higher-layer signaling for the UE as described above so that time resource consumption is minimized despite periodic SRS transmission, and SRS transmission on all the N antenna ports is split into SRS transmissions over M symbols, each corresponding to a different antenna port, thereby obtaining power allocation gain per port, and obtaining more multiplexing gain with SRS transmission from other UEs.

- The UE may have higher-layer signaling $N_s$ configured to a value of 2 or larger (= one of 2, 4, 5, 6, and 7) for a periodic/semi-persistent SRS, and may have R configured to a value of 2 or larger or to a value of M or larger. When performing frequency hopping, intra-slot or inter-slot frequency hopping may be possible, and when performing frequency hopping, the number of consecutive symbols having frequency resources of the same position may be R.

  ▪ If M is 2 and R is 2, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
  ▪ If M is 2 and R is 4, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have higher-layer signaling $N_s$ configured to a value of 2 or larger (= one of 2, 4, 5, 6, and 7) for a periodic/semi-persistent SRS, and may have R configured to a value equal to $M*N_s$. When performing frequency hopping, intra-slot or inter-slot frequency hopping may be possible, and when performing frequency hopping, the number of consecutive symbols having frequency resources at the same position may be R (=$M*N_s$).

  ▪ The base station may configure the higher-layer signaling for the UE so that the UE performs repeated transmission using multiple time resources at the same frequency resource position, thereby improving channel estimation accuracy for the frequency resource position during SRS reception by the base station.

When [method 1-3] in the embodiment is used, that is, when N antenna ports are configured across all multiple SRS resources, and some of the N antenna ports are configured for each SRS resource for transmission, the UE may perform the following operations by considering the definition of startPosition, nrofSymbols, and repetitionFactor which are higher-layer signaling.

[Time resource operation 3-1]

The UE may configure the total number of symbols, in which multiple SRS resources are transmitted, to $N_s$ of each SRS resource. If each of n SRS resources is transmitted in m symbols, $N_s$ may be n*m, and $N_s$ in each SRS resource may be configured to the same value. If the UE has been configured with the N antenna ports or configured with N/n antenna ports (where n may be a divisor of N) for each of the multiple SRS resources, and some of the N antenna ports are transmitted for each SRS resource, if it is assumed that M (M may be smaller than or equal to m) symbols are required for each SRS resource for transmission through all the N antenna ports (i.e., a total of n*M OFDM symbols are required to transmit all the N antenna ports), the UE may expect to be configured with $N_s$ that has n, m, and M as its divisors for each SRS resource.

As an example, if the UE is configured with two SRS resources capable of representing N=8 antenna ports, and each SRS resource is transmitted in m=2 symbols, the UE may be configured with one of $N_s$=2, 4, 8, 10, 12, and 14 for each of the multiple SRS resources, where m=2 is a divisor of $N_s$. If $N_s$ is 4, the total number of symbols in which multiple SRS resources are transmitted is 4, and it may be expected that, if 4 (e.g., SRS antenna ports 0 to 3) out of the total of 8 antenna ports are configured for a first SRS resource among two SRS resources, the SRS resource (first SRS resource) is transmitted in the first and third symbols, and if the other 4 (e.g., SRS antenna ports 4 to 7) out of the total of 8 antenna ports are configured for a second SRS resource, the SRS resource (second SRS resource) is transmitted in the second and fourth symbols. As another method, the UE may expect that the first SRS resource is transmitted in the first two symbols through 4 (e.g., SRS antenna ports 0 to 3) out of the total of 8 antenna ports, and that the second SRS resource may be transmitted in the remaining two symbols through the other 4 (e.g., SRS antenna ports 4 to 7) out of the total of 8 antenna ports. (The disclosure may not be limited to the examples described above, and another example in which 4 out of the total of 8 antenna ports are configured to SRS antenna ports 0, 2, 4, and 6 may not be excluded.)

For the definition of R, the UE may assume, as before, that R refers to the number of consecutive symbols having frequency resources of the same position, in which the SRS resource is transmitted. Therefore, as described above, a value of R that may be configured for the UE may be a divisor of $N_s$. Assuming that the UE has N antenna ports configured for multiple SRS resources or has N/n antenna ports configured with regard to each SRS resource (n may be a divisor of N), that SRS resources are transmitted through some of the N antenna ports with regard to each SRS resource, and that M (M may be smaller than or equal to m) symbols are necessary with regard to each SRS resource to transmit SRS resources through all of N antenna ports (that is, a total of n*M OFDM symbols), the minimum value of R may then be 1 or M.

- A case where the minimum value of R configurable for the UE is 1 may indicate that the number of consecutive symbols having the same frequency resource is 1, in which case, only some of the N antenna ports may be transmitted in one symbol so that an SRS corresponding to the antenna ports may be transmitted at different frequency positions for each group of some specific antenna ports (transmitted in a specific symbol) among the N antenna ports. Therefore, since the SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.
- A case where the minimum value of R configurable for the UE is M may indicate that the number of consecutive symbols having the same frequency resource is M, in which case, all the N antenna ports may be transmitted during a total of n*M symbols in consideration of n SRS resources, so that the SRS corresponding to the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
- The minimum value of R configurable for the UE may be configured to 1 or M via higher-layer signaling, indicated via L1 signaling, notified of via a combination of higher-layer signaling and L1 signaling, activated/deactivated via MAC-CE signaling, or defined within specifications so as to enable operations.

Based on time resource operation 3-1 above, the UE may perform the following operations or operations according to a combination of some thereof according to a combination of startPosition, nrofSymbols, and repetitionFactor which are higher-layer signaling for periodic/semi-persistent/aperiodic SRS transmission.

- The UE may have $N_s$ configured to 2, 4, 8, 10, 12, or 14 for an aperiodic SRS, and may have R configured to 1 or M, and M may be a divisor of $N_S$. When performing frequency hopping, only intra-slot frequency hopping may be possible, and when performing frequency hopping, the number of consecutive symbols having frequency resources at the same position may be 1 or M (=R). Determination of the R value may follow one of the schemes described above.

  ■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 1 is considered. In this case, SRS transmission on some of all the N antenna ports is performed at a specific frequency position, and SRS transmission on the remaining some of all the N antenna ports is performed at a different frequency position. That is, since the SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

  ■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is M is considered. In this case, SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The UE may have higher-layer signaling $N_s$ configured to a value of 4 or larger for an aperiodic SRS, and may have R configured to a value of 2 or larger or to a value of M or larger, in which case, R or M may be a divisor of $N_s$. When performing frequency hopping, only intra-slot frequency hopping may be possible, and when performing frequency hopping, the number of consecutive symbols having frequency resources of the same position may be R.

  ■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 2 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

  ■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 4 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have $N_s$ configured to n*M (i.e., m=M may be satisfied) for a periodic/semi-persistent SRS, and may have R configured to M. When performing frequency hopping, only inter-slot frequency hopping may be possible, and when performing frequency hopping, the number of consecutive symbols having frequency resources of the same position may be M (=R).

   ▪ The base station may configure higher-layer signaling for the UE as described above so that time resource consumption is minimized despite periodic SRS transmission, and SRS transmission on all the N antenna ports is split into SRS transmissions over M symbols, each corresponding to a different antenna port, thereby obtaining power allocation gain per port, and obtaining more multiplexing gain with SRS transmission from other UEs.

- The UE may have higher-layer signaling $N_s$ configured to a value of 4 or larger for a periodic/semi-persistent SRS, and may have R configured to a value of 2 or larger or to a value of M or greater, in which case, R or M may be a divisor of $N_s$. When performing frequency hopping, intra-slot or inter-slot frequency hopping may be possible, and when performing frequency hopping, the number of consecutive symbols having frequency resources of the same position may be R.

   ▪ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 2 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.
   ▪ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 4 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have higher-layer signaling $N_s$ configured to a value of 4 or larger for a periodic/semi-persistent SRS, and may have R configured to a value equal to $N_s$. When performing frequency hopping, inter-slot frequency hopping may be possible, and when performing frequency hopping, the number of consecutive symbols having frequency resources at the same position may be R (=$N_s$).

   ▪ The base station may configure the higher-layer signaling for the UE so that the UE performs repeated transmission using multiple time resources at the same frequency resource position, thereby improving channel estimation accuracy for the frequency resource position during SRS reception by the base station.

[Time resource operation 3-2]

The UE may configure the number of symbols, in which each of multiple SRS resources is transmitted, to $N_s$ of each SRS resource. When the UE is configured with N antenna ports or N/n antenna ports for each of n SRS resources, and an SRS resource is transmitted through some of the N antenna ports for each SRS resource, if it is assumed that M symbols are required for each SRS resource for transmission of the SRS resource through all the N antenna ports, the UE may expect all SRS resources to be transmitted through the N antenna ports out of the total of M*$N_s$ symbols.

As an example, if the UE is configured with n=2 SRS resources capable of representing N=8 antenna ports, and each SRS resource is transmitted through 4 antenna ports in $N_s$=2 symbols, the UE may be configured with one of $N_s$=1, 2, 4, 5, 6, and 7 for each of the multiple SRS resources. In this case, if $N_s$ is 2, the total number of symbols in which two SRS resources are transmitted is 4, and it may be expected that, if 4 (e.g., SRS antenna ports 0 to 3) out of the total of 8 antenna ports are configured for a first SRS resource among the two SRS resources, the SRS resource (first SRS resource) is transmitted in the first and third symbols, and if the other 4 (e.g., SRS antenna ports 4 to 7) out of the total of 8 antenna ports are configured for a second SRS resource, the SRS resource (second SRS resource) is transmitted in the second and fourth symbols. As another method, the UE may expect that the first SRS resource is transmitted in the first two symbols through 4 (e.g., SRS antenna ports 0 to 3) out of the total of 8 antenna ports, and that the second SRS resource may be transmitted in the remaining two symbols through the other 4 (e.g., SRS antenna ports 4 to 7) out of the total of 8 antenna ports. (The disclosure may not be limited to the examples described above, and another example in which 4 out of the total of 8 antenna ports are configured to SRS antenna ports 0, 2, 4, and 6 may not be excluded.)

For the definition of R, the UE may assume, as before, that R refers to the number of consecutive symbols having frequency resources of the same position, in which the SRS resource is transmitted. Therefore, as described above, a value of R that may be configured for the UE may be a divisor of $N_s$. In this case, when the UE is configured with N antenna ports or N/n antenna ports for each of n SRS resources, and some of the N antenna ports are transmitted for each SRS resource, if it is assumed that M OFDM symbols are required for each SRS resource for transmission of all the N antenna ports, the minimum value of R may be 1 or M.

- A case where the minimum value of R configurable for the UE is 1 may indicate that the number of consecutive symbols having the same frequency resource is 1, in which case, only some (transmitted in a specific symbol) of the N antenna ports may be transmitted in one symbol so that an SRS corresponding to the antenna ports may be transmitted at different frequency positions for each group of some specific antenna ports among the N antenna ports. Therefore, since the SRS corresponding to all the N antenna ports cannot be transmitted at the same frequency position, when the base station receives the SRS and performs channel estimation, channel information of a specific antenna port may be absent at a certain frequency resource position, so that the base station may need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

- A case where the minimum value of R configurable for the UE is M may indicate that the number of consecutive symbols having the same frequency resource is M, in which case, all the N antenna ports may be transmitted during M symbols, so that an SRS corresponding to the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The minimum value of R configurable for the UE may be configured to 1 or M via higher-layer signaling, indicated via L1 signaling, notified of via a combination of higher-layer signaling and L1 signaling, activated/deactivated via MAC-CE signaling, or defined within specifications so as to enable operations.

Based on time resource operation 3-2 above, the UE may perform the following operations or operations according to a combination of some thereof according to a combination of startPosition, nrofSymbols, and repetitionFactor which are higher-layer signaling for periodic/semi-persistent/aperiodic SRS transmission.

- The UE may have $N_s$ configured to 1, 2, 4, 5, 6, or 7 for an aperiodic SRS, and may have R configured to 1 or M. When performing frequency hopping, only intra-slot frequency hopping may be possible, and when performing frequency hopping, the number of consecutive symbols having frequency resources at the same position may be 1 or M (=R). Determination of the R value may follow one of the schemes described above.

  ■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 1 is considered. SRS transmission on some of all the N antenna ports is performed at a specific frequency position, and SRS transmission on the remaining some of all the N antenna ports is performed at a different frequency position, so that the SRS corresponding to all of the N antenna ports cannot be transmitted at the same frequency position. Therefore, when the base station receives the SRS and performs channel estimation, channel information of a specific antenna port may be absent at a certain frequency resource position, and the base station may thus need to estimate channel information of the frequency position, at which channel information is absent, by using a frequency position at which channel information exists. In this case, a frequency band of SRS transmission, which the base station may estimate may widen, but channel estimation performance at the frequency position where channel information of the specific antenna port is absent may be degraded.

▪ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 2 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

- The UE may have higher-layer signaling $N_s$ configured to a value of 2 or larger (= one of 2, 4, 5, 6, and 7) for an aperiodic SRS, and may have R configured to a value of 2 or larger or to a value of M or larger. When performing frequency hopping, only intra-slot frequency hopping may be possible, and when performing frequency hopping, the number of consecutive symbols having frequency resources of the same position may be R.

    ▪ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 2 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

    ▪ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 4 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions, and improvement of the channel estimation performance in the base station may also be possible by repeated SRS transmission based on the value of R.

- The UE may have $N_s$ configured to 1 for a periodic/semi-persistent SRS, and may have R configured to 1. When performing frequency hopping, only inter-slot frequency hopping may be possible, and when performing frequency hopping, the number of consecutive symbols having frequency resources of the same position may be R.

    ▪ The base station may configure higher-layer signaling for the UE as described above so that time resource consumption is minimized despite periodic SRS transmission, and SRS transmission on all the N antenna ports is split into SRS transmissions over M symbols, each corresponding to a different antenna port, thereby obtaining power allocation gain per port, and obtaining more multiplexing gain with SRS transmission from other UEs.

- The UE may have higher-layer signaling $N_s$ configured to a value of 2 or larger (= one of 2, 4, 5, 6, and 7) for a periodic/semi-persistent SRS, and may have R configured to a value of 2 or larger or to a value of M or larger. When performing frequency hopping, intra-slot or inter-slot frequency hopping may be possible, and when performing frequency hopping, the number of consecutive symbols having frequency resources of the same position may be R.

■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 2 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for the N antenna ports may be acquired at all the SRS transmission frequency positions. In this case, the frequency band of SRS transmission, which the base station may estimate, decreases compared to the case where the minimum value of R is 1, but the channel estimation performance may be improved because all the antenna ports are transmitted at all the SRS transmission frequency positions.

■ A case where n (the number of SRS resources required for SRS transmission on the total of N antenna ports) is 2, m (the number of OFDM symbols in which SRS resources are transmitted) is 2, M (the number of OFDM symbols required for SRS transmission on N/n antenna ports configured for each SRS resource among the total of N antenna ports) is 2, and R is 4 is considered. SRS transmission on some of all the N antenna ports is performed at a specific frequency position, and SRS transmission on the remaining some of all the N antenna ports is performed at the same frequency position, so that the SRS corresponding to all the N antenna ports may be transmitted at the same frequency position. Therefore, when the base station receives the SRS and performs channel estimation, channel information for all the N antenna ports may be acquired at all the SRS transmission frequency positions, and improvement of the channel estimation performance in the base station may also be possible by repeated SRS transmission based on the value of R.

- The UE may have higher-layer signaling $N_s$ configured to a value of 2 or larger (= one of 2, 4, 5, 6, and 7) for a periodic/semi-persistent SRS, and may have R configured to a value equal to $M*N_s$. When performing frequency hopping, intra-slot or inter-slot frequency hopping may be possible, and when performing frequency hopping, the number of consecutive symbols having frequency resources at the same position may be R (=$M*N_s$).

■ The base station may configure the higher-layer signaling for the UE so that the UE performs repeated transmission using multiple time resources at the same frequency resource position, thereby improving channel estimation accuracy for the frequency resource position during SRS reception by the base station.

The UE may report, as a UE capability to the base station, whether a combination of at least one of [time resource operation 2-1], [time resource operation 2-2], [time resource operation 3-1], and [time resource operation 3-2] described above is supportable. The UE capability may be reported differently depending on a frequency range (FR), or may be reported for each band, each band combination, each feature set, or each feature set per CC. In addition, the aforementioned UE capability may be UE capabilities independent of each other, or may have multiple components within a single UE capability in which whether each method is supported is defined. A combination of at least one of [time resource operation 2-1], [time resource operation 2-2], [time resource operation 3-1], and [time resource operation 3-2] described above may be configured for the UE by the base station via higher-layer signaling, indicated via L1 signaling, notified of via a combination of higher-layer signaling and L1 signaling, activated/deactivated via MAC-CE signaling, or defined within specifications so as to enable operations.

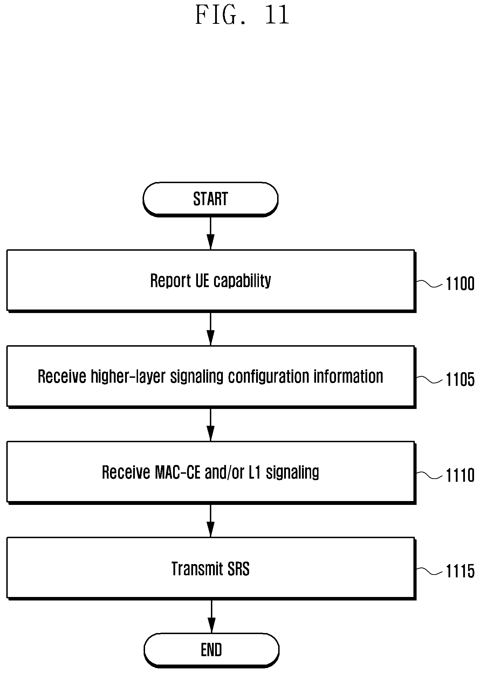

FIG. 11 is a diagram illustrating a UE operation for SRS transmission according to an embodiment of the disclosure.

A UE may report 1100 a UE capability to a base station. The UE capability report may be a combination of at least one of UE capabilities mentioned in the aforementioned embodiments. As an example, the UE capability reported by the UE may include at least one of UE capabilities indicating whether [method 1-1] to [method 1-4] are supported, whether [method 1-3-1] to [method 1-3-3] are supported, and whether [time resource operation 2-1], [time resource operation 2-2], [time resource operation 3-1], and [time resource operation 3-2] are supported.

Then, the UE may receive 1105 higher-layer signaling configuration information from the base station. The higher-layer signaling may be a combination of at least one piece of higher-layer signaling configuration information mentioned in the aforementioned embodiments. As an example, the higher-layer signaling may be related to at least one of [method 1-1] to [method 1-4], [method 1-3-1] to [method 1-3-3], and [time resource operation 2-1], [time resource operation 2-2], [time resource operation 3-1], and [time resource operation 3-2] described above.

The UE may additionally receive 1110 MAC-CE and/or L1 signaling from the base station. As an example, the MAC-CE and/or L1 signaling may be related to at least one of [method 1-1] to [method 1-4], [method 1-3-1] to [method 1-3-3], and [time resource operation 2-1], [time resource operation 2-2], [time resource operation 3-1], and [time resource operation 3-2] described above. The UE may transmit 1115 an SRS with N antenna ports, based on indications received from the base station via the aforementioned higher-layer signaling, MAC CE, and/or L1 signaling.

Respective operations described in FIG. 11 may be performed in a modified order, with additional operations, or with described operations omitted.

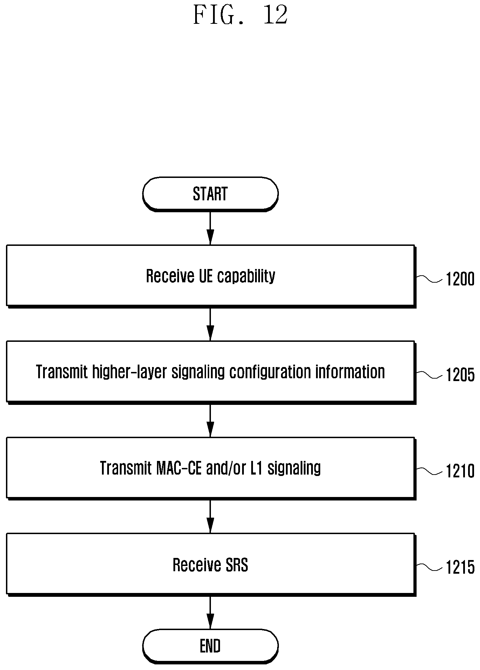

FIG. 12 is a diagram illustrating a base station operation for SRS reception according to an embodiment of the disclosure.

A base station may receive 1200 a UE capability from a UE. The UE capability report may be a combination of at least one of UE capabilities mentioned in the aforementioned embodiments. As an example, the UE capability reported by the UE may include at least one of UE capabilities indicating whether [method 1-1] to [method 1-4] are supported, whether [method 1-3-1] to [method 1-3-3] are supported, and whether [time resource operation 2-1], [time resource operation 2-2], [time resource operation 3-1], and [time resource operation 3-2] are supported.

Then, the base station may transmit 1205 higher-layer signaling configuration information to the UE. The higher-layer signaling may be a combination of at least one piece of higher-layer signaling configuration information mentioned in the aforementioned embodiments. As an example, the higher-layer signaling may be related to at least one of [method 1-1] to [method 1-4], [method 1-3-1] to [method 1-3-3], and [time resource operation 2-1], [time resource operation 2-2], [time resource operation 3-1], and [time resource operation 3-2] described above.

The base station may additionally transmit 1210 MAC-CE and/or L1 signaling to the UE. As an example, the MAC-CE and/or L1 signaling may be related to at least one of [method 1-1] to [method 1-4], [method 1-3-1] to [method 1-3-3], and [time resource operation 2-1], [time resource operation 2-2], [time resource operation 3-1], and [time resource operation 3-2] described above. The base station may receive 1215 an SRS with N antenna ports transmitted by the UE, based on information indicated via the aforementioned higher-layer signaling, MAC CE, and/or L1 signaling.

Respective operations described in FIG. 12 may be performed in a modified order, with additional operations, or with described operations omitted.

<(2-1)th embodiment: 8-port SRS power control method>

As an embodiment of the disclosure, an 8-port SRS power control method is described. This embodiment may operate in combination with other embodiments.

When transmitting an SRS with N antenna ports based on [Method 1-2], a UE may be configured with a single SRS resource by the base station, and if a time domain multiplexing (TDM)-based SRS antenna port mapping method is used within an SRS resource via higher-layer signaling, the number of SRS antenna ports that the UE transmits in each symbol may be fewer than or equal to N, and the number of symbols required to transmit the SRS resource through all N antenna ports may be equal to 1 or more. For example, when the UE is configured with an SRS resource with N=8 by the base station via higher-layer signaling, and the TDM-type SRS antenna port mapping method is configured in the SRS resource, the UE may perform SRS transmission through 8 antenna ports by using two symbols, the UE may perform SRS transmission corresponding to 4 antenna ports in a first symbol, and perform, in a second symbol, SRS transmission corresponding to the remaining 4 antenna ports that are different from the 4 antenna ports of the first symbol. If the UE is not configured with TDM for a specific SRS resource where N=8, the UE may perform the following operations.

- The UE may perform SRS transmission corresponding to all 8 antenna ports in each symbol among all symbols configured for SRS transmission.
- The UE may determine an SRS transmission power per antenna port by dividing a value (e.g., in mW or W), which is obtained by converting an SRS transmission power in dBm determined based on Equation 4 below into a linear scale, by N=8 that is the total number of antenna ports. If the UE is configured with TDM for a specific SRS resource where N=8, the UE may perform the following operations.
- The UE may perform SRS transmission corresponding to 4 different antenna ports by using 2 consecutive symbols among all the symbols configured for SRS transmission.
- The UE may determine an SRS transmission power per antenna port by dividing a value (e.g., in mW or W), which is obtained by converting an SRS transmission power in dBm determined based on Equation 4 below into a linear scale, by 4 that is the number of SRS antenna ports configured for each symbol. This operation may also be performed when an SRS transmission power is determined based on Equation 2 or Equation 3.
- If the UE reports a specific UE capability, the UE may determine an SRS transmission power per antenna port by dividing a value (e.g., in mW or W), which is obtained by converting an SRS transmission power in dBm determined based on Equation 4 below into a linear scale, by 4 that is the number of SRS antenna ports configured for each symbol. In this case, the specific UE capability may indicate that the UE is able to transmit an SRS (or uplink signal) in each symbol by using the maximum transmission power of the UE (e.g., $P_{CMAX,f,c}(i)$ in Equation 4 below), which may indicate that the UE may reach the maximum transmission power of the UE within one symbol with only 4 antenna ports.

  ▪ For example, if the UE is equipped with one power amplifier (PA) for each of 8 transmission antennas, and in a case where the maximum output of each PA is 14 dBm and $P_{CMAX,f,c}(i)$ is 23 dBm, the UE may transmit an SRS by using a value of $P_{CMAX,f,c}(i)$, which is 23 dBm, as the maximum power value when using the 8 antenna ports in one symbol. However, for the SRS resource configured with TDM as above, if the UE transmits the SRS by using only 4 antenna ports in one symbol, the UE may use up to 20 dBm as the maximum power value by using 4 PAs, so that 23 dBm that is $P_{CMAX,f,c}(i)$ cannot be achieved. This UE is unable to report the UE capability.

- This UE may not be configured with a TDM-type SRS resource by the base station, and may be configured with an SRS resource in a way that SRSs corresponding to all antenna ports are transmitted in each symbol, rather than using TDM.
- Alternatively, this UE may be configured with a TDM-type SRS resource by the base station, and Equation 4 below may be modified like Equation 2 or 3 below according to a PA output of the UE. If the UE uses only 4 antenna ports in one symbol and is unable to reach a value of $P_{CMAX,f,c}(i)$, the UE may multiply $P_{CMAX,f,c}(i)$ by specific coefficient $a_1$ having a value between 0 and 1 as shown in Equation 2 (or add specific constant $a_2$ in dB as shown in Equation 3 below), thereby limiting a transmission power to a value smaller than $P_{CMAX,f,c}(i)$ that is the maximum SRS transmission power value which may be determined via Equation 4 below. In addition, the limited maximum SRS transmission power value determined by multiplying $P_{CMAX,f,c}(i)$ by specific coefficient $a_1$ having a value between 0 and 1 as shown in Equation 2 below (or by adding specific constant $a_2$ in dB as shown in Equation 3 below) may indicate the maximum power value that the UE is able to reach using only 4 antenna ports in one symbol. For example, if the UE has an output of up to 14 dBm for each of 8 PAs, and $P_{CMAX,f,c}(i)$ is 23 dBm, the UE may have a transmission power value up to 20 dBm by using 4 antenna ports in one symbol, which is half of $P_{CMAX,f,c}(i)$, so that $a_1$ may be 20/23 in Equation 2 below, or $a_2$ may be -3 dB in Equation 3 below. This $a_1$ or $a_2$ may be reported as a UE capability. Based on the UE capability, the base station may configure higher-layer signaling for the UE so as to determine an $a_1$ or $a_2$ value that the UE will actually use in Equation 2 or Equation 3, or both the base station and the UE may consider, without additional higher-layer signaling from the base station, that the SRS transmission power is determined based on Equation 2 or Equation 3 on the basis of a UE capability value reported by the UE.

[Equation 2]

$$P_{SRS,b,f,c}(i,q_s,l)$$
$$= min\left\{\begin{matrix} a_1 P_{CMAX,f,c}(i), \\ P_{0\_SRS,b,f,c}(q_s) + 10log_{10}\left(2^\mu * M_{SRS,b,f,c}(i)\right) + \alpha_{SRS,b,f,c}(q_s) \cdot PL_{b,f,c}(q_d) + h_{b,f,c}(i,l) \end{matrix}\right\}[dBm]$$

[Equation 3]

$$P_{SRS,b,f,c}(i,q_s,l)$$
$$= min\left\{\begin{matrix} P_{CMAX,f,c}(i) + a_2, \\ P_{0\_SRS,b,f,c}(q_s) + 10log_{10}\left(2^\mu * M_{SRS,b,f,c}(i)\right) + \alpha_{SRS,b,f,c}(q_s) \cdot PL_{b,f,c}(q_d) + h_{b,f,c}(i,l) \end{matrix}\right\}[dBm]$$

■ As another example, a case of considered, in which the UE is equipped with one PA for each of 8 transmission antennas, and the maximum output of each PA is different (e.g., the maximum output of PAs of a first to a fourth transmission antenna is 17 dBm, and the maximum output of PAs of a fifth to an eighth transmission antenna is 14 dBm). Depending on which combination of transmission antennas the UE uses to transmit the SRS corresponding to 4 antenna ports, the maximum transmission power value for each symbol in TDM operation for 8-port SRS transmission may be different. For example, when the UE performs TDM operation for 8-port SRS transmission, if the UE uses the first to fourth transmission antennas in the first symbol and uses the fifth to eighth transmission antennas in the second symbol, the UE may have a transmission power of up to 23 dBm in the first symbol and a transmission power of up to 20 dBm in the second symbol. As another example, when the UE performs TDM operation for 8-port SRS transmission, if the UE uses the first transmission antenna, the second transmission antenna, the fifth transmission antenna, and the sixth transmission antenna in the first symbol, and uses the third transmission antenna, the fourth transmission antenna, the seventh transmission antenna, and the eighth transmission antenna in the second symbol, the UE may have the maximum transmission power of 21.77 dBm in both the first and second symbols.

● For this UE, i.e., when 8-port SRS transmission is performed based on TDM, if the maximum transmission power at SRS transmission through 4 antenna ports in at least one symbol is less than $P_{CMAX,f,c}(i)$, the UE may not be configured with a TDM-based SRS resource by the base station, and may configured with an SRS resource in a way that SRSs corresponding to all the antenna ports are transmitted in each symbol, rather than using TDM.

● Alternatively, this UE may consider a case where, when 8-port SRS transmission is performed based on TDM, the maximum transmission power at SRS transmission through 4 antenna ports is equal to $P_{CMAX,f,c}(i)$ in a specific symbol among 2 symbols, and the maximum transmission power at SRS transmission through 4 antenna ports is less than $P_{CMAX,f,c}(i)$ in the remaining symbol, that is, a case where the maximum transmission power at SRS transmission through 4 antenna ports is less than $P_{CMAX,f,c}(i)$ in at least one symbol when 8-port SRS transmission is performed based on TDM. In this case, the UE may derive the transmission power of SRS by using, for example, Equation 2 or Equation 3, based on a smaller value of the maximum transmission power when the SRS is transmitted through 4 antenna ports in each symbol. For example, when a maximum transmission power such as $P_{CMAX,f,c}(i)$ is possible in the first symbol as described above, and a maximum transmission power smaller than $P_{CMAX,f,c}(i)$ is possible in the second symbol, the UE may determine a TDM-based SRS transmission power in the two symbols, based on a maximum transmission power smaller than $P_{CMAX,f,c}(i)$ available in the second symbol. In this case, the SRS transmission power may be determined based on Equation 2 or Equation 3 similarly to the above, and the UE may determine $a_1$ or $a_2$ required therefor, based on a smaller value among the maximum transmission powers available in the two symbols, and report $a_1$ or $a_2$ as a UE capability. Based on the UE capability, the base station may configure higher-layer signaling for the UE so as to determine an a1 or a2 value that the UE will actually use in Equation 2 or Equation 3, or both the base station and the UE may consider, without additional higher-layer signaling from the base station, that the SRS transmission power is determined based on Equation 2 or Equation 3 on the basis of a UE capability value reported by the UE.

- As another example, when the UE is equipped with one PA for each of the 8 transmit antennas, and the maximum output of each PA is 17 dBm and $P_{CMAX,f,c}(i)$ is 23 dBm, if the UE uses only 4 antenna ports in one symbol for an SRS resource configured with TDM as described above, up to 23 dBm may be used as the maximum power value by using 4 PAs, so that 23 dBm, which is $P_{CMAX,f,c}(i)$ may be achieved. This UE may report the UE capability, and may be configured with a TDM-based SRS resource.
- The aforementioned operations correspond to an example where the number of antenna ports is 8, and the number of symbols used is 2, and it is also possible to use a different number of symbols and antenna ports from those disclosed herein. In this case, the descriptions may be applied according to obvious modifications.

<Third embodiment: SRS power control method>

As an embodiment of the disclosure, descriptions are provided for a method of controlling power during SRS transmission of the UE according to the SRS resource configuration and indication method described in the aforementioned embodiments.

Descriptions are provided for a method in which, when the UE transmits an SRS in response to a power control command received from the base station, the UE configures the transmission power of the SRS to perform transmission. With an SRS power control adjustment state corresponding to an i-th SRS transmission occasion and closed-loop index *l*, an uplink reference signal transmission power of the UE may be determined as shown in the following Equation 4 expressed in dBm. In Equation 4 below, when the UE supports multiple carrier frequencies in multiple cells, each parameter may be determined for each of cell *c*, carrier frequency *f*, and bandwidth part *b*, and may be identified by index *b*, *f*, or *c*.

[Equation 4]

$$P_{SRS,b,f,c}(i,q_s,l)$$
$$= min \begin{Bmatrix} P_{CMAX,f,c}(i), \\ P_{0\_SRS,b,f,c}(q_s) + 10log_{10}\left(2^\mu * M_{SRS,b,f,c}(i)\right) + \alpha_{SRS,b,f,c}(q_s) \cdot PL_{b,f,c}(q_d) + h_{b,f,c}(i,l) \end{Bmatrix} [dBm]$$

- $P_{CMAX,f,c}(i)$: is a maximum transmission power available to the UE in an i-th transmission occasion and is determined by a power class of the UE, parameters activated by the base station, and various parameters embedded in the UE.
- $P_{0\_SRS,b,f,c}(q_s)$: may be configured by higher-layer signaling $p_0$ for bandwidth part *b*, carrier frequency *f*, and cell *c*, and SRS resource set $q_s$ may be configured via higher-layer signaling SRS-ResourceSet and SRS-ResourceSetId.
- $\mu$: subcarrier spacing configuration value
- $M_{SRS,b,f,c}(i)$: may denote the amount of resources used in the *i*-th SRS transmission occasion (e.g., the number of RBs used for SRS transmission in the frequency domain).

- $\alpha_{SRS,b,f,c}(q_s)$: may be configured by higher-layer signaling alpha for bandwidth part *b*, carrier frequency *f*, and cell c, and SRS resource set $q_s$ may be configured via higher-layer signaling SRS-ResourceSet and SRS-ResourceSetId.
- $PL_{b,f,c}(q_d)$: is pathloss representing a path loss between the base station and the UE, and the UE calculates pathloss from a difference between a transmission power of reference signal (RS) resource $q_d$ signaled by the base station and a UE reception signal level of the reference signal.
- $h_{b,f,c}(i,l)$: may denote an SRS power control adjustment state value for the i-th SRS transmission occasion corresponding to closed-loop index *l* within bandwidth part *b*, carrier frequency *f*, and cell c.

The SRS power control adjustment state may be determined via bandwidth part *b*, carrier frequency *f*, cell *c*, and the *i*-th transmission occasion.

- If the UE is configured to have the same power control adjustment state value between SRS transmission and PUSCH transmission via higher-layer signaling srs-PowerControlAdjustmentStates, the SRS power control adjustment state may be represented as in Equation 5 below, and in Equation 5, $f_{b,f,c}(i,l)$ may denote a current PUSCH power control adjustment state, and a value thereof may be substituted into $h_{b,f,c}(i,l)$ and used.

[Equation 5]

$$h_{b,f,c}(i, l) = f_{b,f,c}(i, l)$$

- If the UE is not configured for PUSCH transmission in bandwidth part *b*, carrier frequency *f*, and cell *c*, or is configured to have a separate power control adjustment state value between SRS transmission and PUSCH transmission via higher-layer signaling srs-PowerControlAdjustmentStates, and higher-layer signaling tpc-Accumulation is not configured, the SRS power control adjustment state may be represented independently of closed-loop *l*, as shown in Equation 6 below.

[Table 23]

| TPC Command field value | Accumulated $\delta_{PUSCH,b,f,c}$ or $\delta_{SRS,b,f,c}$ [dB] (When *tpc-Accumulation* is not configured) |
|---|---|
| 0 | -1 |
| 1 | 0 |
| 2 | 1 |
| 3 | 3 |

[Equation 6]

$$h_{b,f,c}(i) = h_{b,f,c}(i - i_0) + \sum_{m=0}^{c(S_i)-1} \delta_{SRS,b,f,c}(m)$$

- $\delta_{SRS,b,f,c}(m)$: may be a value indicated by a TPC command field included in DCI format 2_3, and its value may follow Table 23 above.

- $\sum_{m=1}^{c(S_i)-1} \delta_{SRS,b,f,c}(m)$  may denote the sum of TPC command $\delta_{SRS,b,f,c}$ for all corresponding transmission occasions within specific set $S_i$. In this case, $c(S_i)$ may denote the number of all elements belonging to set $S_i$. $S_i$ may denote to a set of DCIs including all TPC command values on which TPC command accumulation operation is to be performed for the *i*-th PUSCH transmission occasion. In order to determine $S_i$, a start point and an end point may be defined on the time domain, and all DCIs received by the UE between the two points may be included as elements of $S_i$.

● The end point for determining $S_i$ may be a point that is $K_{SRS}(i)$ symbols before the start symbol of the i-th SRS transmission occasion.
● The start point for determining $S_i$ may be a point that is $K_{SRS}(i-i_0)-1$ symbols before the start symbol of an $(i - i_0)$th SRS transmission occasion. In this case, positive integer $i_0$ may be determined to be a smallest value that enables a time point, which is $K_{SRS}(i-i_0)$ symbols before the start symbol of the $(i-i_0)$th SRS transmission occasion, to be a time point earlier than the end point for determining $S_i$ (a point that is $K_{SRS}(i)$ symbols before the start symbol of the i-th SRS transmission occasion).

● As an example, when the end point for determining $S_i$ may be defined as sym(i), and the time point, which is $K_{SRS}(i-i_0)$ symbols before the start symbol of the $(i-i_0)$th SRS transmission occasion, may be defined as sym($i-i_0$), if sym($i$) = sym($i$ -1) > sym($i$ - 2) > sym($i$ -3) is satisfied, $i_0$ may be determined to be 2.

- If the UE is not configured for PUSCH transmission in bandwidth part *b,* carrier frequency *f,* and cell c, or is configured to have a separate power control adjustment state value between SRS transmission and PUSCH transmission via higher-layer signaling srs-PowerControlAdjustmentStates, and higher-layer signaling tpc-Accumulation is configured (i.e., TPC command accumulation operation cannot be performed and an absolute TPC command value may be applied), the SRS power control adjustment state may be represented independently of closed-loop *l*, as shown in Equation 7 below.

[Table 24]

| TPC Command field value | Absolute $\delta_{PUSCH,b,f,c}$ or $\delta_{SRS,b,f,c}$ [dB] (When *tpc-Accumulation* is configured) |
|---|---|
| 0 | -4 |
| 1 | -1 |
| 2 | 1 |
| 3 | 4 |

[Equation 7]

$$h_{b,f,c}(i) = \delta_{SRS,b,f,c}(i)$$

$\delta_{SRS,b,f,c}$ (i) may be a value indicated by a TPC command field included in DCI format 2_3 in bandwidth part *b,* carrier frequency *f,* and cell c as described above, and the value may follow Table 24 above. For example, if a value of the TPC command field is 0, $\delta_{SRS,b,f,c}$ may have a value of -4 dB.

As described above, based on a case where the UE is able to perform TPC command accumulation operation (i.e., if higher-layer signaling tpc-Accumulation is not configured), various methods may be considered for determining the definition of $K_{SRS}(i)$ applicable to the i-th SRS transmission occasion in bandwidth part *b,* carrier frequency *f,* and cell c, or based on a case where the UE is unable to perform TPC command accumulation operation and operates based on an absolute value (i.e., if tpc-Accumulation being higher-layer signaling is configured), various methods may be considered for determining the definition of $\delta_{SRS,b,f,c}$ (i) applicable to the i-th SRS transmission occasion in bandwidth part *b,* carrier frequency *f*, and cell *c*.

[Condition 3-1]

A case where the UE receives an indication for triggering aperiodic SRS transmission via DCI format from the base station

[Condition 3-1-1]

In addition to condition 3-1 described above, if the UE is able to perform TPC command accumulation operation (i.e., if higher-layer signaling tpc-Accumulation is not configured)
[Method 3-1-1-1] $K_{SRS}(i)$ applicable to the *i*-th SRS transmission occasion may refer to a symbol length from the end point of the last symbol, at which a PDCCH having triggered the *i*-th SRS transmission occasion is received, to the start point of the i-th SRS transmission occasion.

- If the UE receives triggering for i-th, (i+1)th, ..., (i+N-1)th SRS transmission occasions via reception of one corresponding PDCCH, the end point of the last symbol of the PDCCH, which determines all of $K_{SRS}(i)$, $K_{SRS}$(i+1), ..., $K_{SRS}$(i+N-1) applicable to the i-th, (i+1)th, ..., (i+N-1)th SRS transmission occasions, may all be the same. Therefore, according to the method described above, the end points for determining $S_i$, which are $K_{SRS}(i)$ symbols before the start symbol of the i-th SRS transmission occasion, (i.e., the end point of the last symbol of the PDCCH) are all the same, so that values to which TPC command accumulation has been applied may be the same for all SRS transmission occasions scheduled by the PDCCH. In this case, there is an advantage in that the operation of the UE may be simplified without increasing complexity, by applying a power control value, which may be determined at a PDCCH triggering time, to all SRS transmission occasions. However, this method is less flexible in that dynamic power control via L1 signaling (e.g., DCI format 2_3) is unavailable for an SRS transmission occasion transmitted relatively later in time.

[Method 3-1-1-2] $K_{SRS}(i)$ applicable to the *i*-th SRS transmission occasion may refer to a symbol length from the end point of the last symbol, at which the PDCCH having triggered the *i*-th SRS transmission occasion is received, to the start point of an SRS transmission occasion transmitted first in time among all SRS transmission occasions triggered by the PDCCH.

- If the UE receives triggering for one SRS transmission occasion via reception of one corresponding PDCCH, method 3-1-1-2 may derive the same $K_{SRS}(i)$ value as that by method 3-1-1-1.

- If the UE receives triggering for i-th, (i+1)th, ..., (i+N-1)th SRS transmission occasions via reception of one corresponding PDCCH, $K_{SRS}(i)$, $K_{SRS}(i+1)$, ..., $K_{SRS}(i+N-1)$ applicable to the i-th, (i+1)th, ..., (i+N-1)th SRS transmission occasions may have the same value as $K_{SRS}(i)$ that is applicable to the i-th SRS transmission occasion transmitted first in time among all SRS transmission occasions triggered by the PDCCH. Therefore, according to the descriptions above, the end points for determining $S_i$ all vary so that values, to which TPC command accumulation has been applied, for all SRS transmission occasions scheduled by the corresponding PDCCH may vary for each SRS transmission occasion. In this case, not only a power control value that may be determined at the time of PDCCH triggering, but also dynamic power control via L1 signaling (e.g., DCI format 2_3) are possible for SRS transmission occasions transmitted relatively later in time, which may increase the complexity of the UE operation. However, this method may be considered to be more flexible from a power control perspective. [Method 3-1-1-3] $K_{SRS}(i)$ applicable to the *i*-th SRS transmission occasion may refer to a symbol length configured via higher-layer signaling.

- If the UE receives triggering for one SRS transmission occasion via reception of one corresponding PDCCH, the UE may be configured with one symbol length via higher-layer signaling.

- If the UE receives triggering for i-th, (i+1)th, ..., (i+N-1)th SRS transmission occasions via reception of one corresponding PDCCH, $K_{SRS}(i)$, $K_{SRS}(i+1)$, ..., $K_{SRS}(i+N-1)$ applicable to the i-th, (i+1)th, ..., (i+N-1)th SRS transmission occasions may all have the same value based on one higher-layer signaling value, or may have separate values based on N different instances of higher-layer signaling. Therefore, according to the descriptions above, the end points for determining $S_i$ all vary so that values, to which TPC command accumulation has been applied, for all SRS transmission occasions scheduled by the corresponding PDCCH may vary for each SRS transmission occasion. In addition, if method 3-1-1-2 is used, since a symbol interval from a certain PDCCH to a first SRS transmission occasion triggered thereby may not always be the same as a symbol interval from another PDCCH to a first SRS transmission occasion triggered thereby, $K_{SRS}(i)$ that needs to be considered from a specific SRS transmission occasion may vary depending on different PDCCH triggering. In contrast, when a corresponding value is configured via higher-layer signaling as in method 3-1-1-3, there may be an advantage in that the UE operation may be controlled relatively simply and consistently.

- If there is one higher-layer signaling described above

  ▪ For example, the signaling may have a value in units of symbols as independent higher-layer signaling for TPC command accumulation, and this may be defined to be $K_{SRS,min}$.
  ▪ As another example, the signaling may indicate the number of symbols obtained by multiplying 14 by the smallest value among all triggering slot offsets k2 or k2-16 which is higher-layer signaling configured in all TDRA entries, and this may be defined to be $K_{SRS,min}$.
  ▪ As another example, the signaling may indicate the number of symbols obtained by multiplying 14 by the smallest value among all SRS triggering slot offset values configured in all SRS resource sets, and this may be defined to be $K_{SRS,min}$.
  ▪ As another example, the signaling may indicate the number of symbols obtained by multiplying 14 by the smallest value of triggering slot offset k2 configured in higher-layer signaling PUSCH-ConfigCommon, and this may be defined to be $K_{SRS,min}$.

- If there are multiple instances of higher-layer signaling described above

  ▪ For example, the signaling may be multiple independent instances of higher-layer signaling for TPC command accumulation, and may have a value in units of symbols, and if the number of repeated transmissions is N, these may be defined respectively as $K_{SRS,min,1}$, ..., $K_{SRS,min,N}$.
  ▪ As another example, the signaling may indicate the number of symbols obtained by considering as many k2 or k2-16 values as the number of SRS transmission occasions triggered by the corresponding PDCCH from the smallest value among all triggering slot offsets k2 or k2-16 that are higher-layer signaling configured in all TDRA entries, and then multiplying this by 14. If the number of repeated transmissions is N, these may be defined respectively as $K_{SRS,min,1}, ..., K_{SRS,min,N}$.

■ As another example, the signaling may indicate the number of symbols obtained by considering as many slot offsets as the number of SRS transmission occasions triggered by the corresponding PDCCH from the smallest value among all SRS triggering slot offsets values configured in all SRS resource sets, and then multiplying this by 14. If the number of repeated transmissions is N, these may be defined respectively as $K_{SRS,min,1}, ..., K_{SRS,min,N}$.

■ As another example, the signaling may indicate the number of symbols obtained by considering as many k2 values as the number of SRS transmission occasions triggered by the corresponding PDCCH from the smallest value among all triggering slot offsets k2 configured in higher-layer signaling PUSCH-ConfigCommon, and then multiplying this by 14. If the number of repeated transmissions is N, these may be defined respectively as $K_{SRS,min,1}, ..., K_{SRS,min,N}$.

[Method 3-1-1-4] If the i-th SRS transmission occasion is the first SRS transmission occasion triggered by the PDCCH, $K_{SRS}(i)$ applicable to the i-th SRS transmission occasion may refer to a symbol length from the end point of the last symbol, at which the PDCCH is received, to the start point of the i-th SRS transmission occasion, and if the i-th SRS transmission occasion is not the first SRS transmission occasion triggered by the PDCCH, $K_{SRS}(i)$ may refer to a symbol length from the end point of the last symbol, at which the (i-1)th SRS transmission occasion is transmitted, to the start point of the i-th SRS transmission occasion.

- If the UE receives triggering for one SRS transmission occasion via reception of one corresponding PDCCH, method 3-1-1-4 may derive the same $K_{SRS}(i)$ value as that by method 3-1-1-1.

- Method 3-1-1-4 may be similar to a method in which, when the UE receives triggering for i-th, (i+1)th, ..., (i+N-1)th SRS transmission occasions via reception of one corresponding PDCCH, $K_{SRS}(i)$ applicable to the i-th SRS transmission occasion may be calculated using time points of the PDCCH having scheduled the same and the i-th SRS transmission occasion, and when determining $K_{SRS}(i+1), ..., K_{SRS}(i+N-1)$ applicable to the (i+1)th, ..., (i+N-1)th SRS transmission occasions, each of the i-th, ..., (i+N-2) SRS transmission occasions may be treated similarly to the PDCCH used previously to calculate $K_{SRS}(i)$ for the i-th SRS transmission occasion. [Method 3-1-1-5] If the i-th SRS transmission occasion is the first SRS transmission occasion triggered by the PDCCH, $K_{SRS}(i)$ applicable to the i-th SRS transmission occasion may refer to a symbol length from the end point of the last symbol, at which the PDCCH is received, to the start point of the i-th SRS transmission occasion, and if the i-th SRS transmission occasion is not the first SRS transmission occasion triggered by the PDCCH, $K_{SRS}(i)$ may refer to a symbol length from the end point of the nearest downlink symbol present before the i-th SRS transmission occasion to the start point of the i-th SRS transmission occasion.

- If the UE receives triggering for one SRS transmission occasion via reception of one corresponding PDCCH, method 3-1-1-5 may derive the same $K_{SRS}(i)$ value as that by method 3-1-1-1.

[Method 3-1-1-6] The UE may define $K_{SRS}(i)$ applicable to the i-th SRS transmission occasion via a combination of methods 3-1-1-1 to 3-1-1-5 described above. For example, when the UE receives triggering for N repeated i-th, (i+1) th, ..., (i+N-1)th SRS transmission occasions through a PDCCH, method 3-1-1-1 may be used as a method of defining $K_{SRS}(i)$ for the i-th SRS transmission occasion that is the first SRS transmission occasion, and method 3-1-1-2 may be used for $K_{SRS}(i+1), ..., K_{SRS}(i+N-1)$ with respect to the remaining (i+1)th, ..., (i+N-1)th SRS transmission occasions.

[Method 3-1-1-7] The UE may configure one of aforementioned methods 3-1-1-1 to 3-1-1-6 as a method of defining $K_{SRS}(i)$, via higher-layer signaling from the base station. For example, the UE may receive a configuration of higher-layer signaling *tpcAccumulationTimeDetermination* from the base station, and the higher-layer signaling may be configured to one of *scheme1* to *scheme6*, where *scheme1* to scheme6 may refer to aforementioned methods 3-1-1-1 to 3-1-1-6, respectively. The disclosure is not limited to these examples, and it is also possible that some of the described methods may be used for method 3-1-1-7.

[Method 3-1-1-8] The UE may be configured with higher-layer signaling indicating whether to use a method of defining $K_{SRS}(i)$ (e.g., *enableTPCAccumulationTimeDetermination*) from the base station. If the higher-layer signaling is not configured, this may indicate to define $K_{SRS}(i)$ by using one of methods 3-1-1-1 to 3-1-1-6 described above (e.g., method 3-1-1-1), and if the higher-layer signaling is configured (e.g., if the UE receives a configuration value of "on"), this may indicate that a specific method for defining $K_{SRS}(i)$ is available. In this case, the specific method of defining $K_{SRS}(i)$ may be one (e.g., method 3-1-1-6) of methods 3-1-1-1 to 3-1-1-6 described above, except for the method used when the higher-layer signaling is not configured. The disclosure is not limited to these examples, and it is also possible that some of the described methods may be used for method 3-1-1-8.

[Method 3-1-1-1] to [Method 3-1-1-8] described above may be applied to all time-domain UE operation modes of SRS transmission. For example, [Method 3-1-1-1] to [Method 3-1-1-8] described above may be applied to all periodic, semi-permanent, and aperiodic SRS transmissions. In addition, some of [Method 3-1-1-1] to [Method 3-1-1-8] described above may be applied only to some time-domain operations, and the remaining methods may be applied only to remaining time-domain operations. For example, [Method 3-1-1-3] described above may be applied to periodic and semi-permanent SRS transmissions, and [Method 3-1-1-1] may be applied to aperiodic SRS transmissions.

[Condition 3-1-2]

In addition to condition 3-1 described above, if the UE cannot perform a TPC command accumulation operation and operates through an absolute value (i.e., when higher-layer signaling tpc-Accumulation is configured)

[Method 3-1-2-1] $\delta_{SRS,b,f,c}(i)$ may be a TPC command field value included in the PDCCH that has triggered the i-th SRS transmission occasion corresponding to closed-loop index *1* in bandwidth part *b,* carrier frequency *f*, and cell *c*.

- According to this method, when the UE receives triggering for one SRS transmission occasion via reception of one corresponding PDCCH, or when the UE receives triggering for multiple SRS transmission occasions via reception of one corresponding PDCCH, the same absolute TPC command value may be applied to all SRS transmission occasions.

- According to this method, if the UE receives triggering for multiple SRS transmission occasions via reception of one corresponding PDCCH, $\delta_{SRS,b,f,c}(i)$ follows only a TPC command field value included in the triggering PDCCH, so that the value of a TPC command field included in DCI format 2_3 between two SRS transmission occasions may be not applied.

[Method 3-1-2-2] $\delta_{SRS,b,f,c}(i)$ may be the most recently received TPC command value before transmission of the i-th SRS transmission occasion corresponding to closed-loop index *1* in bandwidth part *b,* carrier frequency *f,* and cell *c*.

- According to this method, if the UE receives triggering for one SRS transmission occasion via reception of one corresponding PDCCH, the UE receives triggering for multiple SRS transmission occasions via reception of one corresponding PDCCH, or there is no DCI format 2_3 transmitted more recently than the triggering PDCCH for all SRS transmission occasions, the absolute TPC command value included in the triggering PDCCH may be applied equally to all the SRS transmission occasions.

- According to this method, when the UE receives triggering for multiple SRS transmission occasions via reception of one corresponding PDCCH, if DCI format 2_3 is received between transmissions of i-th and (i+1)th SRS transmission occasions, and the most recently received TPC command value from the i-th SRS transmission occasion is the value indicated by the TPC command field included in the triggering PDCCH, the absolute TPC command value applied to the i-th SRS transmission occasion may follow the value indicated by the triggering PDCCH, and for the (i+1)th SRS transmission occasion, the absolute TPC command value included in DCI format 2_3 may be applied.

[Method 3-1-2-3] $\delta_{SRS,b,f,c}(i)$ may be the most recently received TPC command value from a time point that is $K_{SRS}(i)$ symbols before transmission of the i-th SRS transmission occasion corresponding to closed-loop index *1* in bandwidth part *b,* carrier frequency *f*, and cell *c*.

- A method of defining $K_{SRS}(i)$ may include applying one of methods 3-1-1-1 to 3-1-1-8 described above.

The aforementioned SRS transmission occasion may be one of each SRS transmission symbol, multiple SRS transmission symbols, a set of all symbols corresponding to a specific SRS resource, or a set of all symbols corresponding to all SRS resources to be used for SRS transmission for all defined ports, and for the SRS transmission occasion, the UE may be configured with the same via higher-layer signaling by the base station, configured for activation via MAC-CE, receive an indication via L1 signaling, and receive a notification via a combination of higher-layer signaling and L1 signaling, or may follow the fixed definition by the specification.

The aforementioned SRS transmission occasion may have the same definition or may have different definitions according to [Method 1-1] to [Method 1-4] described above. For example, if the UE transmits an SRS including the number of ports, which is 8 or more, by using [Method 1-1], the base station and the UE may use, as an SRS transmission occasion, a set of all symbols corresponding to a specific SRS resource; if the UE transmits an SRS including the number of ports, which is 8 or more, by using [Method 1-2], the base station and the UE may use, as an SRS transmission occasion, each SRS transmission symbol or multiple SRS transmission symbols capable of expressing all of 8 or more ports; and if the UE transmits an SRS including the number of ports, which is 8 or more, by using [Method 1-3], the base station and the UE may use, as an SRS transmission occasion, a set of all symbols corresponding to a specific SRS resource, or a set of all symbols corresponding to all SRS resources to be used for transmitting all defined ports. These are merely examples, and for all of [Method 1-1] to [Method 1-4], there may be an SRS transmission occasion, such as a set of all symbols corresponding to a specific SRS resource, and it is possible that each method uses a different SRS transmission occasion from the examples described above.

- If the UE is configured with *TCIState* or *UL-TCIstate* in higher-layer signaling *dl-OrJoint-TCIStateList*,
- If the UE is configured with higher-layer signaling p0AlphaSetforSRS,

■ If the UE is configured with higher-layer signaling followUnifiedTCIstateSRS in the SRS resource set, the UE may be provided with p0 (e.g., $P_{0\_SRS,b,f,c}(q_s)$ in [Equation 8]), alpha (e.g., $\alpha_{SRS,b,f,c}(j)$ in Equation 4), and SRS power control adjustment state l values, based on higher-layer signaling *p0AlphaSetforSRS* associated with TCIState or UL-TCIstate indicated by the base station, and $q_d$ which is a path loss reference signal may be provided based on higher-layer signaling pathlossReferenceRS-Id-r17 which is associated with or included in TCIState or UL-TCIstate indicated by the base station.

■ If the UE is not configured with higher-layer signaling followUnifiedTCIstateSRS in the SRS resource set, the UE may be provided with p0 (e.g., $P_{0\_SRS,b,f,c}(q_s)$ in Equation 4), alpha (e.g., $\alpha_{SRS,b,f,c}(j)$ in Equation 4), and SRS power control adjustment state l values, based on higher-layer signaling *p0AlphaSetforSRS* associated with TCIState or UL-TCIstate configured in an SRS resource of the lowest index in the SRS resource set, and $q_d$ which is a path loss reference signal may be provided based on higher-layer signaling pathlossReferenceRS-Id-r17 which is associated with or included in TCIState or UL-TCIstate configured in the SRS resource of the lowest index in the SRS resource set.

If the UE is not configured with *TCIState* or *UL-TCIstate* in higher-layer signaling *dl-OrJoint-TCIStateList*, the UE may be provided with p0 (e.g., $P_{0\_SRS,b,f,c}(q_s)$ in Equation 4), alpha (e.g., $\alpha_{SRS,b,f,c}(j)$ in Equation 4), and $q_d$ which is a path loss reference signal, based on higher-layer signaling p0, alpha, and pathlossReferenceRS in the SRS resource set.

As described above, regardless of whether *TCIState* or *UL-TCIstate* in higher-layer signaling *dl-OrJoint-TCIStateList* is configured, the UE may be notified of information on one p0, alpha, and path loss reference signal for each SRS resource set from the base station via a combination of higher-layer signaling and L1 signaling as described above. In this case, since one path loss reference signal is available for each SRS resource set, even if multiple TRPs exist in a specific cell, only a path loss for one TRP to which a path loss reference signal is transmitted may be offset.

According to the evolving 5G NR specification, downlink data transmission via multiple synchronized TRPs in a TDD environment may be supported to support higher transmission efficiency. In this case, in order for the base station to acquire channel information between the UE and each TRP, the UE may transmit an SRS to the base station, in which case, if the conventional SRS power control method is used, pathloss offset may be possible only for a specific TRP that transmits one pathloss reference signal for all SRS resources in each SRS resource set, and if the UE is to transmit an SRS while offsetting pathloss for different TRPs, transmission for multiple SRS resource sets may be required, and in this case, SRS transmission overhead may increase.

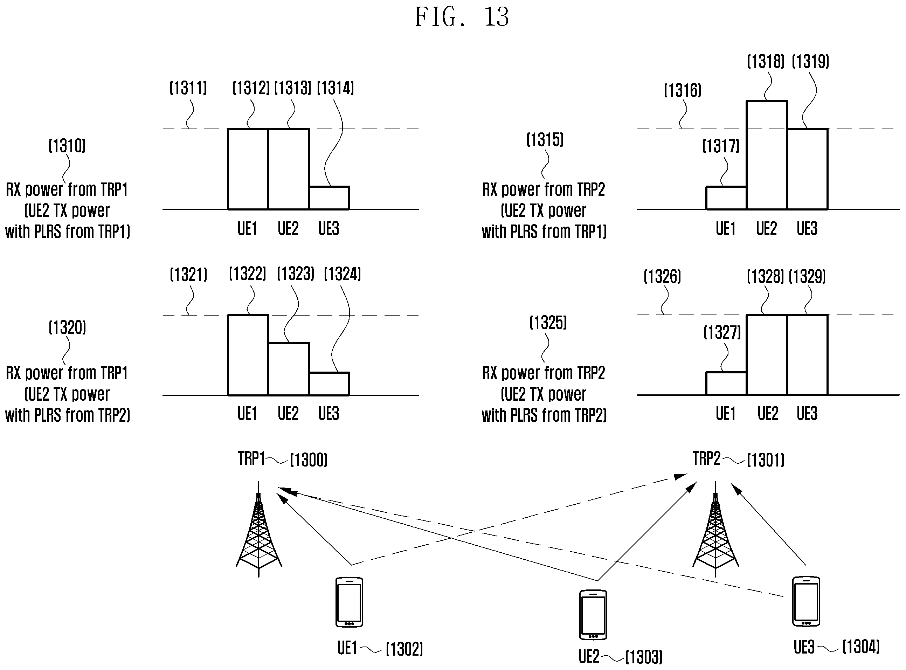

FIG. 13 is a diagram illustrating an SRS reception power for each TRP according to a position of a UE in network cooperative communication according to an embodiment of the disclosure.

In a 5G network where a base station including TRP1 1300 and TRP2 1301 supports cooperative communication, a situation is considered in which UE1 1302, UE2 1303, and UE3 1304 receive 5G services from the base station. UE1 1302 is located relatively close to TRP1 1300, UE2 1303 is located between TRP1 1300 and TRP2 1301, in which UE2 1303 is located closer to TRP2 1301 than TRP1 1300, and UE3 1304 is located relatively close to TRP2 1301.

Since UE1 1302 is located closer to TRP1 1300 than TRP2 1301, a pathloss reference signal in an SRS resource set configured by the base station via higher-layer signaling may be transmitted from TRP1 1300, and the base station may support uplink and downlink transmission and reception to and from UE1 1302 by using only TRP1 1300, and may not use TRP2 1301. Therefore, UE1 1302 adjusts transmission power to compensate for pathloss, based on the pathloss reference signal transmitted by TRP1 1300, so that the reception power intensity 1312 and 1322 of the transmission signal of UE1 1302 at TRP1 1300 may satisfy reception power requirements 1311 and 1321 for uplink signal reception at TRP1 1300.

When TRP2 1301 which is located further from UE1 1302 compared to TRP1 1300 receives a signal of UE1 1302, transmission power of UE1 1302 cannot offset the pathloss between UE1 1302 and TRP2 1301, so that the reception power intensity 1317 and 1327 of the transmission signal of UE1 1302 at TRP2 1301 cannot satisfy reception power requirements 1316 and 1326 for uplink signal reception at TRP2 1301.

Since UE3 1304 is located closer to TRP2 1301 than TRP1 1300, a pathloss reference signal in an SRS resource set configured by the base station via higher-layer signaling may be transmitted from TRP2 1301, and the base station may support uplink and downlink transmission and reception to and from UE3 1304 by using only TRP2 1301, and may not use TRP1 1300.

Therefore, UE3 1304 adjusts transmission power to compensate for pathloss, based on the pathloss reference signal transmitted by TRP2 1301, so that the reception power intensity 1319 and 1329 of the transmission signal of UE3 1304 at TRP2 1301 may satisfy the reception power requirements 1316 and 1326 for uplink signal reception at TRP2 1301.

When TRP1 1300 which is located further from UE3 1304 compared to TRP2 1301 receives a signal of UE3 1304, transmission power of UE3 1304 cannot offset the pathloss between UE3 1304 and TRP1 1300, so that the reception power intensity 1314 and 1324 of the transmission signal of UE3 1304 at TRP1 1300 cannot satisfy the reception power requirements 1311 and 1321 for uplink signal reception at TRP1 1300.

UE2 1303 is located relatively close to TRP2 1301, but is located between TRP1 1300 and TRP2 1301, so that the base station may support uplink and downlink transmission and reception to and from UE2 1303 by using one or both of TRP1 1300 and TRP2 1301 depending on a situation. Therefore, when the UE performs uplink transmission, the reception power intensity at TRP1 1300 and TRP2 1301 may vary depending on which one of the pathloss reference signals transmitted by TRP1 1300 and TRP2 1301 is used as the basis for offsetting the pathloss.

- If UE2 1303 adjusts 1310 transmission power to compensate for pathloss, based on the pathloss reference signal transmitted by TRP1 1300, the reception power intensity 1313 of the transmission signal of UE2 1303 at TRP1 1300 may satisfy the reception power requirement 1316 for uplink signal reception at TRP1 1300. At the same time, when TRP2 1301 located closer to UE2 1303 than TRP1 1300 receives a signal of UE2 1303, transmission power of UE2 1303 may be more than enough to offset the pathloss between UE2 1303 and TRP2 1301, so that the reception power intensity 1318 of the transmission signal of UE2 1303 at TRP2 1301 may exceed a reception power requirement 1316 for uplink signal reception at TRP2 1301. Since the reception power intensity 1318 of the transmission signal of UE2 1303 at TRP2 1301 is higher than the reception power of the signals of other UE1 1302 and UE3 1304, this act as a large interference when detecting the signals of UE1 1302 and UE3 1304 at TRP2 1301.

- If UE2 1303 adjusts transmission power to compensate for pathloss, based on the pathloss reference signal transmitted by TRP2 1301, the reception power intensity 1328 of the transmission signal of UE2 1303 at TRP2 1301 may satisfy the reception power requirement 1326 for uplink signal reception at TRP2 1301. At the same time, when TRP1 1300 located further from UE2 1303 compared to TRP2 1301 receives 1320 a signal of UE2 1303, transmission power of UE2 1303 may insufficient to offset the pathloss between UE2 1303 and TRP1 1300, so that the reception power intensity 1323 of the transmission signal of UE2 1303 at TRP1 1300 may not reach a reception power requirement 1321 for uplink signal reception at TRP1 1300. Therefore, the reception power intensity 1323 of the transmission signal of UE2 1303 at TRP1 1300 may be degraded in detection performance by another UE signal having high reception power (e.g., the reception signal of UE1 1302).

In this way, when the UE is supported for uplink and downlink transmission and reception, based on network cooperative communication using multiple (e.g., synchronized) TRPs from the base station, if the base station is to perform channel estimation based on an SRS transmitted from the UE, an advanced power control method may be required during SRS transmission.

Conventionally, transmission power has been determined using one p0, one alpha, and one pathloss reference signal for all SRS resources in a specific SRS resource set. However, hereinafter, an improved power control method for SRS transmission in network cooperative communication is described. Therefore, in the disclosure, various methods are proposed, such as a power control method based on multiple alphas and multiple pathloss reference signals, a method of selecting different pathloss reference signals for respective different SRS resource transmission occasions in a set, etc.

[Method 3-2-1]

The UE may use pathloss reference signals transmitted from respective multiple TRPs so as to, when transmitting a specific SRS, determine transmission power by considering multiple alpha values and multiple pathloss amounts that may be acquired via the multiple pathloss reference signals. For example, the UE may determine transmission power by considering a single or N alpha values and a single or N pathloss values when transmitting a specific SRS, in consideration of a total of N pathloss reference signals transmitted from respective N TRPs. In Equation 4 for determining SRS transmission power, alpha and pathloss are expressed as $\alpha_{SRS,b,f,c}(q_s)$ and $PL_{b,f,c}(q_d)$, respectively, and the UE applies a value of $\alpha_{SRS,b,f,c}(q_s) \cdot PL_{b,f,c}(q_d)$, which is the product of the two parameters, to Equation 4.

When transmitting a specific SRS, if the UE determines transmission power by considering a single or N alpha values (e.g., a first alpha $\alpha_{SRS,1,b,f,c}(q_s)$ to an Nth alpha $\alpha_{SRS,N,b,f,c}(q_s)$) and a single or N pathloss values (e.g., a first pathloss $PL_{1,b,f,c}(q_d)$ to an Nth pathloss $PL_{N,b,f,c}(q_d)$), the UE may define an arbitrary function func(.) with up to 2N parameters, and this function may have up to N alpha values and up to N pathloss values as input values, and may apply output values thereof when determining SRS transmission power.

In conventional Equation 4, the aforementioned arbitrary function func(.) has one alpha value and one pathloss value as input values, and an output value thereof is expressed as the product of the two input values, which may be expressed as in Equation 8.

[Equation 8]

$$func\left(\alpha_{SRS,b,f,c}(q_s), PL_{b,f,c}(q_d)\right) = \alpha_{SRS,b,f,c}(q_s) \cdot PL_{b,f,c}(q_d)$$

If the UE determines SRS transmission power by considering multiple alpha values and multiple pathloss values, the product of alpha and pathloss having the same index may be, for example, considered as input values for the arbitrary function func(.) similarly to Equation 8 as described above. (For example, $\alpha_{SRS,1,b,f,c}(q_s) \cdot PL_{1,b,r,c}(q_d)$ that is the product of the first alpha and the first pathloss to $\alpha_{SRS,N,b,f,c}(q_s) \cdot PL_{N,b,f,c}(q_d)$ that is the product of the Nth alpha and the Nth pathloss may be considered as input values for the arbitrary function func(.).)

If an arithmetic mean of input values is considered for an output value of the arbitrary function, this may be expressed as in Equation 9 below.

[Equation 9]

$$func\left(\alpha_{SRS,1,b,f,c}(q_s), \dots, \alpha_{SRS,N,b,f,c}(q_s), PL_{1,b,f,c}(q_d), \dots, PL_{N,b,f,c}(q_d)\right)$$

$$= \frac{1}{N}\sum_{i=1}^{N}\alpha_{SRS,i,b,f,c}(q_s) \cdot PL_{i,b,f,c}(q_d)$$

If a linear combination of input values is considered for an output value of the arbitrary function, this may be expressed as in Equation 10 below, where $w_i$(i=1, ..., N) may be a real number between 0 and 1, and may satisfy $\sum_{i=1}^{N} w_i = 1$.

[Equation 10]

$$func\left(\alpha_{SRS,1,b,f,c}(q_s), \dots, \alpha_{SRS,N,b,f,c}(q_s), PL_{1,b,f,c}(q_d), \dots, PL_{N,b,f,c}(q_d)\right)$$

$$= \sum_{i=1}^{N} W_i \alpha_{SRS,i,b,f,c}(q_s) \cdot PL_{i,b,f,c}(q_d)$$

If a geometric mean of input values is considered for an output value of the arbitrary function, this may be expressed as in Equation 11 below.

[Equation 11]

$$func\left(\alpha_{SRS,1,b,f,c}(q_s), \dots, \alpha_{SRS,N,b,f,c}(q_s), PL_{1,b,f,c}(q_d), \dots, PL_{N,b,f,c}(q_d)\right)$$

$$= \sqrt[N]{\prod_{i=1}^{N}\alpha_{SRS,i,b,f,c}(q_s) \cdot PL_{i,b,f,c}(q_d)}$$

When the UE considers an arbitrary function that uses multiple alpha values and multiple pathloss values as input values during SRS transmission, various forms of output values as above may be considered, and in addition to the above examples, a method of considering an output value as a maximum or minimum value among all input values for the arbitrary function is also possible, and a case where some alpha and pathloss values among multiple alpha and pathloss values are used as input values of the function, or a case where all values of $\alpha_{SRS,1,b,f,c}(q_s)$ to $\alpha_{SRS,N,b,f,c}(q_s)$ are the same (i.e., when one alpha value and multiple pathloss values are considered as input values) may also be considered. The disclosure may not be limited to the above examples.

When the UE determines SRS transmission power, the output value of the arbitrary function described above may be used instead of the value of $\alpha_{SRS,N,b,f,c}(q_s) \cdot PL_{N,b,f,c}(q_d)$ in Equation 4 described above.

Based on configuration via higher-layer signaling from the base station, activation via MAC-CE, indication via L1 signaling, notification via a combination of higher-layer signaling and L1 signaling, or a fixed method defined in the specification, the UE may determine SRS transmission power by using, for example, Equation 9 as an output value of the arbitrary function, and using the output value in Equation 4 instead of the value of $\alpha_{SRS,N,b,f,c}(q_s) \cdot PL_{N,b,f,c}(q_d)$ value. In this case, when transmitting an SRS at a specific OFDM symbol location or a specific SRS transmission occasion, it may be assumed that the UE transmits the SRS toward all TRPs associated with each parameter used as an input value for the arbitrary function. That is, if the UE uses two pathloss values as input values for the arbitrary function, it may be assumed that the UE transmits the SRS toward both TRPs that have transmitted respectively two pathloss reference signals used when the two pathloss values are measured.

If the UE performs SRS transmission using the method described above, resource efficiency of the base station and the UE can be increased in that time or frequency resources for the SRS transmission do not need to be separately allocated for each TRP. However, if the UE uses one of Equations 9 to 11 to offset pathloss, there may be a case where SRS transmission is performed without offsetting any pathloss for multiple TRPs.

Therefore, the UE may consider an additional transmission power offset in addition to the above-described method and apply the same to SRS transmission power. If a reception power requirement for an uplink signal at a specific TRP is not fixed to a certain value, but is required within a certain range to enable operation (e.g., if the reception power requirement is X [dBm], and an uplink signal received with a reception power value between X-a [dBm] and X+a [dBm] can be decoded by a base station receiver), the SRS reception power transmitted by the UE may be adjusted to be included within the range of the reception power requirement by considering the additional transmission power offset. The additional transmission power offset may be applied by changing a value of a specific parameter in Equation 4 without changing Equation 4 described above, or a new parameter not included in Equation 4 may be additionally considered. For example, if Equation 9 is used as an output value of an arbitrary function and the output value is used instead of the value of $\alpha_{SRS,N,b,f,c}(q_s) \cdot PL_{N,b,f,c}(q_d)$ in Equation 4 described above, and the additional transmission power offset is further considered as a new parameter not included in Equation 4, a method of determining SRS transmission power by the UE may be expressed as in Equation 12 below.

[Equation 12]

$$P_{SRS,b,f,c}(i,q_s,l)$$
$$= min\left\{ \begin{array}{c} P_{CMAX,f,c}(i), \\ P_{0\_SRS,b,f,c}(q_s) + 10log_{10}\left(2^\mu * M_{SRS,b,f,c}(i)\right) + \frac{1}{N}\sum_{i=1}^{N}\alpha_{SRS,i,b,f,c}(q_s) \cdot PL_{i,b,f,c}(q_d) + h_{b,f,c}(i,l) + offset_{b,f,c}(q_s,q_d) \end{array} \right\} [dBm]$$

In Equation 12, additional transmission power offset $Offset_c(q_s,q_d)$ may be modified as follows.

- For example, as shown in Equation 12, the additional transmission power offset is expressed as $Offset_c(q_s,q_d)$, and this may be a value associated with specific SRS resource set $q_s$ and pathloss reference signal $q_d$ in specific bandwidth part *b,* carrier *f*, and cell *c*.
- As another example, the additional transmission power offset may be a value associated with a combination of at least one parameter among a specific SRS resource set and a pathloss reference signal in specific bandwidth part *b,* carrier *f*, and cell c described above, and for example, the additional transmission power offset, which is obtained by considering characteristics of the center frequency at which an uplink signal is transmitted in a specific cell *c*, may be related to specific cell *c*, in which case, the additional transmission power offset may be commonly applied to all bandwidth parts, all carriers, all SRS resource sets, and all pathloss reference signals within cell *c*, and may be expressed as $Offset_c$ so as to replace $Offset_c(q_s,q_d)$ of Equation 12.
- As another example, since a different reception power requirement range may be determined for each TRP depending on an implementation method of the TRP receiving an uplink signal, an additional transmission power offset may be a value related to a specific TRP. In addition, the additional transmission power offset may be a value associated with specific pathloss reference signal $q_d$ transmitted by a specific TRP within specific cell c. If multiple alpha values and multiple pathloss reference signals are considered as in Equation 12, the UE may consider multiple additional transmission power offsets corresponding to the multiple pathloss reference signals. For the multiple additional transmission power offsets, similar to Equations 9 to 15 or other variations thereof, a specific arbitrary function that takes multiple additional transmission power offsets as input values may be used so that output values thereof may be used to determine SRS transmission power. For example, an additional transmission power offset in a specific cell corresponding to an i-th pathloss reference signal $q_{d,i}$ may be defined as $Offset_c(q_{d,i})$, and when using an arithmetic mean value of N additional transmission power offsets, the UE may replace $Offset_c(q_s,q_d)$ of Equation 12 by using Equation 13 below.

For the additional transmission power offset value, the UE may be configured with the same by the base station via higher-layer signaling, configured for activation via MAC-CE, receive an indication via L1 signaling, and receive a notification via a combination of higher-layer signaling and L1 signaling, or may use a value fixedly defined in the specification. When configured via higher-layer signaling, the UE may receive a list of multiple additional transmission power offsets from the base station, and a specific additional transmission power offset value among these may be related to a combination of at least one of parameters, such as a specific bandwidth part, a specific carrier, a specific cell, a specific SRS resource set, a specific pathloss reference signal, etc. That is, the additional transmission power offset value may be bandwidth-specific, carrier-specific or cell-specific, or may be configured for a specific SRS resource set or a specific pathloss reference signal.

[Equation 13]

$$func\left(offset_c(q_{d,1}), ..., offset_c(q_{d,N})\right) = \frac{1}{N}\sum_{i=1}^{N} offset_c(q_{d,i})$$

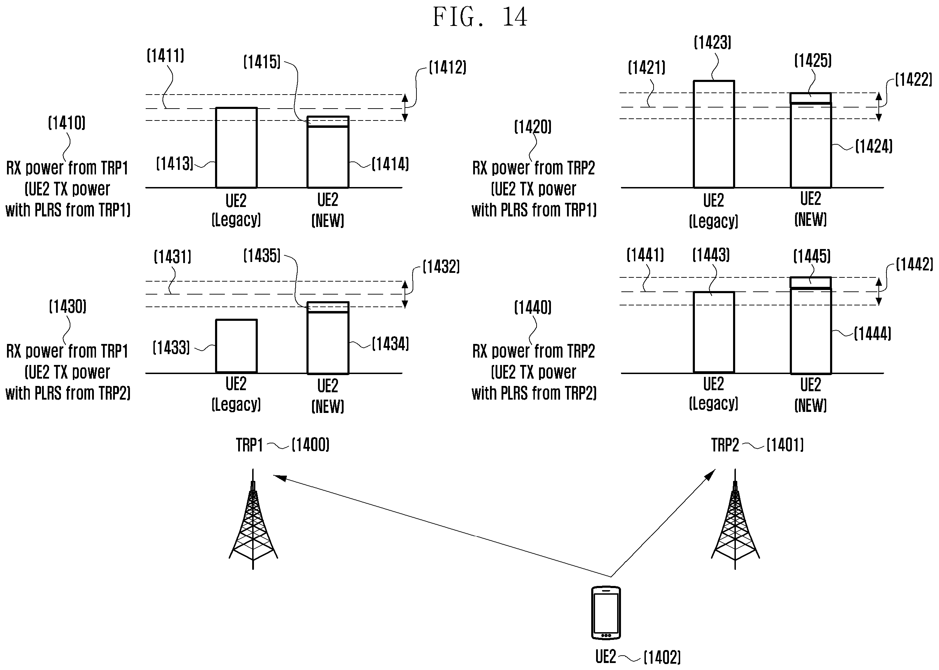

FIG. 14 is a diagram illustrating an SRS reception power for each TRP when determining SRS transmission power in consideration of multiple power control parameters in network cooperative communication according to an embodiment of the disclosure.

Provide is a situation where, in a 5G network where a base station including TRP1 1400 and TRP2 1401 supports cooperative communication, UE2 1402 receives 5G services from a base station. UE2 1402 is located between TRP1 1400 and TRP2 1401, and is located closer to TRP2 1401 than to TRP1 1400.

UE2 1402 is located relatively close to TRP2 1401, but is located between TRP1 1400 and TRP2 1401, so that the base station may support uplink and downlink transmission and reception to and from UE2 1402 by using one or both of TRP1 1400 and TRP2 1401 depending on a situation. Therefore, when the UE performs uplink transmission, the reception power intensity at TRP1 1400 and TRP2 1401 may vary depending on which one of the pathloss reference signals transmitted by TRP1 1400 and TRP2 1401 is used as the basis for offsetting the pathloss.

- If UE2 1402 adjusts 1410 transmission power to compensate for pathloss, based on the pathloss reference signal transmitted by TRP1 1400, the reception power intensity 1413 of the transmission signal of UE2 1402 at TRP1 1400 may satisfy a reception power requirement 1411 for uplink signal reception at TRP1 1400. At the same time, when TRP2 1401 located closer to UE2 1402 than TRP1 1400 receives 1420 a signal of UE2 1402, transmission power of UE2 1402 may be more than enough to offset the pathloss between UE2 1402 and TRP2 1401, so that the reception power intensity 1423 of the transmission signal of UE2 1402 at TRP2 1401 may exceed a reception power requirement 1421 for uplink signal reception at TRP2 1401. The reception power intensity 1423 of the transmission signal of UE2 1402 at TRP2 1401 may cause significant interference when detecting a signal of another UE when another UE is present.

- If UE2 1402 adjusts 1440 transmission power to compensate for pathloss, based on the pathloss reference signal transmitted by TRP2 1401, the reception power intensity 1443 of the transmission signal of UE2 1402 at TRP2 1401 may satisfy a reception power requirement 1441 for uplink signal reception at TRP2 1401. At the same time, when TRP1 1400 located further from UE2 1402 compared to TRP2 1401 receives 1430 a signal of UE2 1402, transmission power of UE2 1402 may insufficient to offset the pathloss between UE2 1402 and TRP1 1400, so that the reception power intensity 1433 of the transmission signal of UE2 1402 at TRP1 1400 may not reach a reception power requirement 1431 for uplink signal reception at TRP1 1400. The reception power intensity 1433 of the transmission signal of UE2 1402 at TRP1 1400 may be degraded in detection performance by another UE signal having high reception power.

- A case is considered in which UE2 1402 uses Equation 9 above using, for example, different pathloss reference signals and two different alpha values transmitted by TRP1 1400 and TRP2 1401, respectively, and determines SRS transmission power by using an output value thereof instead of the value of $\alpha_{SRS,N,b,f,c}(q_s)\cdot PL_{N,b,f,c}(q_d)$ in Equation 4 described above. According to Equation 9, the method above is similar to using a mean of two path pathloss values, thereby causing a result in which a mean value of the pathloss between UE2 1402 and TRP1 1400 and the pathloss between UE2 1402 and TRP2 1401 is offset. As a result, in the case of 1410, only the pathloss between UE2 1402 and TRP1 1400 is offset, so that a lower reception power value may be obtained compared to the reception power value 1413 that could have been obtained at TRP1 1400, therefore, UE2 1402 may have a lower reception power value 1414 than the reception power requirements 1411 and 1431 for uplink signal reception in TRP1 1400. Similarly, in the case of 1440, only the pathloss between UE2 1402 and TRP1 1400 is offset, so that UE2 1402 may have a lower reception power value 1424 compared to the reception power value 1414, which is higher than the reception power requirement 1421 that could have been obtained at TRP2 1401. In this case, the UE has used a method of offsetting pathloss by considering a pathloss reference signal and an alpha value for both TRPs, but unlike the conventional method that satisfies the reception power requirement 1411 of TRP1 1400, this method fails to meet that requirement.

- If the reception power requirement for an uplink signal at TRP1 1400 and TRP2 1401 is not fixed to a certain value, but is required to be within a certain range to enable operation 1412, 1422, 1432, or 1442, the UE may be notified of information on the additional transmission power offset from the base station in various ways as described above. If the UE does not consider the additional transmission power offset, even if the SRS reception power 1424 or 1444 for the SRS transmission of UE2 1402 at TRP2 1401 is included in the reception power requirement range 1412, 1422, 1432, or 1442, the SRS reception power 1414 or 1434 at TRP1 1400 may not be included in the reception power requirement range 1412, 1422, 1432, or 1442.

- If the UE considers the additional transmission power offset and applies the same during SRS transmission power determination, the final SRS reception power for the SRS transmission of UE2 1402 at TRP1 1400 may be increased by a certain value 1415 or 1435 compared to the SRS reception power 1414 or 1434 obtained when the additional transmission power offset is not considered, and may be included in the reception power requirement range 1412, 1422, 1432, or 1442 in this case, and the final SRS reception power for the SRS transmission of UE2 1402 at TRP2 1401 may also be increased by a certain value 1425 or 1445 compared to the SRS reception power 1424 or 1444 obtained when the additional transmission power offset is not considered, and may be included in the reception power requirement range 1412, 1422, 1432, or 1442.

In this way, if the UE uses the SRS transmission power determination method that considers multiple pathloss reference signals, the UE may adjust SRS transmission power to be included in the reception power requirement range of each TRP by using additional transmission power offset information notified from the base station.

The UE may not expect the maximum number N of multiple alpha and pathloss values described above to have a value larger than 4, and may expect the value to be 4 or smaller. Alternatively, the UE may not expect the maximum number N of multiple pathloss values described above to have a value larger than 4, and may expect the value to be 4 or smaller. Alternatively, the UE may not expect the maximum number N of multiple alpha values described above to have a value larger than 16, 32, or 64, and may expect the value to be 16, 32, or 64 or smaller.

[Method 3-2-2]

The UE may dynamically select a specific reference signal among pathloss reference signals transmitted in multiple respective TRPs, so as to determine transmission power. The UE may be configured with multiple power control parameter sets in a specific SRS resource set from the base station, and when the UE receives a transmission indication from the base station for a corresponding SRS resource set, the UE may apply a different power control parameter set to each SRS transmission occasion when transmitting an SRS in the SRS resource set. In this case, the power control parameter set may include at least p0, alpha, pathloss reference signal, closed loop index, etc., and the maximum number of configurable power control parameter sets may not exceed, for example, 64. For example, if the UE is configured with two SRS resources in a specific SRS resource set and two power control parameter sets are configured in the SRS resource set, the UE may determine SRS transmission power by applying a first power control parameter set when transmitting a first SRS resource, and may determine SRS transmission power by applying a second power control parameter set when transmitting a second SRS resource. When using this method, the UE may offset pathloss corresponding to each TRP for each SRS transmission occasion, so that, during uplink channel estimation, the base station may obtain high channel estimation performance with a lower delay time compared to before.

The UE may be configured with multiple power control parameter sets in the SRS resource set from the base station, and may be configured with a specific power control parameter set to be used for each SRS transmission occasion from the base station via higher-layer signaling.

-    For example, if an SRS transmission occasion is based on each SRS resource, the UE may be configured with an index of a specific power control parameter set as an additional parameter in higher-layer signaling for each SRS resource, or may be configured with information on a combination of at least one of p0, alpha, pathloss reference signal, and closed loop index. If a specific power control parameter is commonly used for all SRS resources in a specific SRS resource set (e.g., a combination of at least one of p0, alpha, pathloss reference signal, and closed loop index), the parameter may be included in higher-layer signaling for each SRS resource set, not in higher-layer signaling for each SRS resource.

-    As another example, the UE may be configured with a specific sequence including indexes for some or all of multiple power control parameter sets by the base station in the SRS resource set or higher-layer signaling for each SRS resource, and the UE may identify an index of a power control parameter set to be applied for each SRS transmission occasion. In this case, the specific sequence may be a fixed sequence or may be determined by a pseudo-random sequence generation expression. For example, when there are 4 power control parameter sets, and a specific sequence including indexes (sets 1 to 4) for all thereof is set to {1, 4, 2, 3}, the UE may determine SRS transmission power by applying a specific power control parameter set according to the sequence for each SRS transmission occasion. If the UE is configured with two SRS resources in the SRS resource set by the base station, each SRS resource is transmitted in two OFDM symbols, and one OFDM symbol is configured as an SRS transmission occasion, the UE may apply a first power control parameter set in a first SRS transmission occasion of a first SRS resource, the UE may apply a fourth power control parameter set in a second SRS transmission occasion of the first SRS resource, the UE may apply a second power control parameter set in a first SRS transmission occasion of a second SRS resource, and the UE may apply a third power control parameter set in a second SRS transmission occasion of the second SRS resource. The UE may determine SRS transmission power for each SRS transmission occasion based on a sequence for a power control parameter set, and if the power control parameter set corresponding to an index of up to the last power control parameter set in the sequence has been applied to determine the SRS transmission power, a power control parameter set of the first index in the sequence may be applied again to a subsequent SRS transmission occasion.

The UE may activate or update, via the MAC-CE, some or all of multiple power control parameter sets configured in the SRS resource set via higher-layer signaling by the base station. For example, a case is considered in which the UE is configured with a first to a fourth power control parameter set via higher-layer signaling in a specific SRS resource set among a total of 64 power control parameter sets configured by the base station. If a change is required for the power control parameter sets of the SRS resource set, based on CSI report information of the UE or an uplink signal and channel estimation performance of the base station, the UE may receive a MAC-CE for updating power control parameters from the base station so as to update the first to fourth power control parameter sets to a fifth to an eighth power control parameter set, instead of a reconfiguration method for higher-layer signaling. In this case, the MAC CE may include an identifier of the SRS resource set and identifiers of the power control parameters configured via higher-layer signaling.

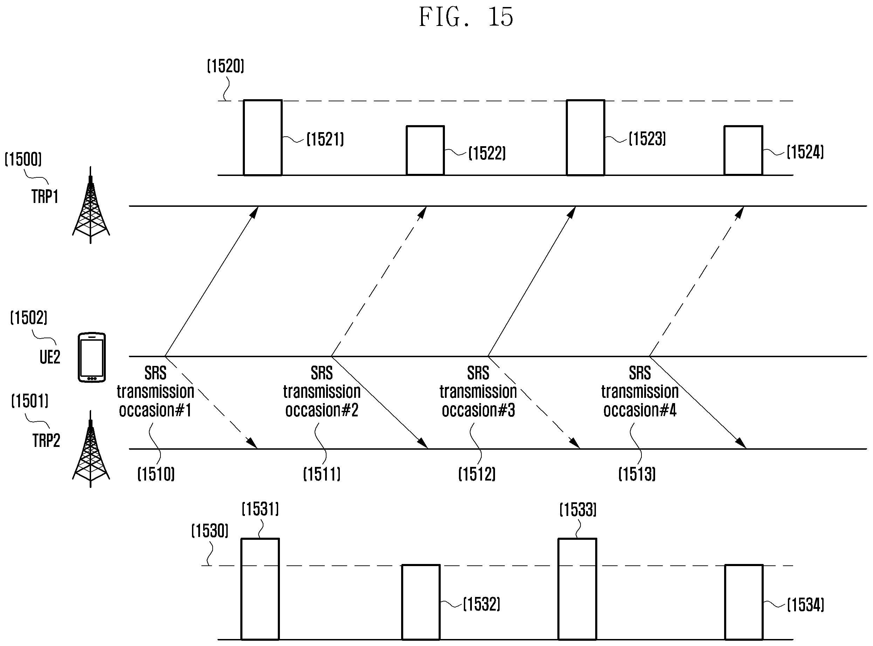

FIG. 15 is a diagram illustrating an SRS reception power for each TRP when determining SRS transmission power in consideration of multiple power control parameters in network cooperative communication according to another embodiment of the disclosure.

Provide is a situation where, in a 5G network where a base station including TRP1 1500 and TRP2 1501 supports cooperative communication, UE2 1502 receives 5G services from a base station. UE2 1502 is located between TRP1 1500 and TRP2 1501, and is located closer to TRP2 1501 than to TRP1 1500.

UE2 1502 is located relatively close to TRP2 1501, but is located between TRP1 1500 and TRP2 1501, so that the base station may support uplink and downlink transmission and reception to and from UE2 1502 by using one or both of TRP1 1500 and TRP2 1501 depending on a situation.

Therefore, when the UE performs uplink transmission, the reception power intensity at TRP1 1500 and TRP2 1501 may vary depending on which one of the pathloss reference signals transmitted by TRP1 1500 and TRP2 1501 is used as the basis for offsetting the pathloss.

If UE2 1502 is configured with 4 SRS resources in a specific SRS resource set, and each SRS transmission occasion for the SRS resource set is an SRS resource, the UE may transmit SRSs in a total of 4 SRS transmission occasions. In this case, UE2 1502 may be configured with 2 power control parameter sets in the SRS resource set via higher-layer signaling by the base station, and may be configured with a specific sequence including indexes for some or all of the power control parameter sets described above in the SRS resource set, and for example, it may be assumed that the sequence is configured to {1, 2}. In this case, a first power control parameter set may be applied when transmitting SRS transmission occasion #1 1510 and #3 1512, and a second power control parameter set may be applied when transmitting SRS transmission occasion #2 1511 and #4 1513. In this case, the first and second power control parameter sets may include a combination of at least one of p0, alpha, closed loop index, and pathloss reference signal related to TRP1 1500 and TRP2 1501, respectively.

If the UE transmits SRSs by applying the first power control parameter set in SRS transmission occasions #1 1510 and #3 1512, reception power satisfying a reception power requirement 1520 may obtained 1521 or 1523 in TRP1 1500, but reception power exceeding a reception power requirement 1530 may be obtained 1531 or 1533 in TRP2 1501. If the UE transmits SRSs by applying the second power control parameter set in SRS transmission occasions #2 1511 and #4 1513, reception power that does not satisfy the reception power requirement 1520 may obtained 1522 or 1524 in TRP1 1500, but reception power satisfying the reception power requirement 1530 may be obtained 1532 or 1534 in TRP2 1501. In the existing SRS power control method, a single power control parameter set may be applied to SRS transmission in a specific SRS resource set, so that all SRS transmission occasions #1 to #4 had to be transmitted at the same power. However, since the method enables rapid change and adjustment of power control parameters for each SRS transmission occasion, power control for SRS may be performed more flexibly, and the base station may estimate an uplink channel more quickly so as to use the same for uplink and downlink scheduling of the UE.

[Method 3-2-3]

For a combination of at least one of [Method 3-2-1] to [Method 3-2-2], the UE may be configured with the same via higher-layer signaling by the base station, configured for activation via MAC-CE, receive an indication via L1 signaling, receive a notification via a combination of higher-layer signaling and L1 signaling, or may be defined fixedly in the specification.

- For example, when the UE transmits multiple SRS resources within a specific periodic, semi-permanent, or aperiodic SRS resource set, transmission for some SRS resources may be based on [Method 3-2-1], and transmission for the remaining SRS resources may be based on [Method 3-2-2].
- As another example, when the UE receives activation or trigger for a specific SRS resource set among multiple periodic, semi-permanent, or aperiodic SRS resource sets from the base station, the UE may select one of [Method 3-2-1] and [Method 3-2-2] for determining SRS transmission power when transmitting all the SRS resources in the SRS resource set according to additionally notified information from the base station. For the additionally notified information from the base station, the UE may be configured with the same via higher-layer signaling for each SRS resource set from the base station, configured for activation via MAC-CE, receive an indication via L1 signaling, receive a notification via a combination of higher-layer signaling and L1 signaling, or may use a value fixedly defined in the specification.

- As another example, the UE may select one of [Method 3-2-1] and [Method 3-2-2] for SRSs having different time-domain operations (e.g., one of periodic, semi-persistent, and aperiodic SRS), and use the selected method as an SRS transmission power determination method. For example, [Method 3-2-1] may be used for periodic and semi-persistent SRS transmissions, and [Method 3-2-2] may be used for aperiodic SRS transmissions. However, the disclosure is not limited thereto, and various modifications may be possible.

In [Method 3-2-1] to [Method 3-2-3] described above, specific SRS transmission may refer to transmission for all SRS resources in a specific SRS resource set, may refer to transmission for a specific SRS resource in a specific SRS resource set, and may be one of the aforementioned SRS transmission occasions.

The UE may report, as a UE capability to the base station, whether a combination of at least one of [method 3-2-1] to [method 3-2-3] is supportable. The UE capability may include, in a single UE capability, at least one component indicating whether a combination of at least one of aforementioned [Method 3-2-1] to [Method 3-2-3] is supported, or may be defined as multiple different UE capabilities. If the UE capability for the specific method described above is not reported, this may be interpreted as support for another method.

For [Method 3-2-1] to [Method 3-2-3] described above, at least one OFDM symbol may be introduced as a guard symbol between two SRS transmission occasions that are adjacent in time during which the UE performs SRS transmissions to which different power control parameter sets are applied. For this, various time delay factors that may be required when adjusting power according to the difference in transmission power between the two SRS transmission occasions have been considered. The number of guard symbols may have different values depending on subcarrier spacing (numerology) of a cell and bandwidth to which the base station and the UE belong. The presence or absence of the guard symbol and its value may be reported as a UE capability from the UE to the base station and used as it is, or may be configured by the base station via higher-layer signaling based on the UE capability reported from the UE, configured for activation via MAC-CE, indicated via L1 signaling, or may be fixedly defined in the specification. When the UE reports the information as a UE capability, different values may be reported for each subcarrier spacing. In addition, when the UE reports the information as a UE capability, the information may be reported in the form of symbols, slots, or absolute time. In addition, a guard symbol value may be the same as the number of guard symbols used in SRS transmission for antenna switching. All of the matters described in the embodiment above may be applied regardless of the presence or absence of a guard symbol between multiple connected SRS transmission occasions.

The contents described in all the aforementioned embodiments may be applicable to some or all of periodic, semi-permanent, and aperiodic SRSs, and may be applicable to some or all of cases where "usage" which is higher-layer signaling in an SRS resource set is codebook, non-codebook, antenna switching, and beam management.

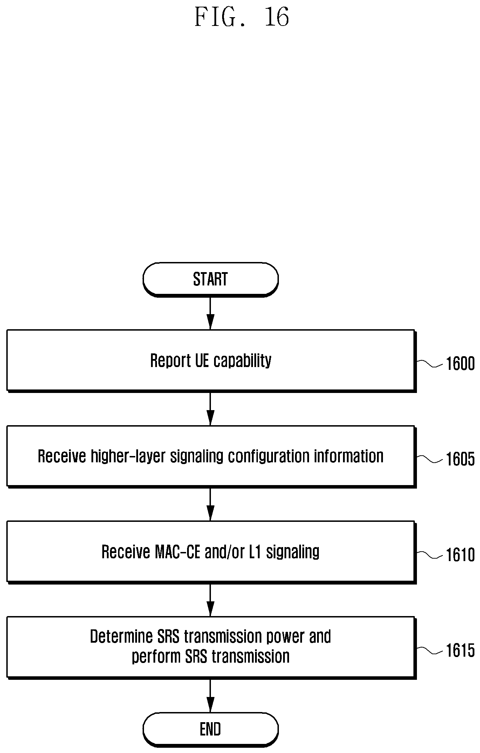

FIG. 16 is a diagram illustrating a UE operation when determining an SRS transmission power in consideration of multiple power control parameters in network cooperative communication according to an embodiment of the disclosure.

A UE may report 1600 a UE capability to a base station. The UE capability report may be a combination of at least one of UE capabilities described in the aforementioned embodiments. As an example, the UE capability reported by the UE may include a combination of at least one of UE capabilities related to whether [method 1-1] to [method 1-4] are supported, whether [method 1-3-1] to [method 1-3-3] are supported, whether [time resource operation 2-1], [time resource operation 2-2], [time resource operation 3-1], and [time resource operation 3-2] are supported, whether [Method 3-2-1] to [Method 3-2-3] are supported, and guard symbols between two adjacent SRS transmission occasions. Then, the UE may receive 1605 higher-layer signaling configuration information from the base station. The higher-layer signaling may be a combination of at least one piece of higher-layer signaling configuration information described in the aforementioned embodiments. As an example, the higher-layer signaling may be related to at least one of [method 1-1] to [method 1-4], [method 1-3-1] to [method 1-3-3], [time resource operation 2-1], [time resource operation 2-2], [time resource operation 3-1], and [time resource operation 3-2], [Method 3-2-1] to [Method 3-2-3], and guard symbols between two adjacent SRS transmission occasions. The UE may additionally receive 1610 MAC-CE and/or L1 signaling from the base station. As an example, MAC-CE and/or L1 signaling may be related to at least one of [method 1-1] to [method 1-4], [method 1-3-1] to [method 1-3-3], [time resource operation 2-1], [time resource operation 2-2], [time resource operation 3-1], and [time resource operation 3-2], [Method 3-2-1] to [Method 3-2-3], and guard symbols between two adjacent SRS transmission occasions. Then, the UE may perform SRS transmission 1615 by determining SRS transmission power for each SRS transmission occasion, based on indications from the base station, which are received via higher-layer signaling, MAC-CE, and/or L1 signaling described above.

Respective operations described in FIG. 16 may be performed in a modified order, with additional operations, or

**EP 4 626 089 A1**

with described operations omitted.

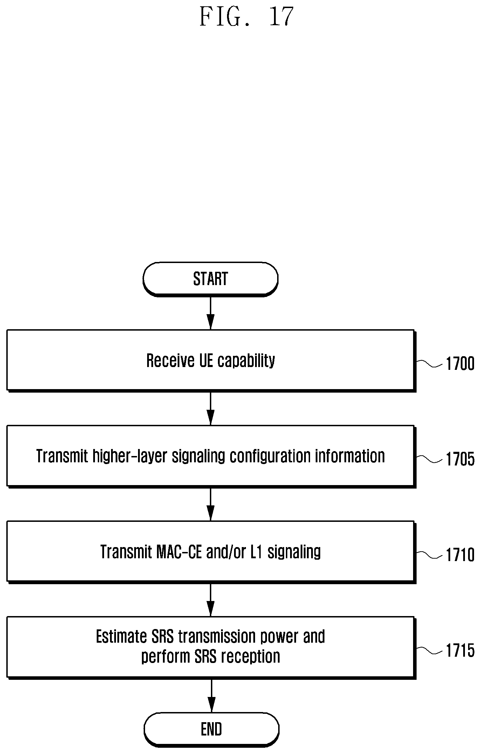

FIG. 17 is a diagram illustrating a base station operation when determining an SRS transmission power in consideration of multiple power control parameters in network cooperative communication according to an embodiment of the disclosure.

A base station may receive 1700 a UE capability from a UE. The UE capability report may be a combination of at least one of UE capabilities described in the aforementioned embodiments. As an example, the UE capability reported by the UE may include a combination of at least one of UE capabilities related to whether [method 1-1] to [method 1-4] are supported, whether [method 1-3-1] to [method 1-3-3] are supported, whether [time resource operation 2-1], [time resource operation 2-2], [time resource operation 3-1], and [time resource operation 3-2] are supported, whether [Method 3-2-1] to [Method 3-2-3] are supported, and guard symbols between two adjacent SRS transmission occasions. Then, the base station may transmit 1705 higher-layer signaling configuration information to the UE. The higher-layer signaling may be a combination of at least one piece of higher-layer signaling configuration information described in the aforementioned embodiments. As an example, the higher-layer signaling may be related to at least one of [method 1-1] to [method 1-4], [method 1-3-1] to [method 1-3-3], [time resource operation 2-1], [time resource operation 2-2], [time resource operation 3-1], and [time resource operation 3-2], [Method 3-2-1] to [Method 3-2-3], and guard symbols between two adjacent SRS transmission occasions. The base station may additionally transmit 1710 MAC-CE and/or L1 signaling to the UE. As an example, MAC-CE and/or L1 signaling may be related to at least one of [method 1-1] to [method 1-4], [method 1-3-1] to [method 1-3-3], [time resource operation 2-1], [time resource operation 2-2], [time resource operation 3-1], and [time resource operation 3-2], [Method 3-2-1] to [Method 3-2-3], and guard symbols between two adjacent SRS transmission occasions. Then, the base station may receive 1715 SRS transmission from the UE in some or all TRPs configured by the base station for each SRS transmission occasion, based on the aforementioned higher-layer signaling, MAC-CE, and/or L1 signaling transmitted to the UE.

Respective operations described in FIG. 17 may be performed in a modified order, with additional operations, or with described operations omitted.

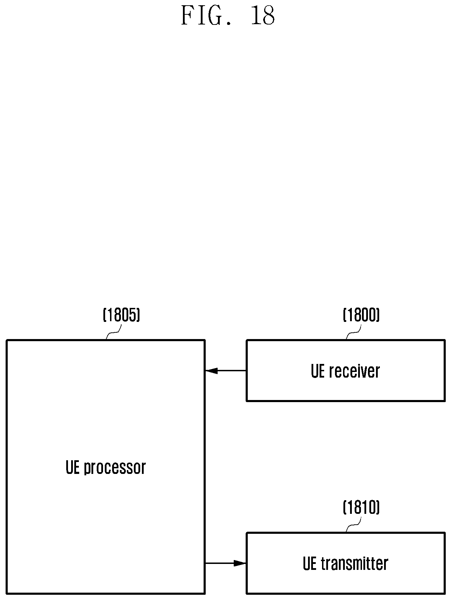

FIG. 18 illustrates a structure of a UE in a wireless communication system according to an embodiment of the disclosure.

Referring to FIG. 18, the UE may include a transceiver, which refers to a UE receiver 1800 and a UE transmitter 1810 as a whole, a memory (not illustrated), and a UE processor 1805 (or UE controller or processor). The UE transceiver 1800 and 1810, the memory, and the UE processor 1805 may operate according to the above-described communication methods of the UE. Components of the UE are not limited to the above-described example. For example, the UE may include a larger or smaller number of components than the above-described components.

Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control the components of the UE to receive SRS transmission power-related configuration information, determine SRS transmission power for each SRS transmission unit, and transmit an SRS. The processor may include multiple processors, and the processor may perform operations of controlling the components of the UE by executing programs stored in the memory.

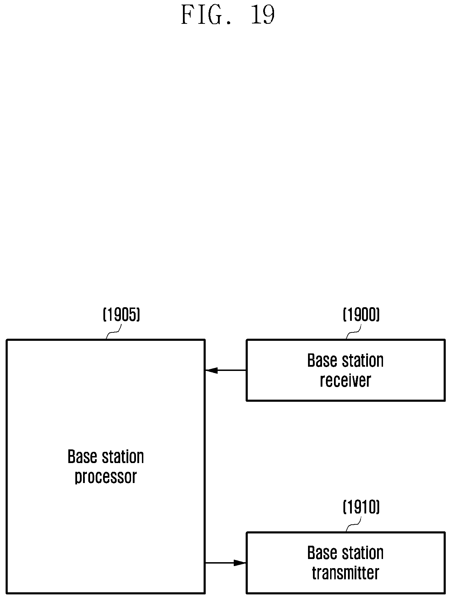

FIG. 19 illustrates a structure of a base station in a wireless communication system according to an embodiment of the disclosure.

Referring to FIG. 19, the base station may include a transceiver, which refers to a base station receiver 1900 and a base station transmitter 1910 as a whole, a memory (not illustrated), and a base station processor 1905 (or base station controller or processor). The base station transceiver 1900 and 1910, the memory, and the base station processor 1905 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data.

70

To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control the components of the base station to transmit SRS transmission power-related configuration information and receive an SRS for each SRS transmission unit. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving sounding reference signal (SRS) configuration information supporting eight antenna ports from a base station;
   determining SRS transmission power based on the configuration information; and
   transmitting SRSs by using the eight antenna ports, based on the SRS transmission power,
   wherein, in case that the SRSs of the eight antenna ports are transmitted in two consecutive symbols, the SRS transmission power is determined by dividing a value, which is obtained by converting calculated transmission power into a linear scale, by the number of antenna ports configured for each symbol.

2. The method of claim 1, wherein the SRS transmission power is determined by dividing the value, which is obtained by converting the calculated transmission power into a linear scale, by 8 in case that the SRSs of the eight antenna ports are transmitted in one symbol.

3. The method of claim 1, wherein a first antenna port set comprising four antenna ports is configured in a first symbol among the two consecutive symbols, and a second antenna port set comprising four antenna ports is configured in a second symbol.

4. The method of claim 3, wherein, in case that the configuration information indicates that the SRSs are transmitted in a multiple of 2 symbols, the first antenna port set is configured in odd-numbered symbols and the second antenna port set is configured in even-numbered symbols.

5. A method performed by a base station in a wireless communication system, the method comprising:

   transmitting sounding reference signal (SRS) configuration information supporting eight antenna ports to a terminal; and
   receiving SRSs by using the eight antenna ports from the terminal,
   wherein, in case that the SRSs of the eight antenna ports are transmitted in two consecutive symbols, SRS transmission power is determined by dividing a value, which is obtained by converting calculated transmission power into a linear scale, by the number of antenna ports configured for each symbol.

6. The method of claim 5, wherein the SRS transmission power is determined by dividing the value, which is obtained by converting the calculated transmission power into a linear scale, by 8 in case that the SRSs of the eight antenna ports are transmitted in one symbol.

7. The method of claim 5, wherein a first antenna port set comprising four antenna ports is configured in a first symbol among the two consecutive symbols, and a second antenna port set comprising four antenna ports is configured in a second symbol.

8. The method of claim 7, wherein, in case that the configuration information indicates that the SRSs are transmitted in a multiple of 2 symbols, the first antenna port set is configured in odd-numbered symbols and the second antenna port set is configured in even-numbered symbols.

9. A terminal of a wireless communication system, the terminal comprising:

   a transceiver; and
   a controller configured to perform control to:

   receive sounding reference signal (SRS) configuration information supporting eight antenna ports from a base station;
   determine SRS transmission power based on the configuration information; and
   transmit SRSs by using the eight antenna ports, based on the SRS transmission power,

wherein, in case that the SRSs of the eight antenna ports are transmitted in two consecutive symbols, the SRS transmission power is determined by dividing a value, which is obtained by converting calculated transmission power into a linear scale, by the number of antenna ports configured for each symbol.

10. The terminal of claim 9, wherein the SRS transmission power is determined by dividing the value, which is obtained by converting the calculated transmission power into a linear scale, by 8 in case that the SRSs of the eight antenna ports are transmitted in one symbol.

11. The terminal of claim 9, wherein a first antenna port set comprising four antenna ports is configured in a first symbol among the two consecutive symbols, and a second antenna port set comprising four antenna ports is configured in a second symbol.

12. The terminal of claim 11, wherein, in case that the configuration information indicates that the SRSs are transmitted in a multiple of 2 symbols, the first antenna port set is configured in odd-numbered symbols and the second antenna port set is configured in even-numbered symbols.

13. A base station of a wireless communication system, the base station comprising:

a transceiver; and
a controller configured to perform control to:

transmit sounding reference signal (SRS) configuration information supporting eight antenna ports to a terminal; and
receive SRSs by using the eight antenna ports from the terminal,
wherein, in case that the SRSs of the eight antenna ports are transmitted in two consecutive symbols, SRS transmission power is determined by dividing a value, which is obtained by converting calculated transmission power into a linear scale, by the number of antenna ports configured for each symbol.

14. The base station of claim 13, wherein the SRS transmission power is determined by dividing the value, which is obtained by converting the calculated transmission power into a linear scale, by 8 in case that the SRSs of the eight antenna ports are transmitted in one symbol.

15. The base station of claim 13, wherein, a first antenna port set comprising four antenna ports is configured in a first symbol among the two consecutive symbols, and a second antenna port set comprising four antenna ports is configured in a second symbol, and in case that the configuration information indicates that the SRSs are transmitted in a multiple of 2 symbols, the first antenna port set is configured in odd-numbered symbols and the second antenna port set is configured in even-numbered symbols.

# FIG. 1

One subframe

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

FIG. 2

FIG. 3

BWP#1
(301)

BWP#2
(302)

UE bandwidh (300)

Frequency

# FIG. 4

duration (404)

Frequency resources (403)

UE bandwidth part (410)

Slot (420)

Frequency

Time

Control resource set#1 (401)

Control resource set#2 (402)

EP 4 626 089 A1

FIG. 5

FIG. 6

EP 4 626 089 A1

TCI state #0
(600)

TCI state #1
(605)

TCI state #2
(610)

FIG. 7

EP 4 626 089 A1

| | |
|---|---|
| RA type 0 [700] | Bitmap (715) |

| | |
|---|---|
| RA type 1 [705] | Starting VRB (720) | Length (725) |

| | |
|---|---|
| Both RA type 0 & 1 [710] | 1 bit for RA type indication (730) | Maxpayload for RA type 0, payload for RA type 1 (735) |

FIG. 8

$$\text{Slot} \left\lfloor n \cdot \frac{2^{\mu_{PDSCH}}}{2^{\mu_{PDCCH}}} \right\rfloor + K_0$$

# FIG. 9

(900)

$\mu_{PDCCH} = 1$

PDCCH

Slot $n$    Slot $n + 1$    . . .    $t$

PDSCH

$\mu_{PDCCH} = 1$    . . .    Slot $n + K_0$    $t$

(905)

$\mu_{PDCCH} = 1$

PDCCH

Slot $n$    Slot $n + 1$    . . .    $t$

PDSCH

$\mu_{PDCCH} = 2$    $t$

$\text{Slot} \left\lfloor n \cdot \dfrac{2^{\mu_{PDSCH}}}{2^{\mu_{PDCCH}}} \right\rfloor$    . . .    $\text{Slot} \left\lfloor n \cdot \dfrac{2^{\mu_{PDSCH}}}{2^{\mu_{PDCCH}}} \right\rfloor + K_0$

EP 4 626 089 A1

FIG. 10

| | |
|---|---|
| frequency → | UE 1 (1000) |

b=0 | 40 RBs $n_0 = 0$

b=1 | 20 RBs $n_1 = 0$ | 20 RBs $n_1 = 1$

b=2 | 4 RBs $n_2 = 0$ | 4 RBs $n_2 = 1$ | 4 RBs $n_2 = 2$ | 4 RBs $n_2 = 3$ | 4 RBs $n_2 = 4$ | 4 RBs $n_2 = 0$ | 4 RBs $n_2 = 1$ | 4 RBs $n_2 = 2$ | 4 RBs $n_2 = 3$ | 4 RBs $n_2 = 4$

UE 2 (1001)     UE 3 (1002)

# FIG. 11

START

Report UE capability ～1100

Receive higher-layer signaling configuration information ～1105

Receive MAC-CE and/or L1 signaling ～1110

Transmit SRS ～1115

END

FIG. 12

START

Receive UE capability ⁓1200

Transmit higher-layer signaling configuration information ⁓1205

Transmit MAC-CE and/or L1 signaling ⁓1210

Receive SRS ⁓1215

END

# FIG. 13

[1310]

RX power from TRP1
(UE2 TX power
with PLRS from TRP1)

[1311] [1312] [1313] [1314]

UE1 UE2 UE3

[1315]

RX power from TRP2
(UE2 TX power
with PLRS from TRP1)

[1316] [1318] [1319]
[1317]

UE1 UE2 UE3

[1320]

RX power from TRP1
(UE2 TX power
with PLRS from TRP2)

[1321] [1322] [1323] [1324]

UE1 UE2 UE3

[1325]

RX power from TRP2
(UE2 TX power
with PLRS from TRP2)

[1326] [1328] [1329]
[1327]

UE1 UE2 UE3

TRP1 ～ [1300]

TRP2 ～ [1301]

UE1 ～ [1302]

UE2 ～ [1303]

UE3 ～ [1304]

EP 4 626 089 A1

# FIG. 14

[1410]

RX power from TRP1
(UE2 TX power
with PLRS from TRP1)

[1411] [1415] [1412]

[1413] [1414]

UE2
(Legacy)

UE2
(NEW)

[1420]

RX power from TRP2
(UE2 TX power
with PLRS from TRP1)

[1421] [1423] [1425] [1422]

[1424]

UE2
(Legacy)

UE2
(NEW)

[1430]

RX power from TRP1
(UE2 TX power
with PLRS from TRP2)

[1431] [1435] [1432]

[1433] [1434]

UE2
(Legacy)

UE2
(NEW)

[1440]

RX power from TRP2
(UE2 TX power
with PLRS from TRP2)

[1441] [1443] [1445] [1442]

[1444]

UE2
(Legacy)

UE2
(NEW)

TRP1 ～ [1400]

TRP2 ～ [1401]

UE2 ～ [1402]

FIG. 15

[1500] TRP1
[1502] UE2
[1501] TRP2

[1520]
[1521] [1522] [1523] [1524]

[1510] SRS transmission occasion#1
[1511] SRS transmission occasion#2
[1512] SRS transmission occasion#3
[1513] SRS transmission occasion#4

[1530]
[1531] [1532] [1533] [1534]

# FIG. 16

```
                          ┌─────────────┐
                          │    START    │
                          └─────────────┘
                                 │
                                 ▼
        ┌──────────────────────────────────────────────┐
        │            Report UE capability              │ ～1600
        └──────────────────────────────────────────────┘
                                 │
                                 ▼
        ┌──────────────────────────────────────────────┐
        │ Receive higher-layer signaling configuration information │ ～1605
        └──────────────────────────────────────────────┘
                                 │
                                 ▼
        ┌──────────────────────────────────────────────┐
        │        Receive MAC-CE and/or L1 signaling     │ ～1610
        └──────────────────────────────────────────────┘
                                 │
                                 ▼
        ┌──────────────────────────────────────────────┐
        │       Determine SRS transmission power and    │ ～1615
        │           perform SRS transmission            │
        └──────────────────────────────────────────────┘
                                 │
                                 ▼
                          ┌─────────────┐
                          │     END     │
                          └─────────────┘
```

# FIG. 17

```
                    ┌─────────────┐
                    │    START    │
                    └─────────────┘
                           │
                           ▼
        ┌──────────────────────────────────────┐
        │         Receive UE capability        │~1700
        └──────────────────────────────────────┘
                           │
                           ▼
        ┌──────────────────────────────────────┐
        │ Transmit higher-layer signaling      │~1705
        │ configuration information            │
        └──────────────────────────────────────┘
                           │
                           ▼
        ┌──────────────────────────────────────┐
        │    Transmit MAC-CE and/or L1         │~1710
        │          signaling                   │
        └──────────────────────────────────────┘
                           │
                           ▼
        ┌──────────────────────────────────────┐
        │  Estimate SRS transmission power and │~1715
        │        perform SRS reception         │
        └──────────────────────────────────────┘
                           │
                           ▼
                    ┌─────────────┐
                    │     END     │
                    └─────────────┘
```

FIG. 18

FIG. 19

(1905)

(1900)

Base station
processor

Base station
receiver

(1910)

Base station
transmitter

## INTERNATIONAL SEARCH REPORT

| International application No. |
| --- |
| **PCT/KR2023/021890** |

| A. | CLASSIFICATION OF SUBJECT MATTER |
| --- | --- |

**H04W 52/14**(2009.01)i; **H04W 52/32**(2009.01)i; **H04W 72/23**(2023.01)i; **H04W 72/21**(2023.01)i; **H04W 52/24**(2009.01)i; **H04L 5/00**(2006.01)i; **H04B 7/024**(2017.01)i; **H04W 52/42**(2009.01)i; **H04W 52/54**(2009.01)i

According to International Patent Classification (IPC) or to both national classification and IPC

| B. | FIELDS SEARCHED |
| --- | --- |

Minimum documentation searched (classification system followed by classification symbols)

H04W 52/14(2009.01); H04B 7/0404(2017.01); H04B 7/06(2006.01); H04L 25/02(2006.01); H04L 5/00(2006.01); H04W 52/08(2009.01); H04W 52/32(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 8개 안테나 포트(eight antenna port), SRS 설정 정보(SRS configuration information), SRS 전송 전력(SRS transmission power), 선형 스케일(linear scale)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2019-0039398 A (LG ELECTRONICS INC.) 11 April 2019 (2019-04-11) See paragraphs [0479]-[0493]; claim 1; and figure 13. | 1-15 |
| A | KR 10-2022-0093265 A (SAMSUNG ELECTRONICS CO., LTD.) 05 July 2022 (2022-07-05) See paragraphs [0124]-[0138]; and figure 11. | 1-15 |
| A | KR 10-2022-0163981 A (LG ELECTRONICS INC.) 12 December 2022 (2022-12-12) See paragraphs [0198]-[0218]; and figure 10. | 1-15 |
| A | US 2020-0383062 A1 (INTEL CORPORATION) 03 December 2020 (2020-12-03) See paragraphs [0106]-[0108]; and figures 1-3. | 1-15 |
| A | US 2019-0268852 A1 (SAMSUNG ELECTRONICS CO., LTD.) 29 August 2019 (2019-08-29) See claims 16-19. | 1-15 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 April 2024** | **04 April 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2023/021890** | | |
|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2019-0039398 | A | 11 April 2019 | AU | 2018-263238 | A1 | 16 May 2019 |
| | | | | AU | 2018-263238 | B2 | 28 January 2021 |
| | | | | BR | 112019015603 | A2 | 17 March 2020 |
| | | | | CN | 110710281 | A | 17 January 2020 |
| | | | | CN | 110710281 | B | 14 June 2022 |
| | | | | EP | 3481113 | A1 | 08 May 2019 |
| | | | | EP | 3481113 | B1 | 13 October 2021 |
| | | | | EP | 3930389 | A1 | 29 December 2021 |
| | | | | EP | 3930389 | B1 | 27 December 2023 |
| | | | | JP | 2020-510383 | A | 02 April 2020 |
| | | | | JP | 2022-009455 | A | 14 January 2022 |
| | | | | JP | 6968914 | B2 | 17 November 2021 |
| | | | | JP | 7324259 | B2 | 09 August 2023 |
| | | | | KR | 10-2021-0049960 | A | 06 May 2021 |
| | | | | KR | 10-2453541 | B1 | 11 October 2022 |
| | | | | RU | 2019139249 | A | 04 June 2021 |
| | | | | RU | 2019139249 | A3 | 02 August 2021 |
| | | | | RU | 2762242 | C2 | 16 December 2021 |
| | | | | SG | 11201903386 | A | 30 May 2019 |
| | | | | US | 10439847 | B2 | 08 October 2019 |
| | | | | US | 10708088 | B2 | 07 July 2020 |
| | | | | US | 11063788 | B2 | 13 July 2021 |
| | | | | US | 11160029 | B2 | 26 October 2021 |
| | | | | US | 11336488 | B2 | 17 May 2022 |
| | | | | US | 11595909 | B2 | 28 February 2023 |
| | | | | US | 11799695 | B2 | 24 October 2023 |
| | | | | US | 2019-0190747 | A1 | 20 June 2019 |
| | | | | US | 2019-0199554 | A1 | 27 June 2019 |
| | | | | US | 2019-0372806 | A1 | 05 December 2019 |
| | | | | US | 2020-0287753 | A1 | 10 September 2020 |
| | | | | US | 2020-0383060 | A1 | 03 December 2020 |
| | | | | US | 2021-0297956 | A1 | 23 September 2021 |
| | | | | US | 2022-0191065 | A1 | 16 June 2022 |
| | | | | WO | 2018-128409 | A1 | 12 July 2018 |
| | | | | WO | 2018-203728 | A1 | 08 November 2018 |
| KR | 10-2022-0093265 | A | 05 July 2022 | CN | 110547001 | A | 06 December 2019 |
| | | | | CN | 110547001 | B | 18 April 2023 |
| | | | | CN | 116489756 | A | 25 July 2023 |
| | | | | EP | 3603228 | A1 | 05 February 2020 |
| | | | | KR | 10-2019-0133284 | A | 02 December 2019 |
| | | | | KR | 10-2413488 | B1 | 27 June 2022 |
| | | | | US | 10548096 | B2 | 28 January 2020 |
| | | | | US | 11317357 | B2 | 26 April 2022 |
| | | | | US | 2018-0310257 | A1 | 25 October 2018 |
| | | | | US | 2020-0137695 | A1 | 30 April 2020 |
| | | | | US | 2022-0217651 | A1 | 07 July 2022 |
| | | | | WO | 2018-194436 | A1 | 25 October 2018 |
| KR | 10-2022-0163981 | A | 12 December 2022 | EP | 4132124 | A1 | 08 February 2023 |
| | | | | US | 2023-0156608 | A1 | 18 May 2023 |
| | | | | WO | 2021-201658 | A1 | 07 October 2021 |

Form PCT/ISA/210 (patent family annex) (July 2022)

**INTERNATIONAL SEARCH REPORT**
Information on patent family members

International application No.

**PCT/KR2023/021890**

| Patent document cited in search report | | | Publication date (day/month/year) | Patent family member(s) | | | Publication date (day/month/year) |
|---|---|---|---|---|---|---|---|
| US | 2020-0383062 | A1 | 03 December 2020 | US | 11690020 | B2 | 27 June 2023 |
| US | 2019-0268852 | A1 | 29 August 2019 | CN | 110140387 | A | 16 August 2019 |
| | | | | CN | 110140387 | B | 06 July 2021 |
| | | | | EP | 3522617 | A1 | 07 August 2019 |
| | | | | KR | 10-2018-0049781 | A | 11 May 2018 |
| | | | | KR | 10-2019-0067834 | A | 17 June 2019 |
| | | | | KR | 10-2341470 | B1 | 22 December 2021 |
| | | | | US | 10736044 | B2 | 04 August 2020 |
| | | | | US | 11234196 | B2 | 25 January 2022 |
| | | | | US | 2020-0367173 | A1 | 19 November 2020 |
| | | | | WO | 2018-084626 | A1 | 11 May 2018 |

Form PCT/ISA/210 (patent family annex) (July 2022)